Europäisches Patentamt

(19) European Patent Office

Office européen des brevets

(11) Veröffentlichungsnummer: **0 026 862**
**B1**

# (12) EUROPÄISCHE PATENTSCHRIFT

(45) Veröffentlichungstag der Patentschrift:
03.09.86

(21) Anmeldenummer: 80105596.3

(22) Anmeldetag: 18.09.80

(51) Int. Cl.⁴: **F 24 J 2/24, E 04 D 13/18**

(54) Vorrichtung zur Gewinnung von Heizwärme.

(30) Priorität: 09.10.79 DE 2940896
15.01.80 DE 3001249
28.03.80 DE 3012111

(43) Veröffentlichungstag der Anmeldung:
15.04.81 Patentblatt 81/15

(45) Bekanntmachung des Hinweises auf die Patenterteilung:
03.09.86 Patentblatt 86/36

(84) Benannte Vertragsstaaten:
AT BE CH FR GB IT LI NL

(56) Entgegenhaltungen:
DE-A-2 531 907
DE-A-2 640 333
DE-A-2 725 976
DE-A-2 802 682
DE-A-2 826 832
FR-A-1 041 670
FR-A-2 079 687
FR-A-2 302 489
FR-A-2 349 702
FR-A-2 398 985
GB-A-2 031 141

(73) Patentinhaber: **Ludowici, Michael Christian, Josef Wiesbergerstrasse 5-7, D-8013 Haar bei München (DE)**

(72) Erfinder: **Ludowici, Michael Christian, Josef Wiesbergerstrasse 5-7, D-8013 Haar bei München (DE)**

(74) Vertreter: **Patentanwälte Dipl.- Ing. A. Grünecker, Dr.- Ing. H. Kinkeldey, Dr.- Ing. W. Stockmair,, Dr. rer. nat. K. Schumann, Dipl.- Ing. P. Jakob, Dr. rer. nat. G. Bezold Maximilianstrasse 58, D-8000 München 22 (DE)**

**Beschreibung**

Die Erfindung bezieht sich auf eine Vorrichtung zur Gewinnung von Heizwärme aus Umweltenergie mit Hilfe eines schuppenartig angeordneten Dachdeckungselemente aufweisenden Daches, in dem ein Leitungssystem für ein die Umweltenergie aufnehmendes Fluid verlegt ist, wobei wenigstens ein Teil des Daches Lagen von Trägerplatten und als Abdeckplatten ausgebildete Dachdeckungselemente aufweist, wobei auf der Oberseite der Trägerplatten das Leitungssystem aufgebracht ist und die Abdeckplatten nach Dachziegelart miteinander und mit den benachbarten normalen Dachdeckungselementen verlegt sind.

Aus der FR-A- 23 49 702 ist eine Vorrichtung der eben genannten Art bekannt. Die Dachdeckungselemente umfassen jeweils eine Trägerplatte und eine diese allseits übergreifende Abdeckplatte. In einem Hohlraum zwischen diesen beiden Platten ist als Leitungssystem ein flacher Behälter angeordnet, der an seiner der Trägerplatte zugewandten Unterseite Anschlüsse aufweist, die durch die Trägerplatte hindurchgeführt sind und dazu dienen, den Anschluß an das Leitungssystem benachbarter Dachdeckungselemente herzustellen.

Es ist vorgesehen, die Trägerplatte aus einem Isolierwerkstoff und die Abdeckplatte aus einem transparenten Material zu schaffen. Das Leitungssystem soll für die Wärmegewinnung als schwarzer Körper dienen.

Bei der bekannten Vorrichtung stellen die Dachdeckungselemente jeweils eine in sich geschlossene Einheit dar. Sie werden jeweils in ihrer je eine Abdeckplatte, ein Leitungssystem und eine Trägerplatte umfassenden Gesamtheit verlegt. Dies bedingt einen großen Aufwand, da es notwendig ist jeweils das Leitungssystem der Dachdeckungselemente miteinander zu verbinden. Die Verbindung kann lediglich an der Dachrückseite erfolgen, die nicht immer im gewünschten Maße zugänglich ist. Auch eine Reparatur der Anschlüsse ist nur von rückwärts möglich. Dies bedeutet, daß für die Reparatur der gesamte Dachunterbau, wie Dampfsperrschichten, Unterspannbahnen, Isoliermatten usw. zu entfernen ist.

Auch das gesonderte Auswechseln eines einzelnen Dachdeckungselementes ist nur möglich, wenn das entsprechende Element von der Dachunterseite her freigelegt ist.

Die bekannten Dachdeckungselemente sind aber auch bei der Herstellung kompliziert. Um den Hohlraum für das Leitungssystem zwischen den beiden Platten zu gewährleisten muß sowohl die Träger- als auch die Abdeckplatte jeweils so bruchfest gehalten sein, daß nur jeweils die gegenseitige Abstützung der beiden Platten im Randbereich für die Erhaltung des Hohlraumes ausreicht.

Aus der DE-A- 23 09 307 ist eine ähnliche Vorrichtung der eben genannten Art bekannt, bei der handelsübliche Dachziegel Verwendung finden. Die Ziegel sind wie bei einem normalen Dach schuppenartig einander überlappend auf Dachlatten angeordnet. In den dadurch entstehenden Zwischenräumen zwischen den Dachziegeln einerseits ist das Dachleitungssystem verlegt, um die aus der Umwelt eingetragene Energie durch ein durch das Leitungssystem fließendes Fluid aufnehmen und für die Beheizung eines Hauses ausnutzen zu können. Bei der bekannten Vorrichtung möchte man u.a. die Stauwärme verwenden, die unterhalb der Dachziegel und oberhalb des Dachaufbaues, also der Dachlatten, Dachsparren oder einer eventuellen Dämmschicht entsteht.

Es sind mehrere Verfahren bekannt, um Umweltenergie nutzbar zu machen. Beim Kollektorsystem wird ein Fluid durch Sonnenkollektoren geleitet, wo die von der Sonne abgegebene Energie direkt in Wärmeenergie umgewandelt wird. Das Fluid gibt an geeigneter Stelle seine Warme z.B. an einen Warmwasserboiler ab und wird zum Erwärmen wiederum in die Sonnenkollektoren zurückgeleitet.

Bei einem als Wärmepumpe bekannten Verfahren wird künstlich ein Temperaturgefälle erzeugt und die so der Umwelt entzogene Wärme auf ein höheres Niveau "hochgepumpt".

Weiterhin existiert noch das Photo-Elektrische-Prinzip, bei welchem mit Hilfe von Solarzellen optische Energie direkt in elektrische Energie verwandelt wird, die als solche zur Verfügung steht.

Die aus der DE-A- 23 09 307 bekannte Vorrichtung ist für das Kollektorsystem eingerichtet. Das Leitungssystem enthält hierfür vorzugsweise ein einziges, auf der Dachfläche mäanderartig verlegtes Leitungsrohr, das an einen Warmwasserspeicher angeschlossen ist.

Die bekannte Vorrichtung ist nicht wirtschaftlich. Sie kann erst eine Mindestmenge an nutzbarer Energie liefern, sofern das Leitungssystem sich über ein sehr großes Dach erstreckt. Der Wärmeübergang auf das Leitungssystem ist nämlich schlecht, da die Leitung in den von Luft gefüllten Freiräumen zwischen den Dachziegeln und dem Dachaufbau angeordnet sind und die Leitungen erst dann Wärme aufnehmen können, sofern der Freiraum bereits durch die Ziegel hindurch aufgewärmt ist.

Aus der DE-A- 27 29 313 ist darüber hinaus eine Solardachpfanne bekannt, die sowohl für das Sonnenkollektorsystem als auch für das Wärmepumpenverfahren eingesetzt werden kann. Die Solardachpfanne ist, ebenso wie das Kollektorsystem gemäß der DE-A- 23 09 307 so konzipiert, daß derartig ausgerüstete Dächer von außen genauso aussehen, wie normale Dächer die nicht zur Wärmegewinnung herangezogen werden. Bei der zuerst genannten Vorrichtung geschieht dies dadurch, daß das Leitungssystem unterhalb der normalen Ziegel verlegt wird. Bei der aus der DE-A- 27 29 313 bekannten Solardachpfanne soll eine Veränderung des äußeren Bildes dadurch vermieden werden, indem die Solardachpfanne an ihrer Oberseite das gleiche Aussehen besitzt, wie eine normale Dachpfanne, die nicht zur Wärmegewinnung herangezogen wird.

Die bekannte Solardachpfanne gliedert sich in drei Teile, nämlich eine Oberschale, einen Kollektor und eine Unterschale. Die Oberschale kann durchsichtig hergestellt sein. Der Kollektor besteht vorwiegend aus einem sich der Gestalt von Ober- und Unterschale anpassenden Blech, das mit einer Leitung für ein Kollektorfluid verbunden ist. Alle drei Teile sind zu einer festen Einheit zusammenmontiert. Durch Aneinanderfügen mehrerer derartiger Solardachpfannen soll eine Kollektorfläche entstehen, mit Hilfe welcher das eingangs beschriebene Kollektorverfahren durchgeführt werden soll.

Die Solardachpfanne ist wegen ihrer Dreiteiligkeit kompliziert aufgebaut und bereits in der Herstellung teuer. Um die Solardachpfanne auch trittfest zu machen, müssen die Ober- und Untetschalen eine Mindestscherbenstärke aufweisen die die Solardachpfanne insgesamt stärker macht, als eine normale Dachpfanne. Die Solardachpfannen werden sich deshalb nur mit Schwierigkeiten mit den umgehenden normalen nachziegeln verlegen lassen.

Auch die Solardachpfanne arbeitet unwirtschaflich, da sie nur einen relativ kleinen Leitungsquerschnitt besitzt. Bei einen eventuell notwendigen Reparatur des Kollektors ist dieser nicht zugänglich. Es muß deshalb die ganze Solardachpfanne ausgetauscht werden.

Der vorligenden Erfindung liegt die Aufgabe zugrunde, eine wirtschaftlich arbeitende Vorrichtung der eingangs genannten Art zu schaffen, die in jedes mit Dachdeckungselementen versehene Dach auch leicht und nachträglich eingebaut werden kann.

Diese Aufgabe wird erfindungsgemäß dadurch gelöst die Trägerplatten dachziegelartig verlegt sind und so mit eine obere Lage von Abdeck- und eine untere Lage von Trägerplatten vorhanden ist, die jeweils eine getrennte voneinander unabhängige Schicht bilden.

Die erfindungsgemäße Vorrichtung ist einfach aufgebaut und arbeitet wirtschaftlich. Sie kann sowohl bei neu zu erstellenden Dächern als auch bei bereits bestehenden Dächern eingebaut werden. Eine Lage besteht aus Trägerplatten, die auf dem üblichen Dachaufbau nach Dachziegelart aufgebracht werden. Die Trägerplatten können sich wie normale Dachziegel nicht nur in Sparrenrichtung überlappen, sondern auch in Richtung der Dachlatten. Die Trägerplatten bilden deshalb im verlegten Zustand für sich eine eigene Schicht auf die das Leitungssystem aufgebracht wird.

Um genügend Platz für die Verlegung der beiden Lagen von Träger- und Abdeckplatten zu erreichen, können entweder die Sparren im Bereich des betreffenden Dachteils ausgeklinkt und die Dachlatten tiefer angeordnet werden oder es besteht auch die Möglichkeit, die Dachlatten für die übrigen, normalen Dachdeckungselemente höher zu legen, z.B. durch Einfügen von Klötzen zwischen den Dachsparren und den Dachlatten.

Zwischen der Lage von Trägerplatten und der Lage von Abdeckplatten ist genügend Raum zur Verfügung, um ein ausreichend großes und leistungsfähiges Leitungssystem unterzubringen. Die Lage der Abdeckplatten bildet eine Schicht, die das Leitungssystem und die Trägerplatten von oben abdeckt. Sie bildet eine ebenso dichte Dachhaut, wie sie von den benachbarten normalen Dachdeckungselementen gewährleistet ist. An den Rändern des mit den Abdeckplatten versehenen Dachteiles ist der Anschluß zu den benachbarten normalen Dachdeckungselementen genauso gegeben, wie bei diesen.

Das äußere Aussehen eines mit der erfindungsgemäßen Vorrichtung ausgestatteten Daches unterscheidet sich durch nichts von demjenigen eines normalen Daches. Die Abdeckplatten besitzen die gleiche Kontur wie normale Dachdeckungselemente.

Die bei der erfindungsgemäßen Vorrichtung vorhandenen Träger- und Abdeckplatten können, ebenso wie die Dachdeckungselemente, aus Beton, keramischen Massen, Polybeton oder ähnlichen Werkstoffen bestehen. Beide sind aber vornehmlich aus Ton gefertigt.

Das zwischen den beiden Lagen eingefügte Leitungssystem ist für Wartungs- und Reparaturarbeiten leicht zugänglich. Es reicht, die Abdeckplatten an den vorgesehenen Stellen abzunehmen, um einen direkten Zugriff zu dem Leitungssystem zu haben. Die Aufbaudicke der beiden Lagen und des dazwischen befindlichen Leitungssystems ist niedrig gehalten, um einerseits hohe Aufbauten zu vermeiden, die erfahrungsgemäß erhebliche Anschlußschwierigkeiten mit sich bringen, und andererseits um bei einem nachträglichen Einbau in das Dach die Tragwerkkonstruktion möglichst wenig zu schwächen, so daß diese nicht durch zusätzliche Absicherungs- oder Stützmaßnahmen unterfangen werden muß.

Die erfindungsgemäße Vorrichtung ist so ausgelegt, daß sie auch nachträglich bei z.B. aus denkmalspflegerischen Gründen geschützten Dächern eingebaut werden kann, ohne daß sich die Außenansicht des Daches verändern würde.

Die einzelnen Bestandteile der erfindungsgemäßen Vorrichtung sind so einfach zu verlegen, daß die Verlegearbeiten von jedem geübten Dachdecker bzw. Bauhandwerker ohne besondere Anweisungen vorgenommen werden können.

Die Abdeck- und Trägerplatten sind dazu geeignet, genauso wie die übrigen, normalen Dachdeckungselemente hergestellt zu werden. Dies bedeutet, daß hierzu die gleichen Maschinen und maschinellen Einrichtungen angewandt werden können und sich die Herstellungskosten für die Platten wegen der möglichen Benutzung moderner vollautomatischer Produktionsanlagen im wesentlichen in den gleichen Grenzen bewegen, wie diejenigen der normalen Dachdeckungselemente.

Im Hinblick auf die Montage und Reparatur ist es vorteilhaft, wenn das Leitungssystem als wenigstens die Fläche mehrerer Trägerplatten übergreifende, insgesamt verlegbare Einheit gebildet ist. Das Leitungssystem kann dann bei bereits verlegten Trägerplatten als Ganzes auf diese aufgebracht werden, worauf dann die obere Lage der Abdeckplatten aufgelegt werden kann.

Um bei der erfindungsgemäßen Vorrichtung eine hohe Energieaufnahme zu erzielen, ist es vorteilhaft, wenn das Leitungssystem mehrere, in oder quer zur Sparrenrichtung parallel zueinander verlaufende Rohre aufweist, die an ihren Enden an je einem Sammelrohr angeschlossen sind. Beide Anordnungen in oder quer zur Sparrenrichtung eignen sich für das Kollektor- und Absorberverfahren. Da die Träger- und Abdeckplatten für sich jeweils eine eigene Schicht, nämlich die untere und obere Lage bilden, ist es möglich, zwischen den Schichten eine Vielzahl von parallel zueinander verlaufenden Rohren unterzubringen und damit für das Fluid ein großes Leitungsvolumen zur Verfügung zu stellen.

Statt der Rohre kann das Leitungssystem auch Behälter aufweisen, von denen je einer einer Trägerplatte zugewiesen ist. Auch Röhren, Schläuche, sowie Gefäße anderer Art können eingesetzt werden.

Um die Bauhöhe der erfindungsgemäßen Vorrichtung geringer zu machen, ist es günstig, wenn jede Abdeckplatte an ihrer Rückseite nach unten offene Aussparungen für das Leitungssystem aufweist. Die Aussparungen können so geformt sein, daß sie das Leitungssystem mehr oder weniger formschlüssig übergreifen. Dadurch wird nicht nur die Bauhöhe verringert, sondern auch ein inniger Kontakt zwischen dem Leitungssystem und der Abdeckplatten erzielt. Der Wärmeübergang wird verbessert.

Im Hinblick auf eine weitere Bauhöhenverringerung ist es auch günstig, wenn jede Trägerplatte nach oben offene Aussparungen für das Leitungssystem aufweist.

Die Aussparungen bei den Träger- und Abdeckplatten ermöglichen auch eine gute Verankerung des Leitungssystems an den Platten.

Bei Ausrichtung des Leitungssystems quer zur Sparrenrichtung, also in Dachlattenrichtung, ist es möglich, eventuell sonst vorhandene Stufen für das Leitungssystem zu vermeiden. Die Aussparungen können so ausgestaltet und angeordnet werden, daß einander entsprechende Aussparungen benachbarter Platten miteinander fluchten und ineinander niveaugleich und knickfrei übergehen. Dies bedeutet, daß die einzelnen, wie auch immer ausgebildeten Leitungen des Leitungssystems jeweils geradlinig verlaufen und einer Höhenlinie des Daches folgen können. Es ist deshalb ohne weiteres möglich, als Leitungen ohne Anpassung auch unflexible Metallrohre zu verwenden.

Die Sammelleitungen des Leitungssystems können in Sparrenrichtung verlaufen. Das Leitungssystem kann insgesamt als Einheit vorgefertigt und dann auf die untere Lage der Trägerplatten aufgebracht werden.

Um die Träger- und Abdeckplatten leicht verlegen zu können ist es vorteilhaft, wenn die obere Lage von Abdeckplatten so auf der unteren Lage von Trägerplatten angeordnet ist, daß jeweils eine Abdeckplatte einer Trägerplatte zugeordnet ist. Beim Verlegen braucht dann lediglich noch darauf geachtet zu werden, daß die Platten sich in der richtigen Zuordnung befinden.

Bei einer vorteilhaften Weiterbildung der Erfindung ist vorgesehen, daß die Abdeckplatten im verlegten Zustand sich im wesentlichen über die Aussparungen flankierender Stege auf den Trägerplatten abstützen. Mit den Stegen werden Kammern für das Leitungssystem gebildet. Sie erfüllen damit mehrere Funktionen gleichzeitig. Die eventuell gewölbeartig ausgeführten Kammern versteifen die Platten und bieten die Möglichkeit zur Minimierung der Scherbenstärke derselben. Sie erhöhen die Trittfestigkeit. Gleichzeitig verbessern sie auch die Wärmeübertragung auf das Leitungssystem. Zu guter Letzt ermöglichen sie noch die Abstützung der Abdeckplatten auf den Trägerplatten, wodurch eine gegenseitige Verankerung der beiden Platten zueinander erreicht wird. Die Stege können auch so ausgeführt werden, daß entweder nur einige derselben sich auf den Trägerplatten abstützen oder jeder Steg nur mit einem Teil trägt.

Um die Verlegung der Abdeckplatten mit den übrigen, normalen Dachdeckungselementen zu ermöglichen, besteht eine vorteilhafte Weiterbildung darin, daß jede Abdeckplatte die gleiche Verfalzung aufweist, wie ein normales Dachdeckungselement. Die Abdeckplatten lassen sich auf diese Weise in der gleichen Art verlegen, wie normale Dachdeckungselemente. Dies bedeutet, daß die Dachhaut auch im Bereich der erfindungsgemäßen Vorrichtung genauso dicht ist, wie bei den mit den normalen Dachdeckungselementen eingedeckten Dachteilen.

Für die Wärmeübertragung ist es von Vorteil, wenn der zwischen den Abdeck- und Trägerplatten vorhandene Hohlraum für das Leitungssystem zu einem größeren Teil von Aussparungen der Abdeckplatten gebildet ist.

Zur Verbesserung des Wärmeüberganges kann auch in den verbleibenden Leerraum zwischen dem Leitungssystem und dem Hohlraum ein wärmeleitendes, vornehmlich elastisches Material eingefügt werden, z.B. Metallpulver.

Um eine solide Abstützung der Abdeckplatten auf den Trägerplatten zu erreichen, kann bei einer Weiterbildung der Erfindung vorgesehen werden, daß die die Aussparungen flankierenden Stege der Trägerplatten breiter sind als die Stege der Abdeckplatten.

Ein einfaches Verlegen der Trägerplatten ist dann gegeben, wenn dieselben einander ziegelartig überlappend angeordnet sind. Die Trägerplatten können dann genauso wie normale Dachdeckungselemente verlegt werden. Ihre gegenseitige Zuordnung kann durch eine Verfalzung erfolgen. Hierzu ist es auch vorteilhaft, wenn die Auflagefläche des kopfseitigen Endes der Abdeckplatten eben ausgebildet ist, ebenso wie die Oberseite des fußseitigen Endes der Trägerplatten, sowie die Unterseite des fußseitigen Endes und das kopfseitige Ende derselben.

Zum Anbringen von Sturmklammern bzw. zum Durchführen von Aufhängenasen kann bei einer günstigen Weiterbildung der Erfindung das fußseitige Ende der Trägerplatten Ausklinkungen aufweisen.

Für die Verankerung der Abdeckplatten an den Trägerplatten kann das kopfseitige Ende derselben Ausnehmungen bzw. Einklinkungen zur Aufnahme von Aufhängenasen der Abdeckplatten besitzen.

Im Hinblick auf eine baulich einfachere Ausführung vornehmlich der Trägerplatten, die sowohl eine schnellere Verlegung der Trägerplatten, des Leitungssystems als auch der Abdeckplatten bietet, ist bei einer günstigen Weiterbildung vorgesehen, daß die Trägerplatten an der Oberseite des Kopffalzteiles eine abgesenkte Auflagefläche für das aufliegende Fußfalzteil der überdeckenden Trägerplatte aufweist, deren Absenkung gegenüber der restlichen Oberseite im wesentlichen der Stärke s der Trägerplatten am Fußfalzteil entspricht und daß am Fußfalzteil der Trägerplatten eine gemeinsame Einklinkung vorhanden ist, in die im verlegten Zustand die Aufhängenase der darüber befindlichen Abdeckplatte eingreift und durch die die Sturmklammer hindurchgeführt ist.

Die abgesenkte Auflagefläche im Kopffalzteil der Trägerplatten ermöglicht im Überlappungsbereich der dachziegelartig miteinander verlegten Trägerplatten eine einmalige Abknickung des Leitungssystems, da durch die Bemessung der Absenkung sichergestellt ist, daß das Fußfalzteil der überdeckenden Trägerplatte in etwa niveaugleich ausgerichtet ist, mit der restlichen Oberseite der unterdeckten Trägerplatte. Die einmalige Abknickung des Leitungssystems erfolgt an dem zum Fußfalzteil hingewendeten Ende des Mittelfeldes der überdeckenden Trägerplatte. Die einmalige Abknickung des Leitungssystems macht dessen Verlegung einfacher, da beim Anbringen desselben ein Arbeitsgang, nämlich da Anbringen des sonst notwendigen, zweiten Knicks entfällt. Dies gilt für jede Art von Leitungssystem, also gleichgültig ob es sich hierbei um Behälter, Rohre, Schläuche oder sonstigen Fluidträgern handelt.

Durch die Absenkung der Auflagefläche ergeben sich mannigfaltige Vorteile. Zum einen werden die verlegten Trägerplatten in Sparrenrichtung untereinander verriegelt, ohne daß hierzu zusätzliche Mittel notwendig wären. Dies macht das Verlegen schneller, da die abgesenkte Auflagefläche so ausgestaltet werden kann, daß bei richtiger Anordnung des Fußfalzteiles der überdeckenden Trägerplatte auf der Auflagefläche die überdeckende Trägerplatte durch richtig auf der ihr zugeordneten Dachlatte zu liegen kommt. Zum anderen kann etwa durch seitlich aufsteigende Räder die Auflagefläche so begrenzt werden, daß auch eine seitliche Führung beim Verlegen der überdeckenden Trägerplatte gegeben ist.

Die vorgesehene, gemeinsame Einklinkung bringt weitere Vorteile mit sich. Sie dient mehreren Zwecken gleichzeitig. Einerseits ermöglicht sie die Verankerung der jeweils darüber anzuordnenden Abdeckplatten mit Hilfe deren, in die Einklinkung eingreifenden Aufhängenasen.

Die Aufhängenasen ragen in die Einklinkung der überdeckenden Trägerplatte ein und stützen sich an der überdeckten Trägerplatte ab. Die Abdeckplatte wird auf diese Weise einfach aber sicher mit der im wesentlichen darunter befindlichen Trägerplatte verbunden. Darüber hinaus dient die eine gemeinsame Einklinkung auch zur Durchführung der Sturmklammer, die sich einerseits im Bereich der abgesenkten Auflagefläche an der überdeckten Trägerplatte abstützt und andererseits im Dachaufbau, z.B. an den Dachlatten eingehängt ist.

Darüber hinaus ist die eine gemeinsame Einklinkung aber auch dafür geeignet, einen Haltebügel aufzunehmen, der entweder nur vorübergehend oder auf Dauer dort vorgesehen ist, um zumindest beim Verlegen das Leitungssystem in der richtigen Weise auf den Trägerplatten zu halten, ehe die Abdeckplatten aufgelegt werden.

Bei einer vorteilhaften Weiterbildung der Erfindung ist vorgesehen, daß die Trägerplatten auf der Auflagefläche jeweils einen nach oben ragenden Zentrierkopf aufweisen, der im verlegten Zustand jeweils in die Einklinkung der überdeckenden Trägerplatte eingreift. Auf diese Weise erhält die bereits vielfältig eingesetzte Ausklinkung eine weitere Funktion, nämlich die formschlüssige Verriegelung der einander überlappenden Abdeckplatten gegen Verschiebung in Dachlattenrichtung. Der Zentrierkopf kann darüber hinaus als Halterung für die Sturmklammer dienen. Weiterhin kann die Aufhängenase der darüber anzuordnenden Abdeckplatte an ihm anliegen.

Bei einem in Sparrenrichtung orientierten Leitungssystem fließt das Fluid im wesentlichen parallel zu den Sparren. Lediglich die Sammelleitungen verlaufen in Richtung der Dachlatten. Durch die Dachziegelform der Träger- und Abdeckplatten ergeben sich im Leitungssystem Stufen, die es bei Verwendung unflexibler Leitungen notwendig machen, dieselben an die Stufen anzupassen. Um ein im wesentlichen steifes Leitungssystem ohne Anpassung verwenden zu können, ist es günstig, wenn die Träger- und/oder die Abdeckplatten quer zur Sparrenrichtung orientierte Aussparungen für die Aufnahme des Leitungssystems aufweisen.

Wegen des Aussehens und der ästhetischen Wirkung des Daches wird für die Abdeckplatten vorgeschlagen, sie aus dem gleichen Material zu gestalten, wie die übrigen Normalelemente. Hierbei wird in erster Linie Ton, Beton, Asbestzement usw. in Frage kommen. Die gleichen Materialien können auch für die Trägerplatten Verwendung finden. Die Erfindung ist nicht auf die Verwendung dieser Werkstoffe beschränkt. Im Gegenteil, mit Rücksicht auf günstigere Wärmedurchgangszahlen können auch andere Werkstoffe, wie z.B. Metalle, Glas, Kunststoffe usw. Verwendung finden. Metalle eignen sich insbesondere für das Leitungssystem und/oder die Trägerplatten, da dieser Werkstoff einerseits stabil ist, andererseits besonders die Wärmeaufnahme fördert. Da sowohl das Leitungssystem als auch die Trägerplatten beim fertig verlegten Dach nicht sichtbar sind, kann bei diesen beiden Elementen ohne weiteres derjenige Werkstoff mit der günstigsten Wärmedurchgangszahl Verwendung finden.

Bei Anordnung der Leitungsrohre in Sparrenrichtung kann u.a. die Konvektion ausgenutzt werden, um das Fluid zu bewegen. Dieser Umstand ist bei Verlegung der Leitungsrohre in Dachlattenrichtung nicht mehr gegeben. Diese Tatsache fällt aber nicht allzusehr ins Gewicht, da der Einsatz einer Umwälzpumpe in jedem Fall erforderlich sein wird.

Die Aussparungen können sowohl in den Trägerplatten als auch in den Abdeckplatten oder in einer der beiden Platten vorhanden sein. Dies bedeutet, daß es auch Abdeckplatten und Trägerplatten geben kann, die keine Aussparungen für das Leitungssystem aufweisen und deshalb ebene Oberflächen besitzen. Das Leitungssystem kann der gewünschten Formgebung der Abdeck- und Trägerplatten durch seine Gestalt entsprechend angepaßt sein.

Um die Aussparungen im wesentlichen über die gesamte Breite der Trägerplatten laufen lassen zu können, ist bei einer vorteilhaften Weiterbildung vorgesehen, daß jede Trägerplatte einen soweit abgesenkten Seiten- und Deckfalzteil aufweist, daß sich die Aussparungen niveaugleich bis über den gesamten Deckfalzteil erstrecken können.

Für die Verlegung der Träger- und Abdeckplatten und deren Zuordnung zueinander ist es günstig, wenn die Trägerplatten auf einer Auflagefläche des Kopffalzteiles einen nach oben ragenden Zentrierkopf aufweisen, der im verlegten Zustand in eine Einklinkung der überdeckenden Trägerplatte eingreift. Der Zentrierkopf dient zum Zentrieren der Trägerplatten beim Eindecken. Er kann auch als Widerlager für eine oder mehrere Aufhängenasen der darüber anzuordnenden Abdeckplatten Verwendung finden.

Da die Leitungen des Leitungssystems in Dachlattenrichtung verlaufen, kann nunmehr der Zentrierkopf und die Einklinkung sehr viel breiter gestaltet werden, als bei in Sparrenrichtung verlaufenden Leitungen, weil dieselben nicht am Zentrierkopf und der Einklinkung vorbeilaufen. Hierdurch verbessert sich die Trittstabilität und bei der Herstellung das Trocken- und Brennverhalten. Durch die Anordnung der Leitungen in Dachlattenrichtung und die dadurch gegebene Möglichkeit, den Zentrierkopf in Dachlattenrichtung möglichst breit machen zu können, kann seine Tiefe in Sparrenrichtung geringer bemessen werden, da der breitere Zentrierkopf dennoch seine Aufgabe bei der Verankerung der überdeckenden Träger- bzw. Abdeckplatten zu übernehmen vermag.

Bedingt durch die schlanke, aber breite Gestalt des Zentrierkopfes, kann auch die Aufhängenase der überdeckenden Abdeckplatten schlanker gehalten werden. Beide Maßnahmen zusammen machen es möglich, den Fußfalzteil der Trägerplatte wesentlich kürzer zu halten. Der Fußfalzteil sollte in seiner Tiefe in Sparrenrichtung mindestens gleich der Einklinkung sein. Die Einklinkung muß in der Tiefe mindestens so bemessen sein, daß ihre Tiefe die Summe der Tiefen von Zentrierkopf und Aufhängenase der Abdeckplatte ist.

Da die Leitungen nunmehr in Dachlattenrichtung laufen, kann die Absenkung vom Mittelfeld zum Fußfalzteil der Trägerplatten sehr steil erfolgen, z.B. in einem Winkel von ungefähr 84°. Durch diese Maßnahme und die obengenannte Verringerung der Tiefe des Kopffalzteiles ist eine beträchtliche Vergrößerung des Mittelfeldteiles möglich. Diese Vergrößerung kommt unmittelbar der Kollektor- bzw. Absorberfläche des Leitungssystems zugute.

Durch die Ausrichtung des Leitungssystems in Dachlattenrichtung und die Vergrößerung des Mittelfeldes im Bereich des Fußfalzteiles der Trägerplatten wird auch die Fußüberdeckung der Abdeckplatten durch die Trägerplatten verbessert, wodurch die Wärmegewinnung im Fußbereich der Abdeckplatten verbessert wird.

Um auf der Oberfläche der Abdeckplatten abfließendes Kondens- bzw. Tauwasser einwandfrei in die Seitenverfalzung der Abdeckplatten ableiten zu können empfiehlt es sich im Bereich der ebenen Fläche des Kopffalzteiles eine Nut anzuordnen, die im wesentlichen parallel zu den Dachlatten verläuft. Kondens- und Tauwasser werden im wesentlichen auf der Oberfläche der Trägerplatten abfließen, jedoch kann auch Kondens- bzw. Tauwasser an der Rückseite der Trägerplatten abfließen. Auch das rückwärts abfließende Wasser wird am fußseitigen Ende der Trägerplatte auf den Kopfteil der unterdeckenden Trägerplatte abtropfen. Hierzu ist es nur nötig, einen entsprechenden Spalt vorzusehen, der durch die Anordnung und die Höhe der Rippen bestimmt wird. Die Tatsache, daß Kondens- und Tauwasser an der Rückseite insbesondere von Tondachziegeln abfließt ist auf die hydrophile Eigenschaft des gebrannten Scherbens zurückzuführen und wird seit langer Zeit bei Dachziegelkonstruktionen ausgenützt. Bei dem Energiedach gewinnt diese Tatsache noch erhöhte Bedeutung, da hier insbesondere mit einer starken Raureifbildung an der Rückseite der Trägerplatten zu rechnen ist, weil das Dach durch das Fluid immer unterhalb der Außentemperatur gehalten werden muß. Bei Außentemperaturen um die 0°C hat die Dachober- und Unterseite bereits - Temperaturen, die dann zu der Bildung einer Eisschicht führen können. Diese Eisschicht wird bei ansteigender Temperatur abschmelzen und in Form von Tauwasser an der Rückseite der Trägerplatten abfließen.

Da die Ziegeleigenneigung immer noch mindestens 12° beträgt fließt das Tauwasser, welches an Eis ebenso haftet wie an Ton an der Rückseite ab und tropft am fusseitigen Ende der Trägerplatten ab.

Um dieses Wasser in die Seitenfalznut abzuleiten, wird vorgeschlagen, zwischen dem Zentrierkopf und dem erhöhten Mittelfeldteil eine Kopffalznut anzuordnen.

Bei der erfindungsgemäßen Trägerplatte ist der Seitenfalzteil tiefer gelegt. Hierdurch ergibt sich die Möglichkeit, die Seitenfalznut ebenfalls tiefer zu machen, d.h., die Differenz zwischen Seitenfalzrippe und Seitenfalznut zu vergrößern, wodurch die Aufnahmefähigkeit der Seitenfalznut für Kondens- und Tauwasser beträchtlich verbessert werden kann. Die Kopffalznut mündet nun niveaugleich in diese Seitenfalznut. Um ein Abfließen des sich in der Kopffalznut ansammelnden Tau- und Kondenswassers zu ermöglichen wird vorgeschlagen, entweder das untere Niveau der Kopffalznut von links nach rechts, d.h., von Seitenfalzteil zu Deckfalzteil leicht ansteigen zu lassen oder die Seitenfalznut nicht genau parallel zur Dachlattenrichtung verlaufen zu lassen, sondern dies vom Kopf- Deckfalzeck zum Kopf-Seitenfalzeck leicht abfallend anzuordnen.

Eine vorteilhafte Weiterbildung der Erfindung besteht darin, daß der Fußteil jeder Trägerplatte an der Oberseite des Kopffalzteiles der traufseitig folgenden Abdeckplatte aufliegt. Hierdurch wird erreicht, daß eventuell anfallendes Kondens- und Tauwasser von den Abdeck- und Trägerplatten auf die überdeckte, nämlich traufseitig folgende Abdeckplatte bzw. Abdeckplatten entwässert wird. Dies gilt gleichsam für etwa aus dem Leitungssystem austretendes Fluid, das zwischen den Träger und Abdeckplatten austritt und dann auf die traufseitig folgenden Abdeckplatten abgeleitet wird.

Da bei dieser Ausgestaltung die Trägerplatten am fußseitigen Ende sich jeweils an dem Kopfteil der traufseitig folgenden Abdeckplatten abstützen, ergibt sich jeweils längs einer Höhenlinie eine durchlaufende Lage von Trägerplatten, die überdeckt wird von einer ebenfalls in einer Höhenlinie durchlaufenden Lage von Abdeckplatten. Dieser Umstand ist beim Eindecken des Daches zu berücksichtigen.

Die quer zur Sparrenrichtung verlaufenden Leitungen sind über das Mittelfeld geführt, wobei der Kopf- und Fußfalzteil frei von Leitungen ist. Gerade das Mittelfeld ist aber bei der erfindungsgemäßen Vorrichtung zur Gewinnung der Umweltenergie besonders geeignet, da das Mittelfeld nicht doppelt überdeckt ist und außerdem hier die relativ geringste Scherbenstärke erreicht werden kann.

Bei einer günstigen Weiterbildung der Erfindung ist vorgesehen, daß die Leitungen jeweils zu Batterien von mehreren Stücken zusammengefaßt sind. Derartige Batterien erleichtern die Verlegung. Hierbei ist es vorteilhaft, wenn die Leitungen parallel zueinander verlaufen und mittels Verbindungselementen, wie Stifte, Bleche, Bänder, Laschen und dergl. miteinander verbunden sind. Derartige Leitungsbatterien können vorgefertigt und je nach Ausgestaltung auch im Strang gezogen werden.

Zwischen den Aussparungen der Träger- und/oder Abdeckplatten können jeweils Stege angeordnet sein, die die Aussparungen quasi begleiten. Zur Aufnahme der Verbindungselemente können in den Stegen Ausnehmungen vorgesehen werden.

Die Gestalt der Stege und der eventuell vorhandenen Ausnehmungen spielt zusammen mit der Gestalt der Aussparungen eine große Rolle bei der Wärmeübertragung von den Abdeck- und Trägerplatten auf das Leitungssystem. Sind die Leitungen nämlich untereinander über Verbindungselemente verbunden, so ist es von der gegenseitigen Höhenbemessung der Stege, der Aussparungen, des Leitungsquerschnitts und der Ausnehmungen abhängig, wie die Abdeckplatten auf dem Leitungssystem einerseits und den Trägerplatten andererseits aufliegen und die Energie übertragen wird. Bei der Bemessung der eben angegebenen Teile muß einerseits berücksichtigt werden, daß dieselben aufeinander nicht wackeln dürfen, andererseits muß die Trittfestigkeit gewährt sein. Zu guter Letzt soll gewährleistet werden, daß ein ausreichender Wärmeübergang von den Abdeck- und Trägerplatten auf das Leitungssystem stattfindet.

Die Kraftübertragung von den Abdeckplatten auf die Trägerplatten kann über die Leitungen selbst und/oder über die Stege erfolgen. Im ersten Fall wird man die Stege so kurz bemessen, daß auch bei einer über dem Eigengewicht liegenden Belastung der Abdeckplatten einander zugeordnete Stege nicht im Kontakt miteinander treten. Die Platten berühren dann die Leitungen und stützen sich über diese ab. Im zweiten Fall werden die Stege der Platten so hoch ausgeführt, daß sie beim Aufeinanderlegen von Abdeck- und Trägerplatten sich berühren und aufeinander zu liegen kommen. Die Stege begrenzen dann Hohlräume, die in ihrem Volumen so bemessen sind, daß die Leitungen darin mit Spiel Platz finden. Sofern die Leitungen durch Verbindungselemente untereinander gehalten werden, können die Stege die Aussparungen, der Leitungsquerschnitt und die Ausnehmungen so aufeinander abgestimmt werden, daß die Verbindungselemente zwischen den Stegen der Abdeck- und Trägerplatten eingeklemmt werden. Dadurch wird erreicht, daß im Bereich der Stege ein unmittelbarer, verlustarmer Wärmeübergang zwischen den Platten einerseits und dem Leitungssystem andererseits erfolgt, da der Luftspalt im Stegbereich minimiert ist. Die Leitungen dagegen sind wenigstens teilweise über einen Luftspalt von den Aussparungen getrennt und sind deshalb auch bei stärkster Belastung sicher vor Verquetschung. In diesem Fall wird die Energie im Stegbereich durch direkte Berührung der Verbindungselemente in das Leitungssystem eingetragen, während der Wärmeübergang bei den Leitungen über Strahlung und Konvektion erfolgt.

Es gibt jedoch auch den Fall, wo die Kraft- und Wärmeübertragung von den Abdeck- und Trägerplatten auf das Leitungssystem zum Teil über die Stege und zum Teil direkt über das Leitungssystem erfolgt. Dies bedeutet, daß auch Kombinationen aus den vorstehenden Möglichkeiten denkbar sind. So können z.B. die Trägerplatten lediglich mit Aussparungen ohne spezielle Stege versehen werden, während die Abdeckplatten Aussparungen mit ausgeprägten Stegen aufweisen.

In einem solchen Fall würde die Kraftübertragung von den Stegen auf die Verbindungselemente des Leitungssystems und von da auf die Leitungen selbst auf die Trägerplatten erfolgen. Diese Anordnung kann selbstverständlich auch andersherum gewählt werden.

Um die Wärmeübertragung über die Verbindungselemente und die Stege zu erhöhen, kann auch deren beider Breite etwa gleich groß oder größer als die Breite der Leitungen gestaltet werden.

Bei einer vorteilhaften Weiterbildung der Erfindung ist vorgesehen, daß die einzelnen Teile der Vorrichtung, wie Abdeckplatten, Leitungssystem usw. an Stelle von Dachlatten von Haltevorrichtungen mit Abstand zum Unterdach gehalten sind, wobei zwischen den Platten und den Haltevorrichtungen einerseits und dem Unterdach andererseits ein Freiraum für die freie Luftzirkulation vorhanden ist.

Die Haltevorrichtungen dienen als Distanzhalter zum Unterdach. Sie ersetzen die Dachlatten und verbessern unterhalb der Vorrichtung die Luftzirkulation. Dies ist sehr vorteilhaft, da damit die Energieaufnahme von unten, z.B. durch die Trägerplatten vergrößert werden kann. Wichtig ist dabei, daß die Luft unter den Trägerplatten so weit als möglich ungehindert an der Unterseite der Platten entlang streichen kann.

Die Haltevorrichtungen können als U-Profile bzw. Profilabschnitte ausgebildet sein. Derartige Profile sind Handelsware, die Abschnitte können von der Stange abgeschnitten werden.

Nebeneinander in Dachlattenrichtung angeordnete Haltevorrichtungen können miteinander durch eine Längsschiene verbunden werden. Die Längsschiene übernimmt die gleiche Funktion wie eine Dachlatte, bietet aber den zusätzlichen Vorteil, daß sie einen geringeren Luftwiderstand hat, auch wenn sie aus Stabilitätsgründen z.B. einen L-Querschnitt aufweisen sollte.

Eine vorteilhafte Weiterbildung der Erfindung besteht darin, daß die Leitungen einen quadratischen oder rechteckigen oder trapezförmigen oder vieleckigen bzw. runden oder ovalen Querschnitt haben, wobei die Aussparungen der Platten dem jeweiligen Leitungsquerschnitt entsprechend angepaßt sind. Die Leitungen können flexibel oder unflexibel sein.

Leitungen mit quadratischen, rechteckigen oder trapezförmigem Querschnitt können leicht aus Metall geformt werden, z.B. durch Abkanten von Blech. Daruber hinaus können auch Fertigprofile, mit U-, V-, Kasten- und ähnlichen Querschnittsformen für die Herstellung der Leitungen bzw. des gesamten Leitungssystems Verwendung finden. Die runden Leitungen können aus Schläuchen, Rohren und Ähnlichem gefertigt werden, die ebenfalls als Fertigprodukte auf dem Markt sind. Flexible Leitungen haben den Vorteil, daß sie sich den ihnen zugeordneten Aussparungen anpassen können. Dies gilt sowohl für den Verlauf der Leitungen, als auch für deren Querschnittsform. Soll der Kontakt zwischen den Leitungen und den Platten gesteigert werden, so kann durch eine entsprechende Befüllung derselben erreicht werden, daß sie sich im wesentlichen ohne verbleibenden Luftspalt an die Platten anlegen. Die Wärmeaufnahme wird dadurch deutlich besser. Bei an sich unflexiblen Leitungen, wie z.B. solchen aus Metall, können flexible Flanken vorgesehen werden, um eine ähnliche Anpassung vorzunehmen. Diese Flanken können z.B. Z-Form besitzen.

Eine andere vorteilhafte Weiterbildung der Erfindung besteht darin, daß zwei oder mehrere Abdeck- bzw. Trägerplatten einstückig miteinander ausgebildet sind und jeweils ein plattenartiges Element bilden.

Durch das Zusammenfassen mehrerer Platten zu einem einstückigen plattenförmigen Element ist die Möglichkeit der noch einfacheren Fertigung und Verlegung gegeben.

Eine weitere Vereinfachung ergibt sich bei der Erfindung dann, wenn das Leitungssystem und die Trägerplatten einstückig miteinander ausgebildet sind. Hierbei bietet es sich an, das mit den Trägerplatten verschmolzene Leitungssystem wegen des Wärmeüberganges aus Metall zu fertigen, z.B. aus Stahlblech. Die Wärmeaufnahme von unten wird dadurch erheblich gesteigert, da der Wärmedurchgang durch die sonst in einer eigenen Lage vorhandenen Trägerplatten praktisch entfällt.

Da bei dieser Ausgestaltung die Unterstützung durch separate Trägerplatten entfällt, ist die Einheit aus den Trägerplatten und dem Leitungssystem so zu gestalten, daß es dennoch die notwendige Stabilität aufweist. Ebenso wie bei der Ausführungsform, wo das Leitungssystem von den Trägerplatten getrennt ist, ist im vorliegenden Fall die Möglichkeit gegeben, jedes einzelne Element für sich so zu gestalten, daß die notwendige Stabilität, Trittfestigkeit usw. gewährleistet ist. Dies bedeutet im vorliegenden Fall, daß sowohl die Abdeckplatten so ausgebildet sein können, daß sie die Trittfestigkeit alleine gewährleisten, oder daß das mit den Trägerplatten verschmolzene Leitungssystem diese Aufgabe übernehmen kann. Natürlich ist auch eine Aufgabenteilung zwischen dem Leitungssystem und den Abdeckplatten denkbar.

Durch die Verschmelzung der Trägerplatten mit dem Leitungssystem zu einer Einheit, entspricht die Gesamtaufbauhöhe dieser Einheit und der Abdeckplatten praktisch derjenigen Aufbauhöhe eines normalen Dachdeckungselements. Dies bedeutet, daß im Bereich der erfindungsgemäßen Vorrichtung am Dach Einklinkungen am Sparren entfallen können oder davon abgesehen werden kann, die übrigen Normalelemente gegenüber den mit der Vorrichtung ausgestatteten Dachteil durch Distanzstücke anzuheben. Es können infolgedessen bei einem nachträglichen Einbau der erfindungsgemäßen Vorrichtung in ein bereits bestehendes Dach die Dachlatten so verwendet werden, wie sie bislang für die dort befindlichen Normalelemente angeordnet waren.

Eine besonders einfache Konstruktion ergibt sich bei der Erfindung dann, wenn das Leitungssystem ein ebenes Trägerblech aufweist, auf dem die Leitungen in Form von Profilblechen aufgebracht, vorzugsweise aufgeschweißt sind.

Das Trägerblech ist eben und auf ihm werden die Profilbleche aufgebracht. Sie bilden jeweils mit Streifenabschnitten des Trägerbleches die Leitungen. Die Abschnitte des Trägerbleches zwischen den Leitungen stellen die Verbindungselemente dar. Natürlich ist es auch möglich, auf das Trägerblech ein Hippenblech nach der Art einer Spundwand anzuordnen und mit diesem längs der gemeinsamen Berührungsstellen z.B. durch Schweißen zu verbinden. Die Rippen bilden dann zusammen mit den entsprechenden Abschnitten des Trägerbleches die Leitungen. Das Rippenblech kann z.B. durch mehrfaches Abkanten eines normalen Bleches hergestellt werden, wobei die Rippen wiederum die bereits erwähnten Querschnittsformen aufweisen können, also z.B.

rechteckig, quadratisch, trapezförmig, vieleckig, rund sein können.

Sofern man das Leitungssystem noch zusätzlich verstärken will, können an der Unterseite des Trägerbleches Verstärkungsrippen vorgesehen werden, die dann vornehmlich in Sparrenrichtung verlaufen sollten. Die Verstärkungsrippen behindern den Kondenswasserabfluß nicht und erhöhen die Stabilität der Einheit aus dem Leitungssystem und den Trägerplatten. Sie vergrößern die Absorptionsfläche.

Ausführungsbeispiele der Erfindung sind anhand einer Zeichnung dargestellt. Es zeigen:

Fig. 1a, 1b und 1c einen Querschnitt in Richtung der Dachlatten einer ersten und zweiten Ausführungsform der erfindungsgemäßen Vorrichtung,

Fig. 2a, 2b und 2c einen Längsschnitt in Sparrenrichtung durch das in den Fig. 1a bis 1c gezeigte Dach (erste Ausführungsform) gemäß der Linie II-II in Fig. 1c,

Fig. 3a, 3b und 3c einen Längsschnitt in Sparrenrichtung durch das in den Fig. 1a, 1b und 1c gezeigte Dach (zweite Ausführungsform) gemäß der Linie III-III von Fig. 1b,

Fig. 4 eine perspektivische Ansicht auf einen für den Einbau der erfindungsgemäßen Vorrichtung vorbereiteten Dachaufbau,

Fig. 5 eine perspektivische Ansicht eines von einander verschiedenen Trägerplatten (erste und zweite Ausführungsform) gebildeten Vierziegeltreffecks,,

Fig. 6 eine Draufsicht auf ein normales Dachdeckungselement, bzw. auf eine Abdeckplatte,

Fig. 7 eine Schnittansicht durch das Dachdeckungselemente von Fig. 6, gemäß der Linie VI-VI,

Fig. 8 eine Unteransicht einer für ein aus Rohren bestehendes Leitungssystem eingerichteten Abdeckplatte (erste Ausführungsform),

Fig. 9 die Unteransicht einer für ein Behälter aufweisendes Leitungssystem eingerichteten Abdeckplatte (zweite Ausführungsform),

Fig. 10 eine Draufsicht auf eine für ein aus Rohren bestehendes Leitungssystem eingerichtete Trägerplatte (erste Ausführungsform),

Fig. 11 eine Draufsicht auf eine für ein Behälter enthaltendes Leitungssystem eingerichtete Trägerplatte (zweite Ausführungsform),

Fig. 12 eine Unteransicht einer Trägerplatte,

Fig. 13 eine Seitenansicht von auf einer Trockenunterlage gestapelten Sonderelementen,

Fig. 14 eine Seitenansicht von auf einer Trockenunterlage gestapelten Trägerplatte,

Fig. 15 eine Seitenansicht von auf einer Trockenunterlage gestapelten Abdeckplatten,

Fig. 16a, 16b, 16c, einen Schnitt in Dachlattenrichtung durch eine dritte Ausführungsform gemäß der Linie I-I in Fig. 17,

Fig. 17a, 17b, 17c, einen Schnitt in Sparrenrichtung durch die in Fig. 16 gezeigte Vorrichtung gemäß der Linie II-II von Fig. 16,

Fig. 18 eine perspektivische Ansicht eines Vierziegeltreffecks von vier miteinander verlegten Trägerplatten, der dritten Ausführungsform,

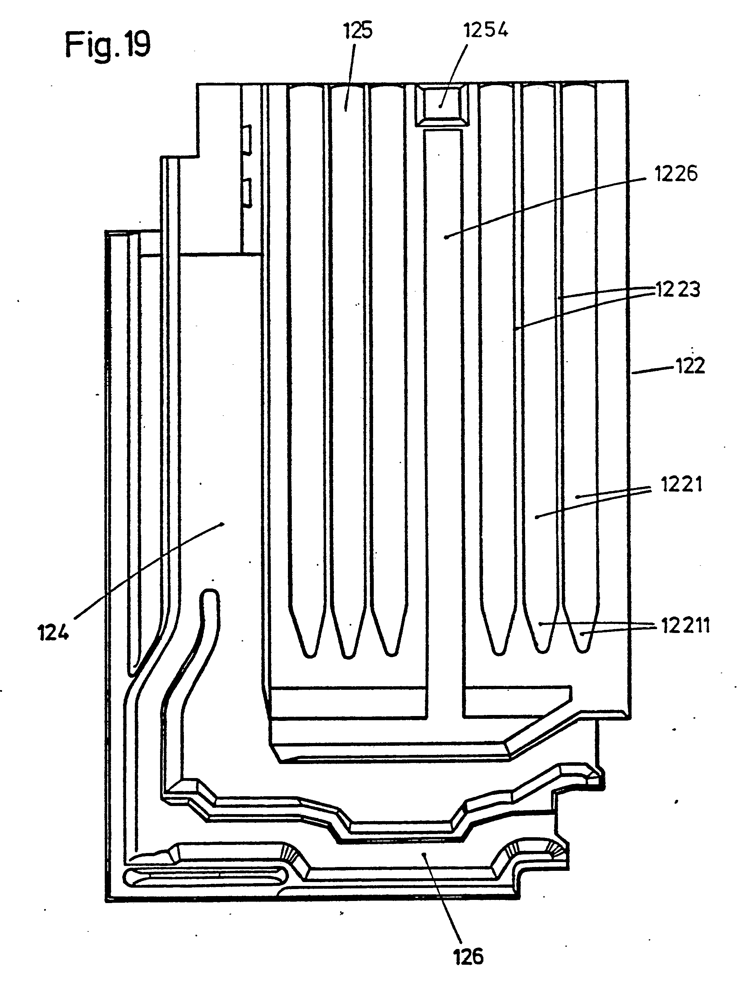

Fig. 19 eine Druntersicht einer Abdeckplatte der dritten Ausführungsform,

Fig. 20 eine Draufsicht einer Trägerplatte der dritten Ausführungsform,

Fig. 21 eine Druntersicht einer Trägerplatte der dritten Ausführungsform,

Fig. 22a,b einen Querschnitt durch eine vierte Ausführungsform der erfindungsgemäßen Vorrichtung in Dachlattenrichtung gemäß der Linie I-I aus Fig. 23,

Fig. 23 einen Längsschnitt durch die Vorrichtung in Sparrenrichtung gemäß der Linie II-II aus Fig. 22,

Fig. 24 eine isometrische Darstellung von vier miteinander verlegten Trägerplatten der vierten Ausführungsform,

Fig. 25 eine isometrische Darstellung zweier Arten von Leitungsbatterien,

Fig. 26 eine Seitenansicht horizontal über einander gestapelter Trägerplatten,

Fig. 27 eine isometrische Darstellung einer Leitungsbatterie,

Fig. 28 eine isometrische Darstellung einer fünften Ausführungsform von Trägerplatten,

Fig. 29 eine weitere Ausführungsform einer Leitungsbatterie,

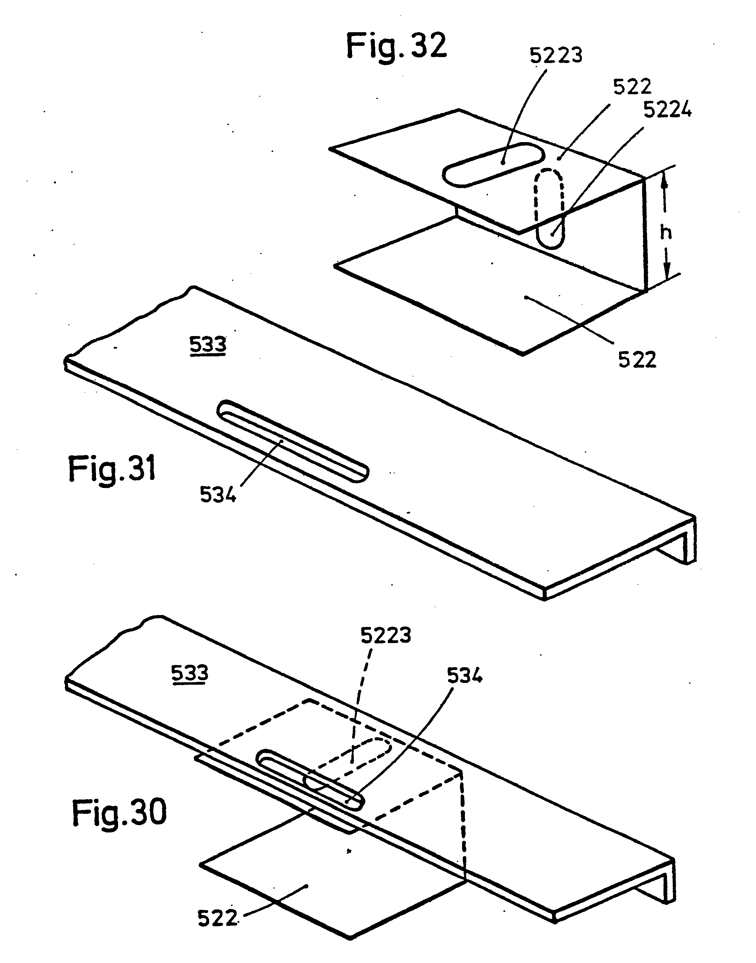

Fig. 30 eine perspektivische Darstellung einer Haltevorrichtung und einer darauf angeordneten Längsschiene,

Fig. 31 eine perspektivische Ansicht dieser Schiene,

Fig. 32 eine perspektivische Ansicht der Haltevorrichtung von Fig. 30,

Fig. 33 einen Längsschnitt in Sparrenrichtung durch eine sechste Ausführungsform (Kronenbiber) der Vorrichtung, gemäß der Linie XII-XII in Fig. 34,

Fig. 34 einen Querschnitt durch die in Fig. 33 gezeigte Ausführungsform (Kronenbiber) gemäß der Linie XIII-XIII aus Fig. 33,

Fig. 35 eine Draufsicht auf eine Abdeckplatte der sechsten Ausführungsform (Kronenbiber) von Fig. 33,

Fig. 36 eine Druntersicht auf die Abdeckplatte von Fig. 35,

Fig. 37 eine Draufsicht auf eine Trägerplatte der sechsten Ausführungsform (Kronenbiber) von Fig. 33

Fig. 38 eine Druntersicht auf die Trägerplatte von Fig. 37,

Fig. 39 einen Querschnitt durch eine siebende Ausführungsform (Muldenfalzziegel Z 1) der Erfindung in Sparrenrichtung gemäß der Linie XVIII-XVIII von Fig. 41,

Fig. 40 einen Querschnitt durch eine achte Ausführungsform (Jura/Reform) der Erfindung gemäß der Linie XIX-XIX von Fig. 42,

Fig. 41 einen Längsschnitt der Ausführungsform (Muldenfalzziegel) von Fig. 39 gemäß der Line XX-XX von Fig. 39,

Fig. 42 einen Längsschnitt durch die Ausführungsform (Jura/Reform) von Fig. 40 gemäß der Linie XXI-XXI,

Fig. 43 eine Draufsicht auf eine Abdeckplatte der Ausführungsform (Muldenfalzziegel) von Fig. 39,

Fig. 44 eine Draufsicht auf eine Abdeckplatte der Ausführungsform (Jura/Reform) von Fig. 40,

Fig. 45 eine Druntersicht auf die Abdeckplatten der beiden Ausführungsformen (Muldenfalzziegel, Jura/Reform) der Fig. 43, 44,

Fig. 46 eine Draufsicht auf eine Trägerplatte der beiden Ausführungsformen (Muldenfalzziegel, Jura/Reform) der Fig. 39, 40,

Fig. 47 eine Druntersicht auf die Trägerplatte von Fig. 46,

Fig. 48 einen Längsschnitt in Sparrenrichtung durch eine neunte Ausführungsform (Biberschwanz) der Erfindung,

Fig. 49 eine Draufsicht auf das Dach von Fig. 48, in Richtung des Pfeiles P, wobei eine Lage von Abdeckplatten entfernt ist,

Fig. 50 eine Draufsicht auf eine weitere Ausführungsform einer Trägerplatte, die unter anderem für die Ausführungsformen der Fig. 20 bis 26 und 33 bis 38 geeignet ist,

Fig. 51 einen Längsschnitt in Sparrenrichtung durch eine zehnte Ausführungsform der Erfindung mit einem als Batterie ausgebildeten Leitungssystem,

Fig. 52 einen Längsschnitt durch eine elfte Ausführungsform der Erfindung, bei welcher das Leitungssystem einstückig mit den Trägerplatten ausgebildet ist, und

Fig. 53 einen Längsschnitt durch eine der Fig. 52 ähnliche, zwölfte Ausführungsform, bei der das Leitungssystem weiter in den Überdeckungsbereich der Abdeckplatten hereinreicht und eine andere Anordnung der Sturmklammer gegebenen ist.

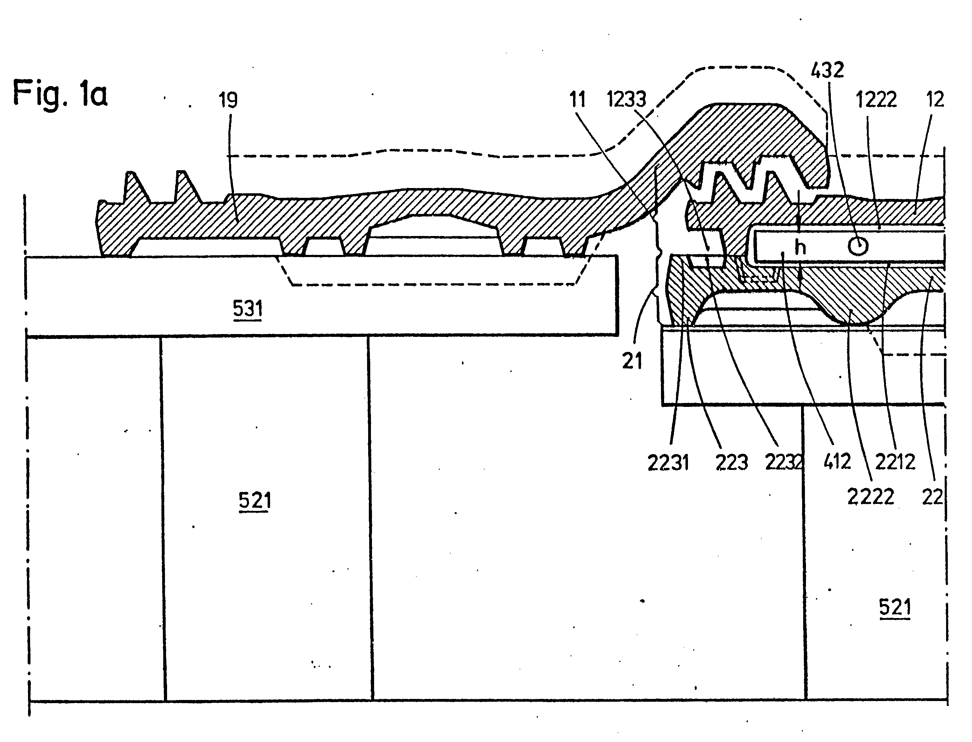

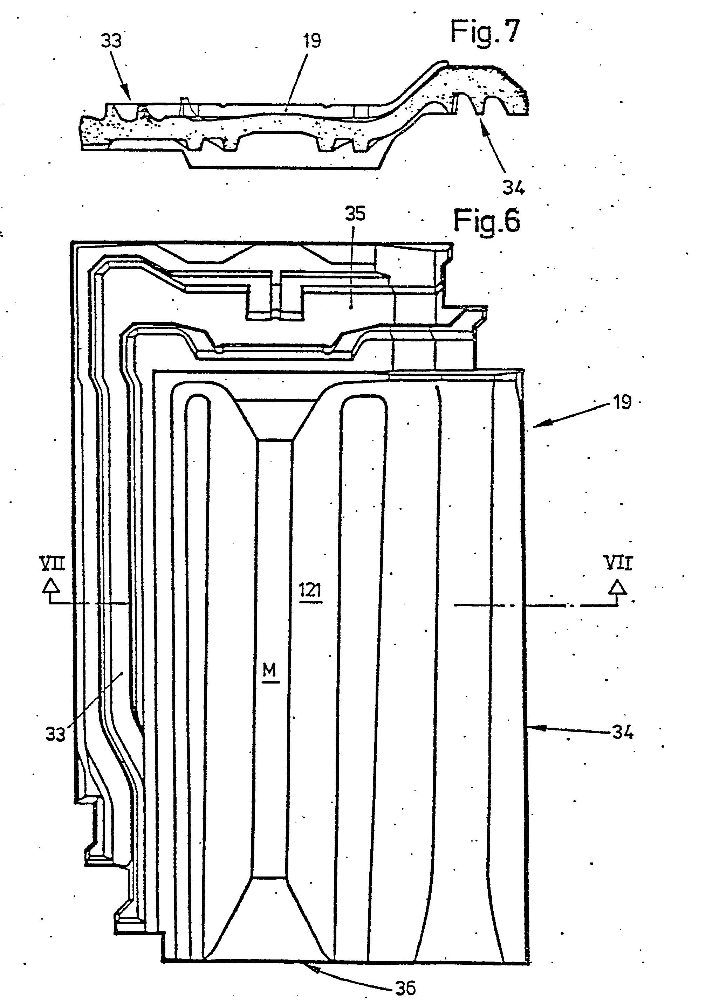

Die Fig. 1a bis 1c, 2a bis 2c und 3a bis 3c geben eine Gesamtübersicht über eine erste und zweite Ausführungsform einer Vorrichtung 1, zur Gewinnung von Heizwärme aus Umweltenergie. Sie ist in ein Dach 2 integriert, das normale, handelsübliche Dachdeckungselemente 19 umfaßt, die in den Fig. 6 und 7 dargestellt sind. Ihnen ist zu entnehmen, daß die normalen Dachdeckungselemente an dem dargestellten linken Rand eine Seitenfalzteil 33, am kopfseitigen Rand der Oberseite einen Kopffalzteil 35 und am rechten seitlichen Rand an der Unterseite einen Deckfalzteil 34 aufweisen. Nicht dargestellt ist der am fußseitigen Rand am der Unterseite befindliche Fußfalzteil 36. Er ist lediglich mit einem Pfeil in Fig. 6 angedeutet. Bei dem gezeigten Dachdeckungselement handelt es sich um eine Flachdachpfanne. Das Mittelfeld M ist vom kopfseitigen zum fußseitigen Rand hin längs strukturiert.

Die normalen Dachdeckungselemente 19 sind auf Dachlatten 531 aufgelegt und werden auf diesen mit Hilfe von Aufhängenasen gehalten. Die Dachlatten sind von Sparren 521 unterstützt, die in der üblichen Weise quer zu den Dachlatten angeordnet sind.

Die Vorrichtung 1 weist eine obere Lage von Abdeckplatten 12 auf, die im wesentlichen die gleichen Kopf-, Seiten-, Deck- und Fußfalzteile besitzen wie die normalen Dachdeckungselemente 19 und mit diesen problemlos eingedeckt werden können. Dies ist insbesondere in den Fig. 1a bis 1c, 2a bis 2c und 3a bis 3c gezeigt. Auch die für den Betrachter sichtbare Oberseite 121 der Abdeckplatten 12 ist genauso gestaltet, wie die Oberseite der normalen Dachdeckungselemente 19. Die Fig. 6 zeigt deshalb sowohl die Oberseite der normalen Dachdeckungselementee 19 als auch die Oberseite der Abdeckplatten 12. Die Abdeckplatten lassen sich deshalb ohne Schwierigkeiten mit den benachbarten normalen Dachdeckungselementen 19 verlegen.

Die Vorrichtung 1 besitzt eine untere Lage 21, die von Trägerplatten 22 und Sonderelementen 24 gebildet ist. Die Sonderelemente 24 bilden jeweils den rechten Anschlußrand eines mit der erfindungsgemäßen Vorrichtung 1 ausgestatteten Dachteiles an den mit normalen Dachdeckungselementen 19 ausgestatteten übrigen Dachteil.

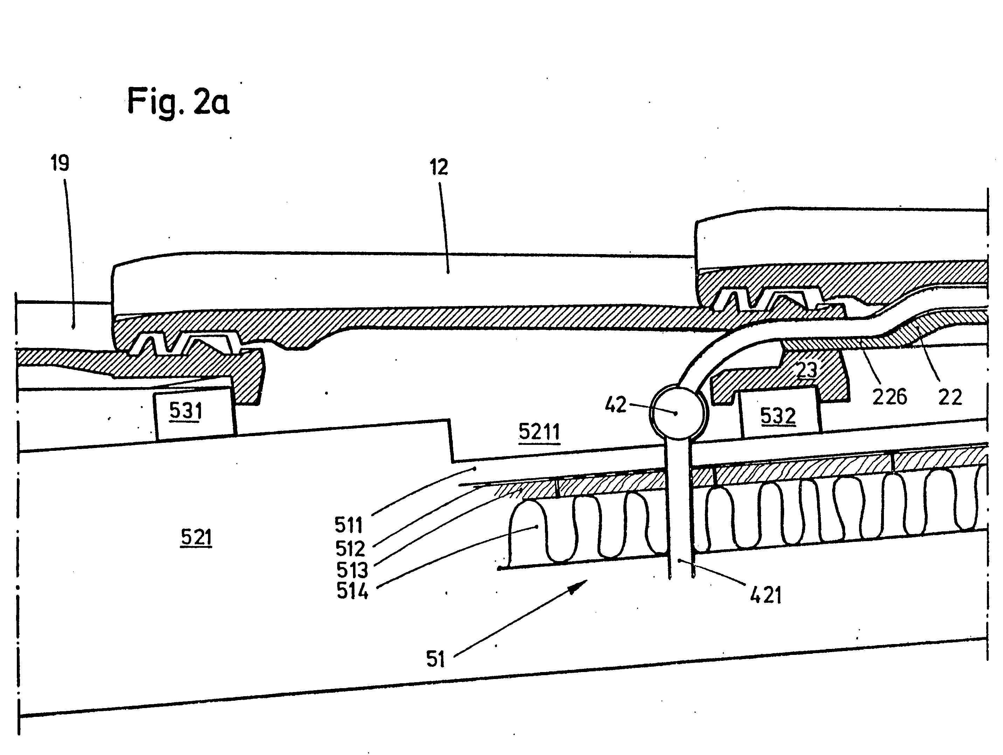

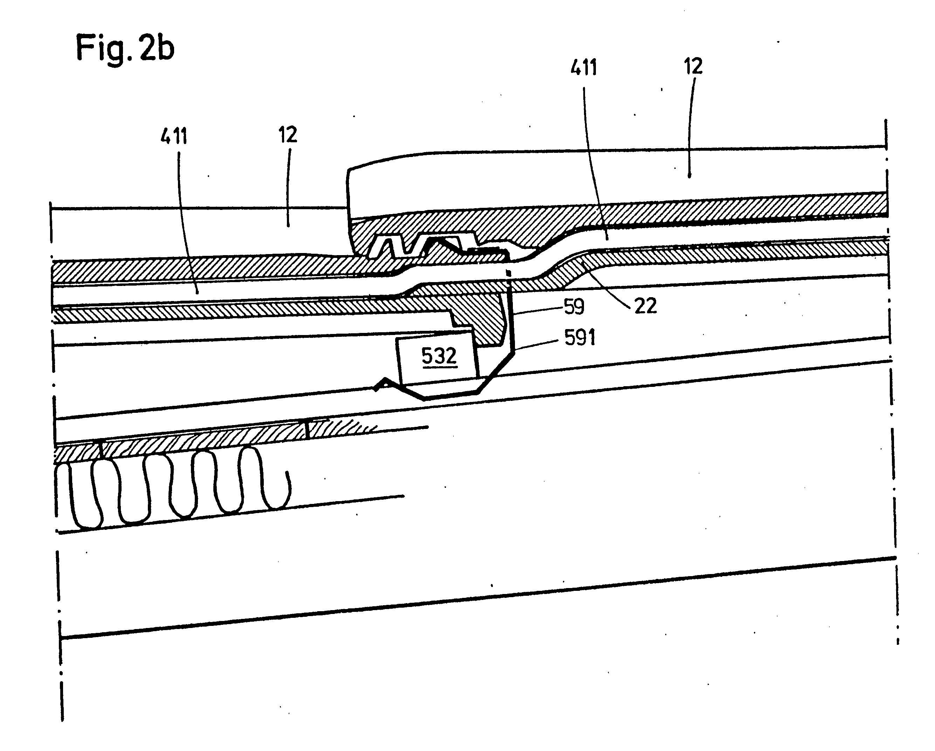

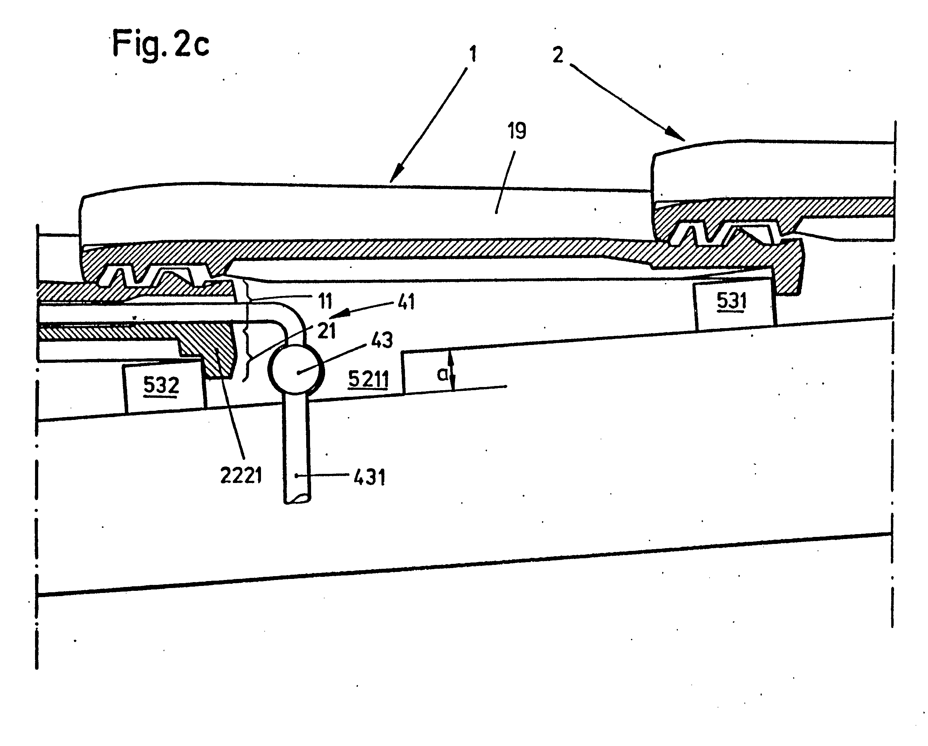

Die Trägerplatten 22 und die Sonderelemente 24 der unteren Lage 21 liegen auf Dachlatten 532 auf, die gegenüber den Dachlatten 531, auf welchen die normalen Dachdeckungselemente 19 aufliegen, um ein Maß a tiefer liegen. Die Absenkung der Dachlatten für die Vorrichtung 1 kann einerseits durch deren Anordnung in einer Ausklinkung 5211 erfolgen, wie sie in Fig. 2 zu sehen ist oder durch eine Unterfütterung der die normalen Dachdeckungselemente 19 tragenden Dachlatten 531 durch Distanzstücke 58.

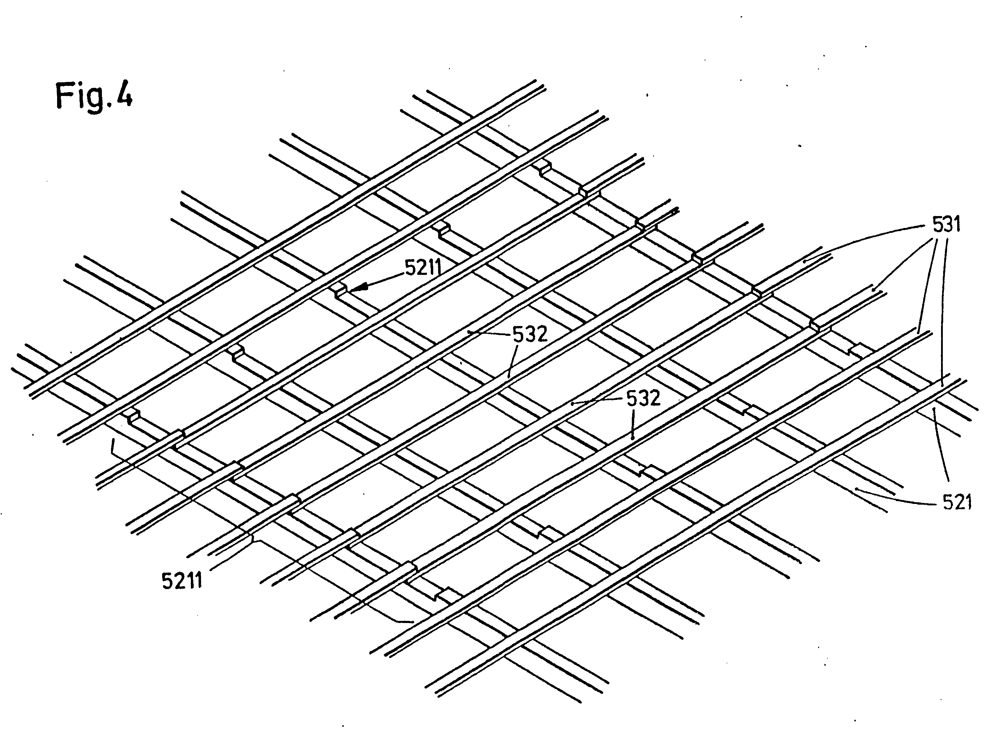

In Fig. 4 der Zeichnung ist perspektivisch ein Dachunterbau gezeigt, der für den Einbau der erfindungsgemäßen Vorrichtung 1 präpariert ist. Es sind deutlich die um das Stück a tiefer gelegten Dachlatten 532, sowie die Dachlatten 531 zu sehen, die für die Aufnahme der normalen Dachdeckungselemente vorgesehen sind. Die Dachlatten 531 und 532 sind an den Stoßstellen auf den Randsparren einander überlappend angeordnet und gemeinsam auf den Randsparren, z.B. durch Nageln befestigt.

Die Ausklinkung 5211 der Sparren beginnt soweit oberhalb der obersten Dachlatte 532, daß die untere Lage 21 der Trägerplatten noch ausreichend auf ihr Platz finden kann. Das gleiche gilt für die unterste Dachlatte 532 des für den Einbau der Vorrichtung vorgesehenen Dachteiles.

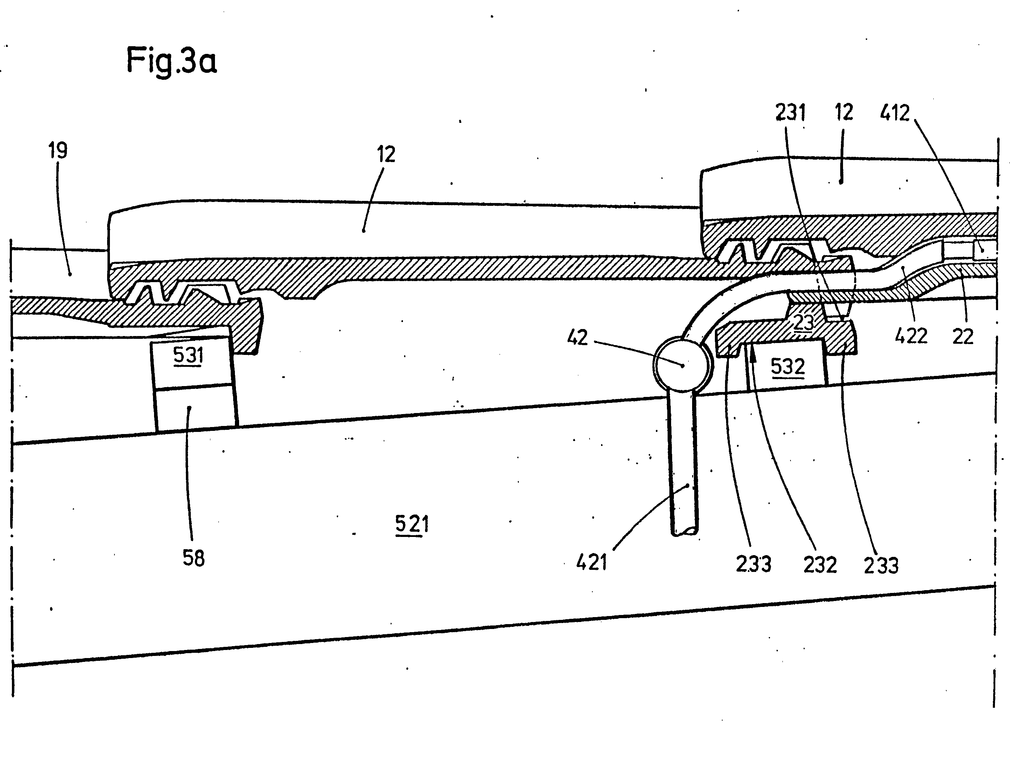

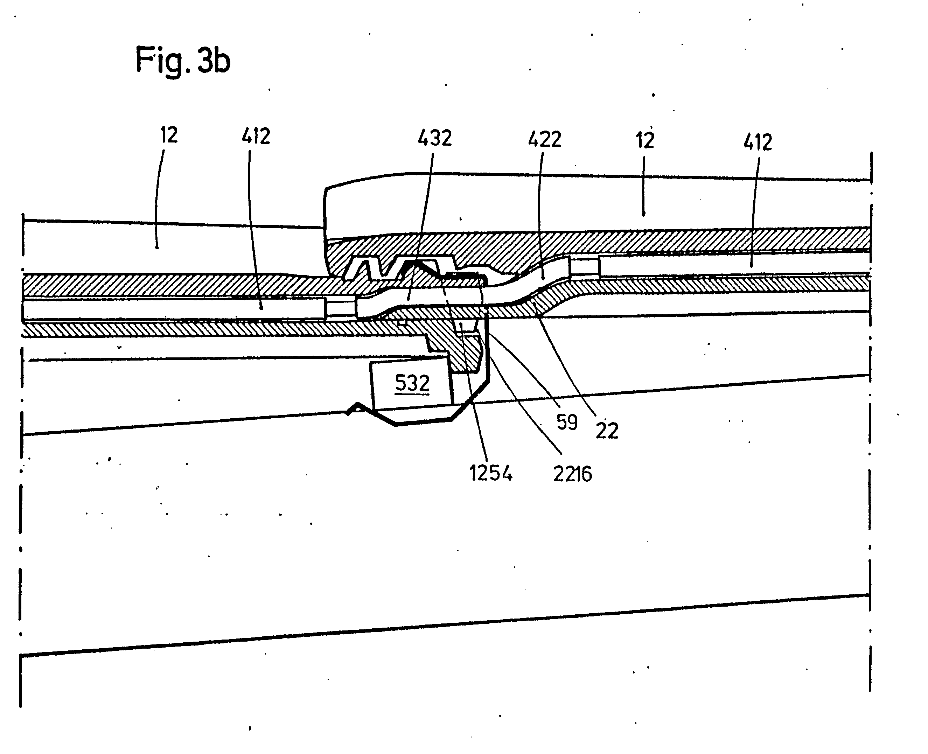

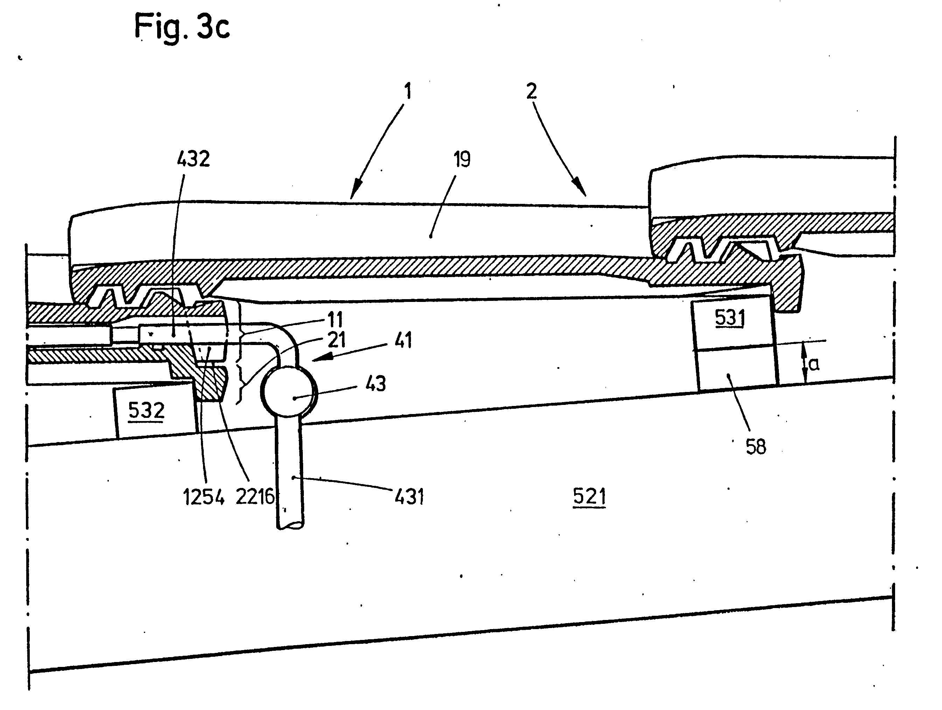

Zwischen der oberen Lage 11 und der unteren Lage 21 ist ein Leitungssystem 41 für ein die Umweltenergie aufnehmendes Fluid aufgebracht. Das Leitungssystem ist in zwei Varianten gezeigt. Einmal weist es parallel zueinander in Sparrenrichtung verlaufende Rohre 411 auf, wie dies in Fig. 2 dargestellt ist, und einmal besitzt es Behälter 412, die in Fig. 3 dargestellt sind.

Die Rohre verlaufen mit einem geringen Abstand nebeneinander und folgen dem Treppenprofil der dachziegelartig verlegten Trägerplatten 22. Sie sind vornehmlich elementübergreifend verlegt, d.h., sie erstrecken sich in ihrer Länge über mehr als eine Abdeckplatte. An ihren oberen Enden sind sie an eine firstseitige Sammelleitung 43 angeschlossen, an ihren unteren Enden an eine traufseitige Sammelleitung 42. Die Sammelleitung verlaufen in Dachlattenrichtung und sind über vertikal durch den Dachunterbau geführte Verbindungsleitungen 421 bzw. 431 mit der Heizungsanlage eines Hauses verbunden. Die Rohre 411 können ebenso wie die später noch zu beschreibenden Behälter zusammen mit den Sammelleitungen als insgesamt verlegbare Einheit ausgebildet sein. In den Fig. 2 und 3 ist schematisch ein verdämmter Dachunterbau 51 angedeutet. Es sind Konterlatten 511, Dachpappe 512, eine Rohschalung 513 und eine Dämmplatte 514 zu erkennen.

Die Behälter 412 besitzen eine relativ geringe Höhe h und sind mit ihrer Länge und Breite kleiner bemessen als die Grundfläche der Trägerplatten 22. Im vorliegenden Fall besitzen sie an ihrem oberen Ende je zwei Stichleitungen 432, die zu einer firstseitigen Sammelleitung 43 hinführen, die genauso beschaffen ist, wie die Sammelleitung bei dem aus Rohren bestehenden Leitungssystem 41. Desgleichen besitzen die Behälter am unteren Ende jeweils zwei Stichleitungen 422, die zu einer traufseitigen Sammelleitung 42 geführt sind. Auch diese Sammelleitung und ebenso wie die beiden entsbrechenden Verbindungsleitungen 421 und 431 sind genauso beschaffen wie bei dem aus Rohren bestehenden Leitungssystem von Fig. 2.

Bei hintereinander geschalteten Behälter dienen die auf die benachbarten Behälter hingerichteten Stichleitungen 422 und 432 zum Verbinden der Behälter untereinander. Die Leitungsanschlüsse der Behälter, der Rohre und der Leitungen unter- und miteinander können mit Hilfe von handelsüblichen Steck- bzw. Schraubverbindungen erfolgen.

Nachfolgend werden die einzelnen Bestandteile der erfindungsgemäßen Vorrichtung im Detail beschrieben und anschließend ihr Platz im erfindungsgemäßen Verbund erläutert. Es wird mit den Trägerplatten 22 begonnen.

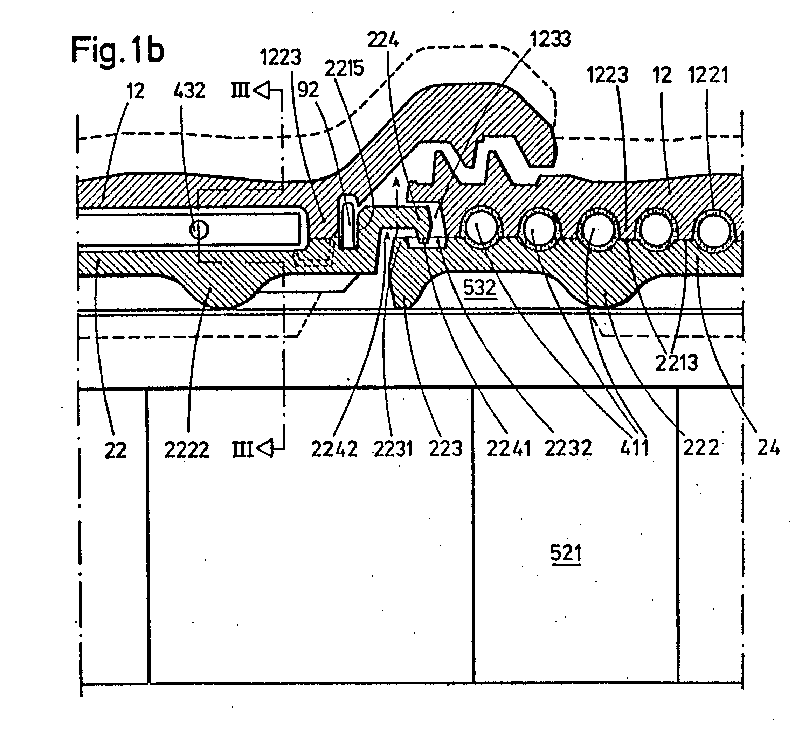

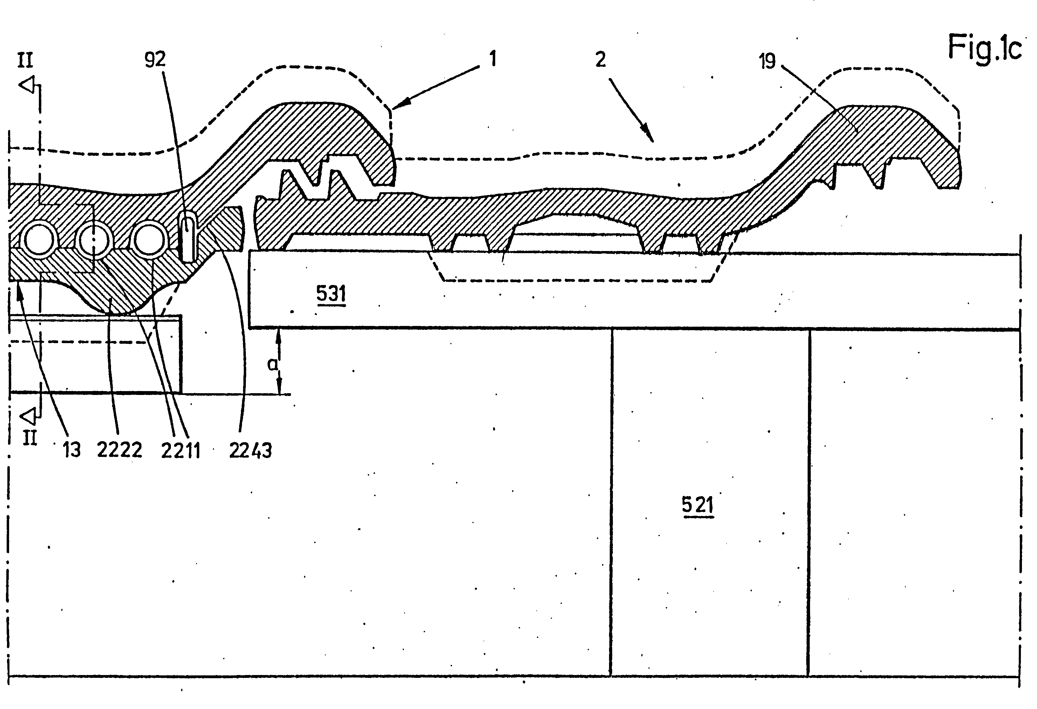

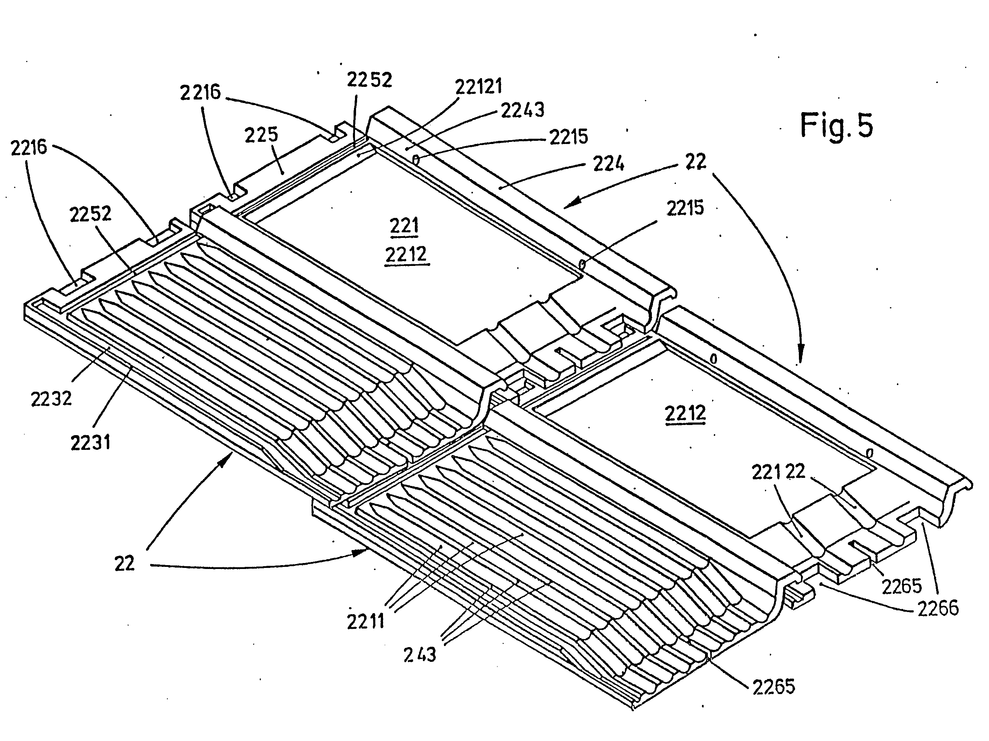

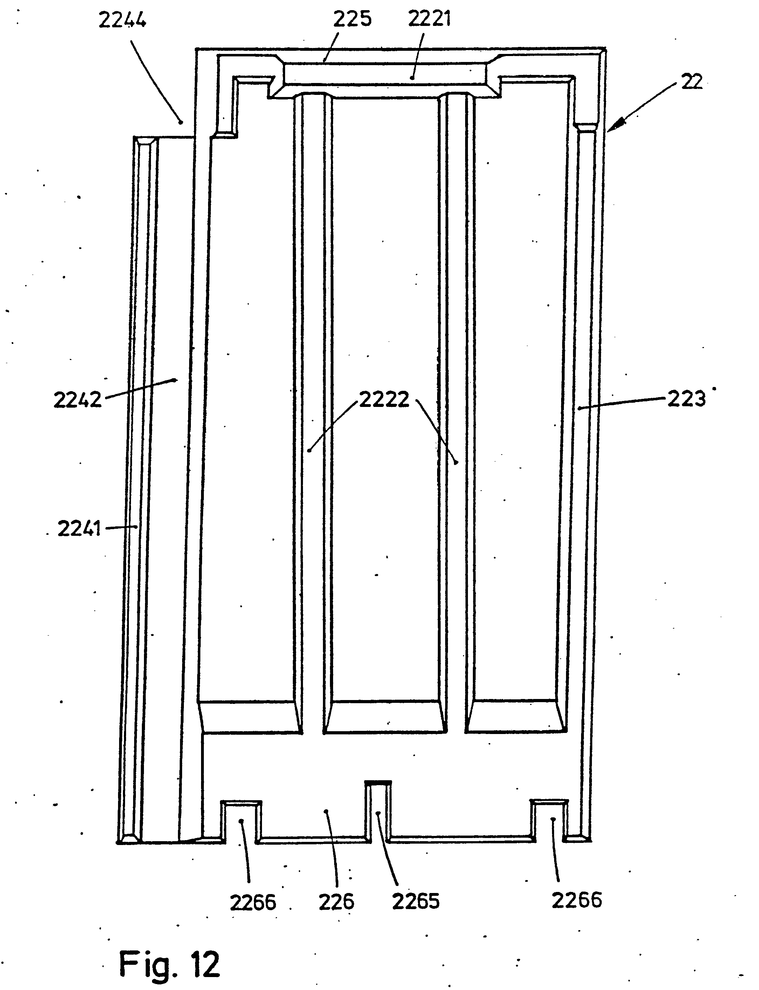

Den Fig. 2, 3 und 5 kann entnommen werden, daß die Trägerplatten 22 miteinander dachziegelartig verlegt werden. Um die Verlegung der unteren Lage 21 möglichst einfach zu gestalten und komplizierte seitliche Anschlüsse zu vermeiden, besitzen die Trägerplatten 22 an ihrer Oberseite eine einfache Seitenverfalzung bestehend aus einer äußeren Seitenfalzrippe 2231 und einer Seitenfalznut 2232. Beide sind gut aus den Fig. 1, 10 und 11 zu erkennen. In die Seitenfalznutz 2232 greift eine äußere, an der Unterseite der Trägerplatten angeordnete Deckfalzrippe 2241 ein, die in den Fig. 1 und 12 zu sehen ist. Es ergibt sich dadurch ein einfacher, aber wirksamer Verschluß benachbarter Trägerplatten. Beim Verlegen ist der richtige gegenseitige Abstand der

Trägerplatten gewährleistet, wenn die Deckfalzrippe 2241 der einen Trägerplatte in die Seitenfalznut 2232 der anderen eingreift.

Die Deckfalzrippe 2241 wird von einer Deckfalznut 2242 flankiert, in die bei verlegten Trägerplatten die Seitenfalzrippe 2231 hineinragt. Sowohl die Deckfalzrippe 2241 als auch die Deckfalznut 2242 sind in einem Deckfalzteil; 224 angeordnet, der sich vom fußseitigen Ende der Trägerplatte bis zu einem am kopfseitigen Ende befindlichen Eckausschnitt 2244 erstreckt und dabei auf die ganze Länge im wesentlichen den gleichen Querschnitt aufweist. Der Fig. 1 kann unschwer entnommen werden, daß der Deckfalzteil 224 sich über das Niveau der restlichen Trägerplatte erhebt.

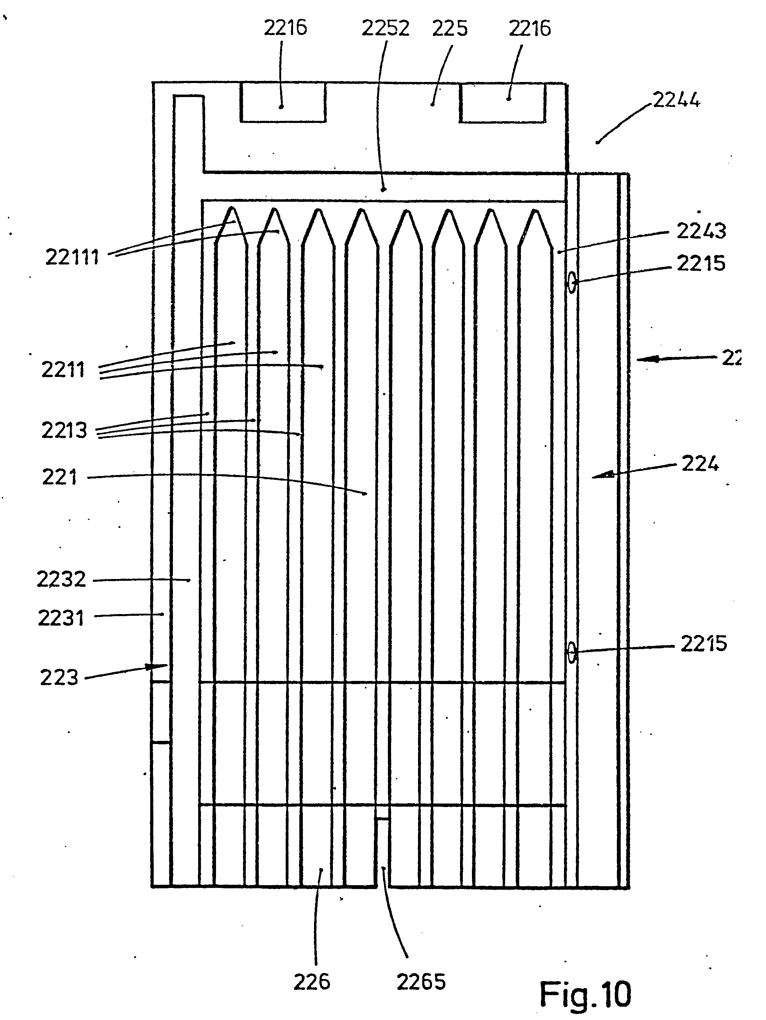

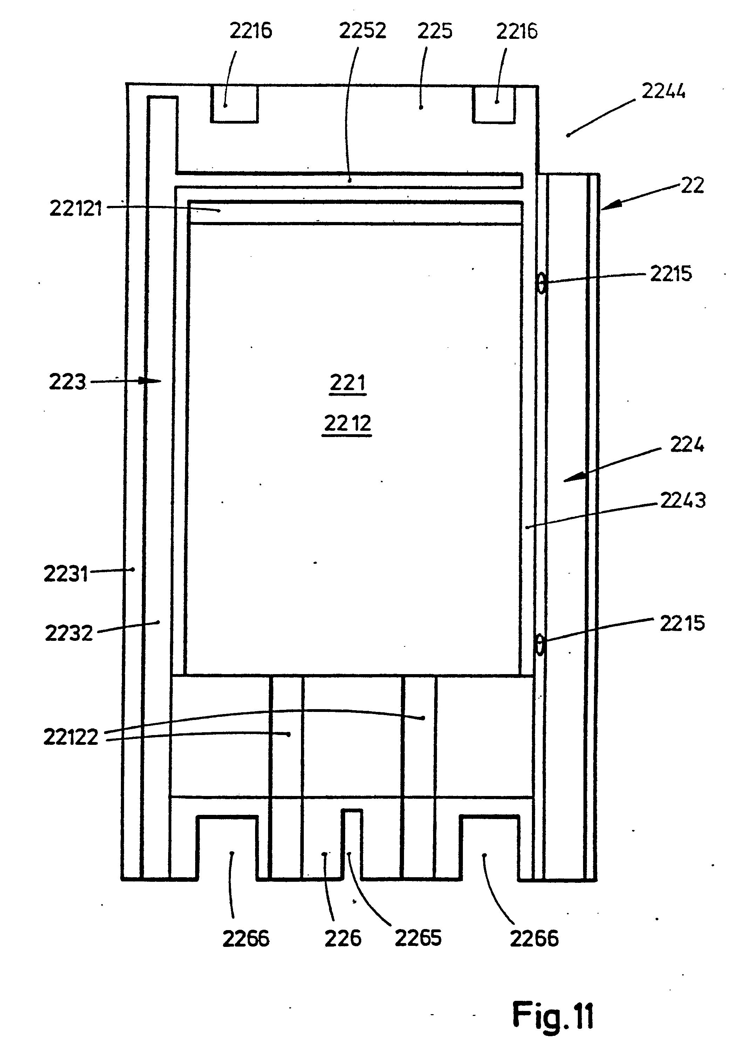

In die Seitenfalznut 2232 mündet eine an den in den Fig. 10 und 11 oben dargestellten kopfseitigen bzw. firstseitigen Ende angeordnete Kopffalznut 2252, die zum Sammeln von eventuell anfallendem Kondenswasser dient.

An der Unterseite des Kopfbereiches befindet sich quer zur Längserstreckung der Trägerplatten eine Aufhängenase 2221. Zwischen der Aufhangenase gelegten Fußfalzteil 226 erstrecken sich je zwei Stützrippen 2222.

Die treppenartige Absenkung des Fußfalzteiler 226 gegenüber der Oberseite 221 der Trägerplatten ist gut aus den Fig. 2 und 3 zu erkennen. Sie dient dazu, im Überlappungsbereich in Höhe der Dachlatten eine allzu große Materialanhäufung zu vermeiden und einen ausreichenden Durchgang für das Leitungssystem 41 zu schaffen. Trotz der Absenkung ist sichergestellt, daß das Fußfalzteil 226 noch eine ausreichende Restscherbendicke aufweist und belastbar ist.

Aus Fig. 12 ist zu erkennen, daß die Unterseite des Fußfalzteiler 226 eben ausgebildet ist. Dies gilt gleichermaßen für die in Fig. 11 gezeigte Oberseite des Fußfalzteiler als auch für die in den Fig. 10 und 11 gezeigten Oberseiten der Kopffalzteile 225 der Trägerplatten.

Am Fußfalzteil besitzen die Trägerplatten eine Einklinkung 2265 für eine Sturmklammer 59, wie sie in den Fig. 2 und 3 gezeigt ist. Diese Einklinkung befindet sich im vorliegenden Fall in etwa in der Längsmitte der Trägerplatten. Bei der in den Fig. 11 und 12 gezeigten Trägerplatte wird sie noch zu beiden Seiten von Einklinkungen 2266 flankiert. Sie bilden Freiräume für bei verlegten Abdeckplatten hindurchgreifenden Aufhängenasen von Abdeckplatten 12, wie dies noch später erläutert wird. Die Einklinkungen 2266 sind allerdings nur bei denjenigen Trägerplatten vorhanden, die das mit den Behältern 412 ausgestattete Leitungssystem 41 eingerichtet sind. Sie fehlen bei der in Fig. 10 dargestellten Trägerplatte, die bekanntlich für das Rohre aufweisende Leitungssystem 41 vorgesehen ist. Die Fig. 12 zeigt oberhalb primär die Unterschicht auf die für das Behältersystem eingerichteten Trägerplatten. Mit Ausnahme der Einklinkungen 2266 schaut jedoch die Rückseite der für das Röhrensystem eingerichteten Trägerplatte 22 genauso aus.

Am kopfseitigen Ende weisen beide Varianten von Trägerplatten 22 Ausnehmungen 2216 für die später noch zu beschreibenden Aufhängenasen von Abdeckplatten 12 auf.

In den beiden Fig. 10 und 11 sind die zwei Varianten von Trägerplatten 22 dargestellt. Die Trägerplatte von Fig. 10 ist wie bereits ausgeführt, für das mit Rohren 411 ausgestattete Leitungssystem 41 eingerichtet. Im vorliegenden Fall erstrecken sich in Längsrichtung der Trägerplatten 22, also vom Kopffalzteil 225 zum Fußfalzteil 226 insgesamt acht rinnenartige Aussparungen 2211, die parallel nebeneinander laufen. Sie sind über die gesamte Oberseite 221 eben ausgeführt und folgen zum Fußfalzteil 226 hin der treppenartigen Absenkung des Fußteiles. Sie beginnen kurz hinter der Kopffalznut 2252 und weisen dort eine kegelartige Spitze 22111 auf.

Zwischen den Aussparungen 2211 und am Rande der Oberseite 221 sind dieselben von Stegen 2213 flankiert, die im wesentlichen gleich breit sind.

In einer schräg abfallenden, inneren Flanke 2243 des Deckfalzteiles 224 sind zwei Einsenkungen 2215 für Stifte 92 vorgesehen. Die Einsenkungen sind nach der Art einer vertikalen Bohrung ausgeführt und gleichmäßig über die Länge der Trägerplatte 22 verteilt. Die Stifte dienen auf Wunsch zur Verankerung der Abdeckplatte 12 auf den Trägerplatten 22. Sie können auch das Verlegen der Abdeckplatten erleichtern.

Fig. 10 ist zu entnehmen, daß die Einklinkung 2265 für die Sturmklammer symmetrisch zwischen den Rinnen in einem mittleren Steg 2213 angeordnet ist. Die rinnenartigen Aussparungen 2211 sind so geformt, daß die Rohre 411 mit Spiel eingelegt werden können. Ihre Tiefe ist im vorliegenden Fall so bemessen, daß sich die Rohre 411 lediglich mit ungefähr einem Drittel versenken lassen. Den restlichen Teil der Querschnittsfläche ragen sie über das Niveau der Trägerplatten 22 heraus.

Die in Fig. 11 dargestellte Trägerplatte ist für die Aufnahme on Behältern 412 eingerichtet. Sie weist hierzu in ihrer Oberseite 221 eine Ausnehmung 2212 für die Aufnahme der Behälter auf. Die Ausnehmung weist eine größere Breite und Länge auf als der Behälter, so daß dieser mit Spiel eingelegt werden kann. Ihre Tiefe beträgt jedoch ungefähr ein Drittel der Höhe h des Behälters 412. Die Ausnehmung umfaßt im wesentlichen die ganze Oberseite 221 und reicht von der Kopffalznut 2252 bis hin zum Beginn der Absenkung im Fußfalzteil 226. Am kopfseitigen Ende kann sie mit einer Abschrägung 22121 versehen sein, die das Einlegen des Behälters erleichtert und einen Durchgang für die zum Behälter führenden Stichleitungen 432 schafft.

Am Fußfalzteil 226 sind zwei rinnenartige Ausnehmungen 22122 für die am fußseitigen Bereich der Behälter angeordneten Stichleitungen 422 vorhanden, die dem treppenartigen Absatz des fußseitigen Bereiches

folgen. Sie verlaufen parallel zueinander zu beiden Seiten der Einklinkung 2265 für die Sturmklammer in Längsrichtung der Trägerplatte 22.

In Fig. 1 ist die rechte Trägerplatte 22 als Sonderelemente 24 ausgebildet. Um den Anschluß an das benachbarte normale Dachdeckungselement 19 zu ermöglichen, ist der Deckfalzteil 224 der Trägerplatte 22 verkürzt ausgeführt. Die Deckfalzrippe 2241 entfällt. Das Sonderelement 24 kann in dieser Form eigens hergestellt oder durch entsprechendes Verkürzen des Deckfalzteiles 224 einer normalen Trägerplatte entlang der Linie A-A in Fig. 1b gefertigt werden. Das Verkürzen kann z.B. durch Abtrennen des störenden Teiles des Deckfalzteiles erfolgen. Obwohl in Fig. 1 lediglich ein Sonderelement für das Rohre enthaltende Leitungssystem 41 gezeigt ist, ist es klar, daß auch in gleicher Weise ein Sonderelement 24 für eine das Behältersystem aufnehmende Trägerplatte 22 angefertigt werden kann.

Im verlegten Zustand bildet die untere Lage 21 der Trägerplatten 22 eine eigene Schicht. Die jeweils darüber angeordneten Trägerplatten überlappen mit ihrem Fußfalzteil 226 den Kopffalzteil 225 der darunterliegenden Trägerplatten soweit, daß sie ungefähr bis zur Kopffalznut 2252 hin reichen.

Nun zu den Abdeckplatten. Die Oberseite der Abdeckplatten wurde bereits eingangs beschrieben. An ihrer Rückseite 122 weisen sie ein ebenso gestaltetes Deckfalzteil 124 und Fußfalzteil 126 auf, wie die normalen Dachdeckungselemente 19. Das rückseitige Mittelfeld ist jedoch dem besonderen Verwendungszweck angepaßt, d.h., es ist zur Aufnahmen des Leitungssystems 41 vorbereitet. So erkeit man, daß die Rückseite 122 mit ebensolchen rinnenartige Ausnehmungen 1221 versehen ist, wie sie bereits von der Oberseite der Trägerplatten 22 bekannt sind.

Die Aussparungen 1221 verlaufen ebenso in Längsrichtung der Abdeckplatten, d.h., von dem Kopffalzteil 125 zum Fußfalzteil 126. Sie enden kurz vor der dort angeordneten Fußverfalzung mit kegelartigen Spitzen 12211.

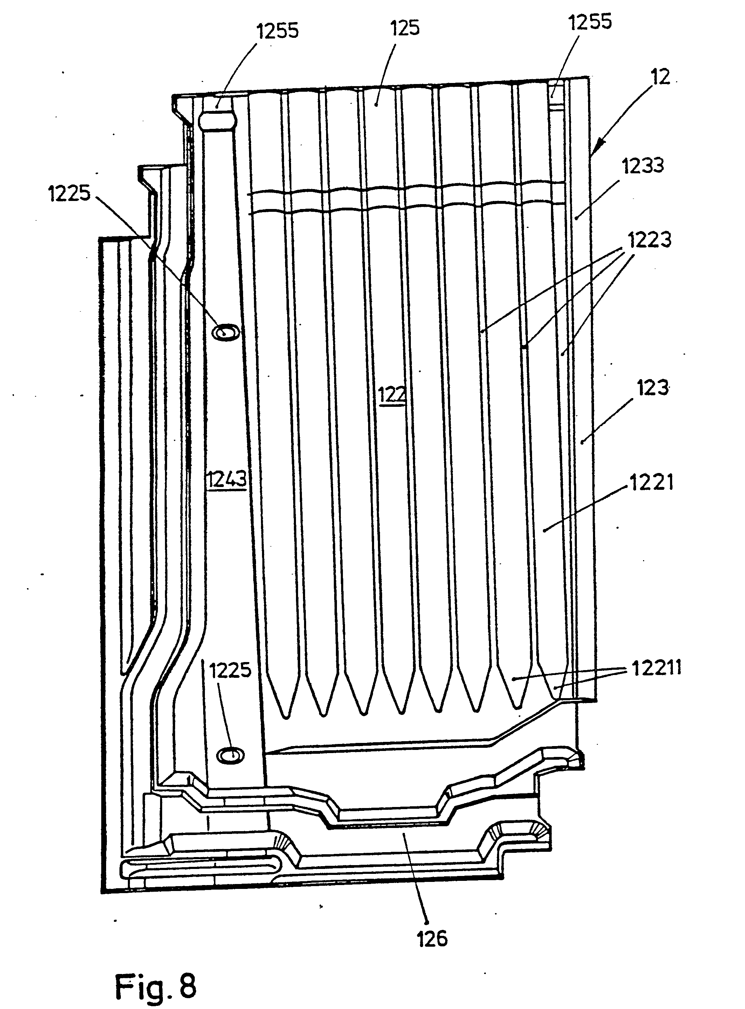

Die Aussparungen sind im Bereich des Mittelfeldes gerade geführt. Zum Kopffalzteil 125 hin sind sie einem treppenartigen Ansatz des Kopfbereiches folgend höher bzw. tiefer gelegt, je nachdem ob man die Schnittansicht der Fig. 3 oder Fig. 8 betrachtet. Die Abkröpfung der rinnenartigen Aussparung dient wiederum dem Ziel im Überlappungsbereich bei den Dachlatten 532 genügend Raum für die Durchführung des Leitungssystems 41 zur Verfügung zu stellen. Auch an dieser Stelle ist aber bei den Abdeckplatten gewährleistet, daß noch eine ausreichend stabile Restscherbenstärke vorhanden ist, so daß die Trittfestigkeit außer Zweifel steht.

Die Aussparungen 1221 verlaufen parallel zueinander. Sie werden jeweils von Stegen 1223 flankiert, die weniger breit sind als die entsprechenden Stege 2213 der Trägerplatten. Dies kommt auch in Fig. 1 zum Ausdruck.

Die Aussparungen 1221 sind, wie aus Fig. 1 ersichtlich ist, sehr viel tiefer ausgeprägt, als die hierzu korrespondierenden Aussparungen 2211 der Trägerplatten 22. Im vorliegenden Fall nehmen sie ungefähr zwei Drittel der Querschnittsfläche der Rohre 411 auf, dieses Verhältnis kann sich jedoch auf Wunsch sowohl zugunsten der Aussparungen der Abdeckplatten als auch zugunsten der Aussparungen der Trägerplatten verändern.

Die Aussparungen 2211 der Trägerplatten und die Aussparungen 1221 der Abdeckplatte bilden zusammen einen gemeinsamen Hohlraum, der in seiner Form und seinen Abmessungen an die gewünschte Querschnittsform der Rohre des Leitungssystems 41 angepaßt ist. Im vorliegenden Fall ist der Hohlraum größer bemessen, als die Rohre des Leitungssystems, so daß dieses mit Spiel eingelegt werden kann.

Bei einer besonderen Ausgestaltung der Erfindung ist vorgesehen, den Hohlraum mit einem vornehmlich elastischen, gut wärmeleitenden Material anzufüllen, z.B. mit Metallpulver.

Die Abdeckplatten sind im Bereich des Seitenfalzteiles 123 mit einer auf ihrer gesamten Länge durchlaufenden Ausnehmung 1233 versehen, die bei den verlegten Platten sicherstellt, daß der Deckfalzteil 224 der Trägerplatten in den Seitenfalzteil 223 der benachbarten Trägerplatte eingreifen kann. Das Ineinandergreifen der eben angesprochenen Teile ist gut aus Fig. 1b ersichtlich.

In einer schrägen, inneren Flanke 1243 an der Unterseite des Deckfalzteiles 124 sind zwei Einsenkungen 1225 für den Stift 92 eingebracht. Diese Einsenkungen korrespondieren mit den Einsenkungen 2215, die in den Trägerplatten vorgesehen sind.

Die Stifte und Einsenkungen sind Mittel, um auf Wunsch die Abdeckplatten noch besser auf den Trägerplatten zu verankern, als dies bereits ohnehin durch die gegenseitige Verfalzung der Abdeckplatten untereinander und durch die Abstützung auf den Trägerplatten sichergestellt ist.

Im Bereich des Kopffalzteiles 125 sind noch beidseitig der rinnenartigen Aussparungen 1221 Auflageflächen 1255 für eine Trockenunterlage vergesehen.

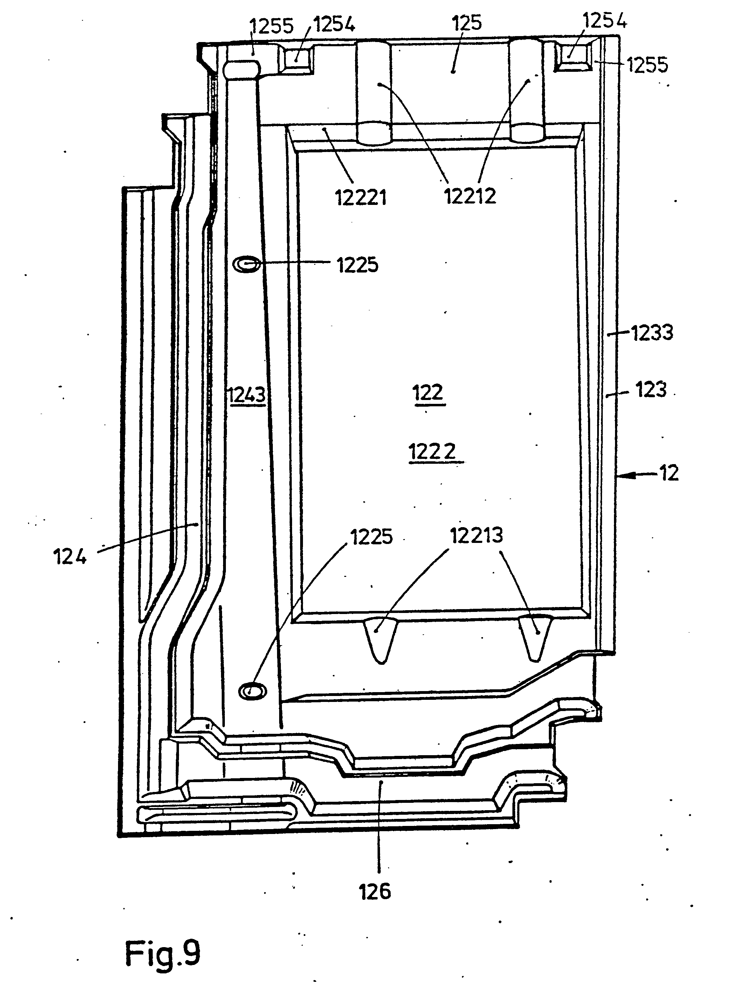

Die Abdeckplatte 12 von Fig. 9 ist im wesentlichen genauso aufgebaut wie diejenige von Fig. 8. Gleiche Teile sind deshalb mit den gleichen Bezugszeichen versehen. Nachfolgend wird lediglich noch auf die Unterschiede eingegangen Diese sind hauptsächlich in der Unterseite 122 des Mittelfeldes zu finden. Fast die gesamte frei verfügbare Fläche des Mittelfeldes wird von einer rechteckigen Aussparung 1222 ausgefüllt, die zur Aufnahme der Behälter 412 dient. Auch hier wie bei den Trägerplatten ist die Aussparung im Hinblick auf die Breite und Länge größer bemessen als der Behälter 412. Er kann infolgedessen mit Spiel eingelegt werden. Am kopfseitigen Ende besitzt er eine Abschrägung 12221 die zusammen mit rinnenartigen Ausnehmungen 12212 den notwendigen Freiraum für die Stichleitungen 432 bilden soll. Am fußseitigen Ende der Aussparung sind in Verlangerung der Aussparungen vom Kopfbereich kleine rinnenartige Aussparungen 12213 vorgesehen, durch die im verlegten Zustand der Abdeckplatte die Stichleitungen 422 treppenartig nach unten herausgeleitet sind.

Aus Fig. 1 ist ersichtlich, daß auch bei der in Fig. 9 gezeigten Abdeckplatte 12 und der ihr zugeordneten Trägerplatte 22 sich ein Hohlraum für das Leitungssystem 41 ergibt, der größtenteils von der Abdeckplatte umschlossen ist. Der Hohlraum ist höher als die Höhe h des Behälters.

Die Abdeckplatten 12 der oberen Lage 11 bilden untereinander eine eigene Schicht, bei der die Platten nach Dachziegelart nach allen Seiten hin mit den Nachbarn überlappt angeordnet sind. Da die Abdeckplatten die normale Verfalzung der sonst üblichen Dachdeckungselemente 19 aufweisen, lassen sie sich auch in der üblichen Weise untereinander verlegen.

Im vorliegenden Fall sind die Trägerplatten 22 so gestaltet, daß jeweils einer Trägerplatte eine Abdeckplatte zugeordnet ist. Dennoch bilden die beiden Lagen jeweils für sich eigenständige Schichten, die jeweils für sich selbst verlegt werden.

Im vorliegenden Fall bestehen sowohl die Abdeck-als auch die Trägerplatten aus gebranntem Ton.

Die obere Lage 11 und die getrennt hiervon bestehende Lage 21 bieten die Gewähr dafür, daß Reparatur- und Wartungsarbeiten möglichst einfach durchgeführt werden können. Bei einer eventuell notwendigen Inspektion des Leitungsnetzes genügt es, die obere Lage 11 abzuheben und das gesamte Leitungsnetz kann inspiziert werden, ohne daß der Dachunterbau und insbesondere die Verdämmung des Daches davon betroffen wäre. Es sei denn es müssten die Verbindungsleitungen 421 und 431 überprüft werden. Im übrigen liegt aber bei abgenommenen Abdeckplatten das gesamte Leitungsnetz frei zugänglich auf den Trägerplatten 22 und kann eventuell als ganze Einheit insgesamt zusammen mit den Sammelleitungen 42 und 43 ausgetauscht werden.

Beim nachträglichen Einbau in eine bereits vorhandene Dachfläche erfolgen die folgenden Schritte:

1. Die bereits vorhandene Deckung wird abgenommen,

2. die Sparren werden im vorgesehenen Bereich der Vorrichtung um das Maß a ausgeklinkt, soweit dies aus statischen Gründen möglich ist. Andernfalls wird die restliche Dachfläche durch Distanzstücke angehoben.

3. Die Dachlatten werden im abgesenkten Zustand auf die Sparren 521 angebracht.

4. Die Trägerplatten 22 und für den rechten Anschluß, die Sonderelemente 24 werden wie normale schuppenförmige Dachdeckungselemente verlegt.

5. Die Aussparungen 2212 bzw. 2211 werden mit Metallpulver od.dgl. leicht angefüllt.

6. Das Leitungssystem 41 wird auf die Trägerplatten 22 aufgelegt. Das Leitungssystem kann vormontiert sein, so daß es genügt, es auf die Trägerplatten aufzulegen und mit seinen Anschlüssen z.B. an die Leitungen des Heizungssystems des Hauses anzuknüpfen.

Sofern es nicht vormontiert ist, können die Einzelteile der Rohre bzw. der Behälter und ihrer Zuleitungen an Ort und Stelle zusammenmontiert werden.

7. Anschließend werden die Abdeckplatten 12 der oberen Lage ebenfalls wie normale schuppenförmige Dachdeckungselemente auf das Leitungssystem 11 und die untere Lage 21 der Abdeckplatten 22 aufgelegt, wobei die Aussparungen 1221 bzw. 1222 der Abdeckplatten 12 der oberen Lage das Leitungssystem 41 überdecken und sich auf den Trägerplatten 22 abstützen.

Da die Abdeckplatten die gleiche Art von Verfalzung besitzen, wie die normalen Dachdeckungselemente 19, können die Abdeckplatten ohne besondere Schwierigkeit direkt an die normalen Dachdeckungselemente 19 angelegt werden. An allen Rändern wird damit eine einwandfreie Eindeckung erzielt.

Die Fixierung der Abdeckplatten 12 der oberen Lage 11 auf den Trägerplatten 22 und den Sonderelementen 24 der unteren Lage 21 kann durch verschiedene Mittel in einfacher Weise durchgeführt werden. Die Stifte 92 können für die gegenseitige Verankerung herangezogen werden. Sie werden in die hierfür vorgesehene Einsenkungen 2215 der Trägerplatten bzw. 1225 der Abdeckplatten eingesetzt und verriegeln so die obere Lage zur unteren Lage. Die Stifte werden insbesondere bei der Verwendung des Leitungssystems mit Rohren 411 empfohlen, da Verriegelungen durch durchgreifende Aufhängenasen hier die Einfachheit der Verlegung des Rohrleitungssystems beeinträchtigen würden.

Bei den für das Behältersystem eingerichteten Abdeckplatten 12 sind Aufhängenasen 1254 vorgesehen, die bei der Verlegung der Platten in die hierfür vorgesehenen Einsenkungen bzw. Ausnehmungen 2216 eingreifen. In Fig. 3 ist dies dargestellt. Die Aufhängenasen 1254 greifen dabei durch Einklinkungen 2266 der Trägerplatten 22 hindurch und ragen bis in die Ausnehmungen 2216 im Kopfteil der überdeckten Trägerplatten hinein.

Die Trägerplatten 22 sind in ähnlicher Weise an den Dachlatten oder sonstigen Aufhängevorrichtungen befestigt. Die Aufhängenase 2221 dient als Anschlag für die Verankerung auf den Dachlatten.

Da der Witterungsschutz vornehmlich durch die Abdeckplatten 12 der oberen Lage 11 übernommen wird, ist eine dichtere Verfalzung der Trägerplatten 22 der unteren Lage 21 nicht notwendig.

Durch die Trennung der Vorrichtung in eine obere und eine untere Lage, zwischen der das Leitungssystem 41 eingefügt ist, ist der Dachaufbau umkompliziert und kann von dem üblichen Dachdecker vorgenommen werden.

Um eine hohe Trittfestigkeit der Vorrichtung zu gewährleisten, d.h., das Dach sicher begehbar zu machen, sind die rinnenartigen Aussparungen gewölbeartig ausgeführt. Die Stege der Abdeckplatten 12 stützen sich auf die entsprechenden Stege der Trägerplatten 22 ab, so daß ein inniger Kontakt zwischen den beiden Platten erfolgt und eine etwaige Trittbelastung direkt auf die Trägerplatten übergeleitet wird, ohne daß das Leitungssystem hiervon betroffen wäre.

Bei den für das Behältersystem eingerichteten Abdeckplatten sind derartige Stege an den Rändern der Behälteraussparungen vorgesehen. Diese Abdeckplatten stützen sich dort ebenfalls an den Trägerplatten ab.

Um das Maß a im Bereich des traufseitigen Anschlusses der Vorrichtung an die übrige Dachfläche zu überbrücken, ist ein unteres Form- bzw. Futterstück 23 vorgesehen. Dieses Futterstück kann aus Holz, geprägtem Metallblech oder ähnlichem bestehen und hat lediglich die Aufgabe, die Strecke zum traufseitigen Anschluß an die übrige Dachhaut zu überbrücken. Das Futterstück 23 kann eine Ausnehmung 231 aufweisen, in welche gegebenenfalls die Aufhängenase 1254 von Abdeckplatten 12 eingreifen kann.

Des weiteren kann das Futterstück 23 eine Ausnehmung 232 aufweisen, welche so ausgebildet ist, daß es unverrückbar auf der Dachlatte bzw. auf der jeweils verwendeten Unterkonstruktion aufliegt. Hierzu besitzt es ein oder mehrere Aufhängenasen bzw. Aufhängerippen 233.

Durch die Verwendung des Futterstückes 23 ist es möglich, das Leitungssystem 41 an seinem traufseitigen Ende ohne Schwierigkeiten zwischen den beiden Lagen hindurchzuführen. Voraussetzung hierfür ist, daß zum Anschluß der Vorrichtung an die übrige Dachhaut als Verbindungsstück vom Futterstück zum nächst angrenzenden normalen Dachdeckungselement 19 noch einmal die übliche Abdeckungstück 12 der oberen Lage verwendet wird. Da sich in diesem Bereich keine Trägerplatte 22 der unteren Lage 21 mehr befindet, entsteht so automatisch ein Freiraum, in dem das Leitungssystem 41 zwischen den beiden Lagen herausgeführt und die Sammelleitung 42 angeordnet werden kann. Der gleiche Freiraum ergibt sich für den firstseitigen Endbereich der Vorrichtung, wo ebenfalls keine Trägerplatte 22 der unteren Lage 12 mehr angeordnet ist und sich deshalb auch die obere Sammelleitung 43 noch oberhalb des Sparrens anordnen läßt. Hier genügt es ein normales Dachdeckungselement 19 vorzusehen. In Fig. 3 sind die Aufhängenasen 1254 eingezeichnet, welche durch die fußseitige Einklinkung 2266 der Trägerplatten 22 hindurchgreift und sich in der Ausnehmung 2216 im kopfseitigen Bereich der Trägerplatten 22 einhängt. Die Ausnehmung 2216 dient bei der horizontalen Stapelung gleichzeitig zur Aufnahme der Aufhängenasen 2221 der darüber gestapelten Trägerplatte 22.

Für eine relativ große Anzahl von Dächern ist eine sogenannte Sturmverklammerung vorgeschrieben. Um diese Sturmverklammerung in einfacher Weise bei der erfindungsgemäßen Vorrichtung anwenden zu können, sind die Einklinkungen 2265 vorhanden. Den Fig. 2 und 3 ist zu entnehmen, wie die Sturmklammern 59 durch die Einklinkungen hindurchgeführt werden können. Die Sturm klammer gleicht im wesentlichen einer bei normalen Dachdeckungselementen verwendeten Sturmklammer. Ihr vertikaler Schenkel 591 ist lediglich um die Strecke a verlängert. Diese Konstruktion hat den Vorteil, daß die Sturmklammer ebensoleicht einzusetzen ist, wie bei den normalen Dachdeckungselementen 19. Sie kann gleichfalls leicht entfernt werden, um z.B. das Leitungssystem für Reparaturarbeiten freizulegen.

Der firstseitige Anschluß wird hergestellt, indem die normalen Dachdeckungselemente 19 mit ihrer Fußverfalzung in die Kopfverfalzung der Abdeckplatten 12 der oberen Lage 11 eingedeckt werden. Die erfindungsgemäße Vorrichtung kann somit auf beliebige Hartbedeckungselemente übertragen werden.

Im allgemeinen ist es möglich, die jeweiligen Preßformhälften, mit welcher die Oberseite der Dachdeckungselemente hergestellt werden, auch zur Herstellung der Abdeckplatten 12 der oberen Lage 11 zu verwenden, da dieselben die gleichen Außenkonturen und die gleiche Oberfläche wie die normalen Dachdeckungselemente 19 haben. Durch eine spezielle Ausbildung der Rückseite der Abdeckplatten sowie der Trägerplatten ist es auch möglich, die gleichen Formlingsträger z.B. Trockenrähmchen, zu verwenden. die auch zur Herstellung der normalen Dachdeckungselemente 19 eingesetzt werden.

Schuppenförmige Bedachungselemente jeglicher Art haben die Eigenheit, daß ihre Neigung im Gegensatz zur Sparrenneigung geringer ist als diese. Hierdurch entsteht eine Stufe von Element zu Element. Aus produktionstechnischen Gründen ist es bei schuppenförmigen Bedachungselementen, wie Schindeln, Betondachsteinen, Biberschwanzziegeln, usw. nicht möglich, eine gewisse Dicke zu unterschreiten, da sonst die Elemente bei der Fertigung oder beim Transport zu stark beschädigt würden. Diese Dicke hat zur Folge, daß das Leitungssystem 41 im Bereich der Überdeckung der Trägerplatten von Element zu Element bogenförmig nach unten abgeleitet werden muß.

Bei den vorliegenden Ausführungsbeispielen sind die Kopfund Fußfalzteile der Trägerplatten nicht verfalzt. Dies dürfte im allgemeinen nicht notwendig sein, da der gesammte Schutz vor Witterungseinflüssen durch die Abdeckplatten 12 der oberen Lage 11 übernommen wird.

Die Verfalzung des Deckfalzteiles 224 zum Seitenfalzteil 223 der Trägerplatten 22 hat im wesentlichen die Aufgabe, die einzelnen Reihen in Sparrenrichtung zueinander zu fixieren und eventuell auftretendes Kondenswasser in der Seitenfalznut 2232 aufzufangen und abzuleiten. Um diese zusätzliche Schutzmaßnahme zu gewährleisten, ist die Seitenfalznut im Bereich der Absenkung fortgeführt und endet am fußseitigen Teil der überdeckenden Platte in die Seitenfalznut der unterdeckenden Platte.

Die Rohre 411 des Leitungssystems 41 können als ganze über die gesamte Länge der Vorrichtung in die Aussparungen 2211 eingelegt werden. Sie können auch aus elastischen Schläuchen bestehen, die sich von selbst im Überdeckungsbereich den zur Verfügung stehenden Verlegungsweg anpassen. Die Verwendung von Metallrohren ist nicht unbedingt Voraussetzung für die Wirtschaftlichkeit des Systems, da insbesondere bei der Verwendung von relativ schweren Baumaterialien, wie Beton, die gebrannten keramischen Massen und dgl. die Wärmedurchgangzahlen des Baumateriales in etwa dem von Plastikschläuchen entsprechen, so daß der bei weitem geringere Wärmedurchgangswiderstandswert von Metallrohren vergleichsweise wenig zusätzliche Wirkung bringt.

Durch die Aufteilung der Vorrichtung in drei Schichten, nämlich die Platten der oberen Lage, das Leitungssystem und die Platten der unteren Lage, wird eine optimale und großflächige Abführung der vorhandenen Wärme erreicht. Die Abdeckplatten, insbesondere wenn sie dunkel gefärbt sind, können bei Sonneneinstrahlung als Kollektoren wirken. Ansonsten können sie auch als Bestandteil eines Absorbersystems eingesetzt werden.

Die Trägerplatten der unteren Lage übernehmen sowohl die Funktion der Auflage für das Leitungssystem 41. Sie dienen aber auch dazu, Wärme von der Rückseite des Daches, insbesondere bei Ausbildung desselben als Kaltdach, mit abzuführen und dann das Leitungssystem weiterzugeben. Gleichzeitig dienen sie für einen rückwärtigen Schutz des Leitungssystems. Ihre Funktion als Isoliermaterial ergibt sich von selbst.

Da die Wärmeleitfähigkeit von Baustoffen, wie Beton oder keramischen Massen, sehr gering ist, da aber auf der anderen Seite ihr Wärmespeicherungsvermögen sehr hoch ist, tritt bei Sonneneinstrahlung im wesentlichen eine Amplitudenverschiebung ein. Dies bedeutet, daß bei Sonneneinstrahlung zunächst die Abdeckplatten erwärmt werden und dann die Wärme an das Leitungssystem weitergegeben wird. In kühleren Jahreszeiten spielt, da hier das System im wesentlichen als Absorbersystem wirken muß, die Größer der Oberfläche eine bedeutede Rolle, ebenso wie die Wärmeleitzahl des verwendeten Materials.

Um bei der geringen Wärmeleitzahl des zur Herstellung der Platten des Systems verwendeten Materials dennoch einen guten Wärmeübergang zu schaffen, ist erfindungsgemäß auch vorgeschlagen, die Wandungsstärke im Bereich der Oberseite der Aussparungen 1221 bzw. 1222 so gering als möglich zu halten.

Ein wesentlicher Vorteil der erfindungsgemäßen Vorrichtung besteht in seiner äußerst geringen Bauhöhe. Sie unterscheidet sich von der Normaldeckung lediglich durch das bereits erwähnte Maß a. Dies beträgt bei Betondachsteinen, Dachziegeln od.dgl. im allgemeinen 20mm bis 30mm. Es entspricht damit ungefähr der Dicke von genormten Dachlatten.

Durch die beschriebene Ausgestaltung der Abdeck- und Trägerplatten sowie des Leitungssystems erreicht die Vorrichtung insgesamt kein größeres Flächengewicht, als andere, normale Dachdeckungselemente, wie z.B. die Mönch-Nonnen-Deckung bzw. die Biberschwanzdeckung.

Wie bereits ausgeführt, ist die Außenkontur und die Oberfläche der Abdeckplatten 12 gleich der Oberfläche und Außenkontur der normalen Dachdeckungselemente 19. Hieraus ergibt sich der Vorteil, daß bei der Herstellung dieser Platten aus grobkeramischen Massen, die gleichen Preßformen verwendet werden können, wie sie bereits zur Herstellung der normalen Dachdeckungselemente 19 vorhanden sind. Zur Herstellung der Abdeckplatten der oberen Lage 11 ist in diesem Fall lediglich der Einsatz einer neuen Matrize zur entsprechenden Ausbildung der Unterseite notwendig, was die Investitionskosten zur Herstellung der Platten beträchtlich vermindert.

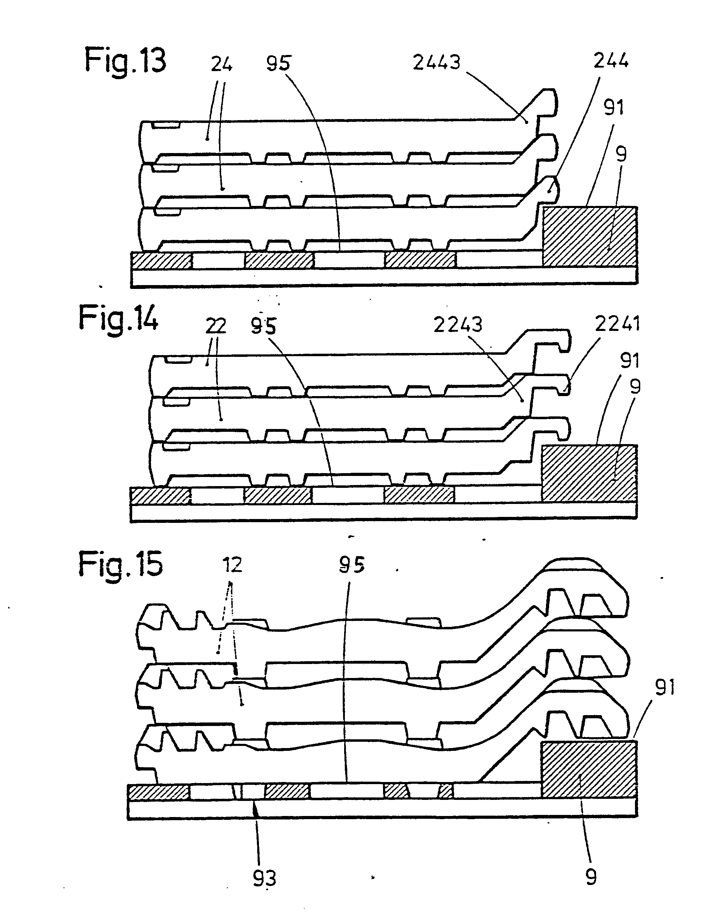

Auch die Trägerplatten 22 der unteren Lage 21 können so ausgebildet sein, daß sie ebenfalls auf diese Trockenrahmen passen. Hierzu dienen die bereits beschriebenen Stützrippen 2222. Die Fig. 13 bis 15 zeigen jeweils eine Trockenunterlage 9 und darauf übereinander gestapelte Platten. In Fig. 13 sind Sonderelemente 24 in horizontaler Weise auf der Trockenunterlage 9 gestapelt. In Fig. 14 sind in der gleichen Art von Stapelung Trägerplatten 22 zu sehen. In Fig. 15 sind die Abdeckplatten 12 horizontal übereinander auf dem Trockenrähmchen gestapelt gezeigt.

Ausschlaggebend für die rationelle Fertigung und damit für die Preisgünstigkeit der gesamten Vorrichtung ist

a) die Verwendung eines einheitlichen Trockenrähmchens, und zwar, wie im Ausführungsbeispiel dargestellt, die Verwendung des gleichen Trockenrähmchens, wie es auch für die Herstellung der normalen Dachdeckungselemente 19 verwendet wird,

b) die horizontale Stapelfähigkeit der einzelnen Platten zur einfachen Paketierung im Transport und zum einfachen Einsatz im Ofen und,

c) die Möglichkeit der Herstellung der einzelnen Platten auf den vorhandenen maschinellen Einrichtungen.

Zur Verwendung der einheitlichen Trockenunterlage 9 ist es von Wichtigkeit, daß die entsprechenden Niveaus der Trockenunterlage verwendet werden können. Im allgemeinen unterscheidet man drei Niveaus, nämlich das Deckfalzniveau 91, das Mittelfeldniveau 95 und das Niveau 93 für die Aufhängenase bzw. die Fußverfalzung.

Da die Abdeckplatten 12 der oberen Lage in ihrer Verfalzung mit den normalen Dachdeckungselementen 19 kongruent sind, ist die Auflage auf das Deckfalzniveau 91 gewährleistet. Die Auflage an das Mittelfeldniveau wird erfindungsgemäß dadurch erreicht, daß die Stege 1223 zwischen den rinnenartigen Aussparungen bzw. am Rande der Behälteraussparung 2212 so geformt sind, daß sie auf dem Mittelfeldniveau 95 der Trockenunterlage 9 aufliegen. Durch die bereits beschriebene höhere Ausbildung der Stege 1223 der Abdeckplatten gegenüber den Stegen der Trägerplatten ist die einwandfreie Auflage der Abdeckplatten auf dem Mittelfeldniveau 95 der Trockenunterlage 9 gewährleistet.

Die Auflage der Aufhängenase sowie der Fußfalzrippe auf dem Niveau 93 ergibt sich von selbst, da die gesamte Rundumverfalzung der Abdeckplatten gleich ist derjenigen der normalen Dacheckungselemente 19.

Das Auflageniveau für die Aufhängenase der Abdeckplatten ist durch das Niveau 93 fixiert. Trotzdem soll die Aufhängenase 1254 der Abdeckplatten durch die Ausklinkungen 2266 im Fußteil der Trägerplatten hindurch in Einsenkungen 2216 im Kopfteil derselben eingreifen. Um dies zu ermöglichen, wird vorgeschlagen, die Scherbenstärke im Bereich der Kopfverfalzung der Abdeckplatten soweit zu verringern, daß beim Untergriff derselben die Dicke des Fußteiles der Trägerplatten noch so dick gehalten werden kann, daß diese gut herstellbar sind und auf der anderen Seite noch einen Durchgriff der Aufhängenase ermöglichen.

Hier kommt der Gedanke begünstigend hinzu, die Mitte des Querschnitts des Leitungssystems 41 aus der gemeinsamen Berührungsebene der Abdeck- und Trägerplatten nach oben zu verlegen. Hierdurch wird die Höhe der Stege 1223 bei den Abdeckplatten erhöht. Die Absenkung der Stufe in der Überdeckung des Kopffalzbereiches wird entsprechend vermindert und dem Auflageniveau 93 für die Aufhängenase 1254 der Abdeckplatten angeglichen.

Bei den Trägerplatten 22 sind an der Unterseite die Stützrippen 2222 vorgesehen. Außerdem ist vorgesehen, daß Auflagenniveau der äußeren Deckfalzrippe 2241 dem Auflageniveau 91 der Trockenunterlage entsprechend anzugleichen. Hierdurch kann unter Vermeidung zu großer Massenanhäufung die Rückseite der Trägerplatte 22 so gestaltet werden, daß sie ohne weiteres der jeweiligen Trockenunterlage angeglichen werden kann.

Bei der Anordnung der Stützrippen 2222 ist lediglich darauf zu achten, daß diese bei der horizontalen Stapelung auf den Stegen 2213 zu liegen kommen.

Um die horizontale Stapelung im Bereich des Seitenfalzteiles zu gewährleisten, ist die Höhe der Seitenfalzrippen 2231 sowie der Stützrippe 2222 im Bereich des Seitenfalzteiles zuzüglich der Scherbenstärke gleich der Höhe der Unterkante Stützrippe 2222 zur Oberkante der Stege 2213 zwischen den rinnenartigen Aussaprungen und gleich der Vertikalhöhe der inneren Deckfalzflanke 2243.

Die Differenz zwischen der Unterseite der Stützrippen sowie der Unterseite der äußeren Deckfalzrippe 2241 ist gleich dem Unterschied des Niveaus Deckfalzteil 91 zu Niveaumittelfeld 95 der Trockenunterlage 9.

Sinngemäß gilt das gleiche für das rechte Sonderelement 24. Die Ausbildung im Bereich des Seitenfalzteiles und dem Bereich des Mittelfeldteiles entspricht der Ausbildung der Trägerplatte 22. Der Deckfalzteil kann durch Weglassen der äußeren Deckfalzrippe 2241 gestaltet werden, so daß die Höhendifferenz der Unterseite der Deckfalzrippe 244 des Sonderelementes 24 zur Unterseite der Stützrippen 2222 gleich der Höhendifferenz zwischen Deckfalzniveau 91 und Mittelfeldniveau 95 der Trockenlage ist. Bei Formlingen aus keramischen Massen oder Beton kann der Deckfalzteil im noch rohen Zustand einfach abgeschnitten werden und man erhält in einfacher Weise das Sonderelement 24.

Zur Wahrung der horizontalen Stapelfähigkeit des Sonderelemente 24 im Bereich des Deckfalzes wird vorgeschlagen, die Scherbenstärke im Bereich der Deckfalzflanke 2443 in vertikaler Richtung gleich der Höhe der Differenz zwischen dem Deckfalzniveau 91 und dem Mittelfeldniveau 95 der Trockenunterlage 9 zu halten. Sollte es aus modelltechnischen oder auch aus anderen Gründen nicht möglich sein, hier eine ebene Auflagefläche zu schaffen, kann an der Unterseite der Deckfalzflanke 2443 eine schräge Auflagefläche vorgesehen werden, deren Neigungswinkel gleich dem Neigungswinkel der Oberseite der Deckfalzflanke 2443 ist. Ein seitliches Verschieben wird durch eine entsprechende Ausbildung der Aufhängenasen gewährleistet, die in entsprechende Aussenkungen eingreifen, so daß ein seitliches Auswandern des Stapels beim Paketieren usw. verhindert wird.

Um dies zu verdeutlichen werden die Ausnehmungen 2216 bei den Trägerplatten 22 größer dargestellt als dies nur für die Aufnahme der Aufhängenase 1254 notwendig wäre. Trotzdem ist es ohne weiteres möglich, die Ausnehmungen 2216 der Trägerplatten 22 ebenso groß zu halten, da der Anschlag der Aufhängenase 1254 in jedem Falle gewährleistet ist. Die Ausnehmungen 2216 können je nach Aufbau auch als Durchbrüche ausgebildet sein.

Die Erfindung ist nicht auf die gezeigten Ausführungsbeispiele beschränkt. So kann z.B. das Behälter enthaltende Leitungssystem 41 in Anlehnung an die Röhren 411 ebenfalls elementübergreifend ausgebildet sein. Bei einer derartigen Ausführungsform können die Behälter so breit und/oder so lang sein, daß sie elementübergreifend mehrere Trägerplatten überdecken. Andererseits können auf einer einzigen Trägerplatte auch mehrere Behälter angeordnet werden. Es besteht insbesondere die Möglichkeit, für das kleinste bekannte Dachdeckungselement einen Modulbehälter zu entwerfen und diesen Modulbehälter bei den verschiedenen Dachziegelmodellen dann ein- oder mehrfach auf je einer Trägerplatte unterzubringen. Auf diese Weise könnten mit einem Behältertyp mehrere Dachziegelmodelle ausgestattet werden. Die Produktion der Behälter verbilligt sich dadurch.

Bei einer anderen Ausgestaltung der Erfindung kann vorgesehen werden, die Trägerplatten als großflächige Tafelelemente zu gestalten. Dies bringt insbesondere bei kleinflächigen Dachdeckungselementen, wie z.B. bei den Bibern, den Vorteil, daß sich die Verlegung der Trägerplatten weiter vereinfacht. Die Tafelelemente können die gleichen Formelemente aufweisen, wie einzeln geformte Trägerplatten, so daß an ihren Rändern ohne weiteres noch einzeln geformte Trägerplatten angefügt werden können. Im Normalfall werden die Tafelelemente genauso aussehen, wie eine gewisse Anzahl von in einem Rechteck verlegten Trägerplatten.

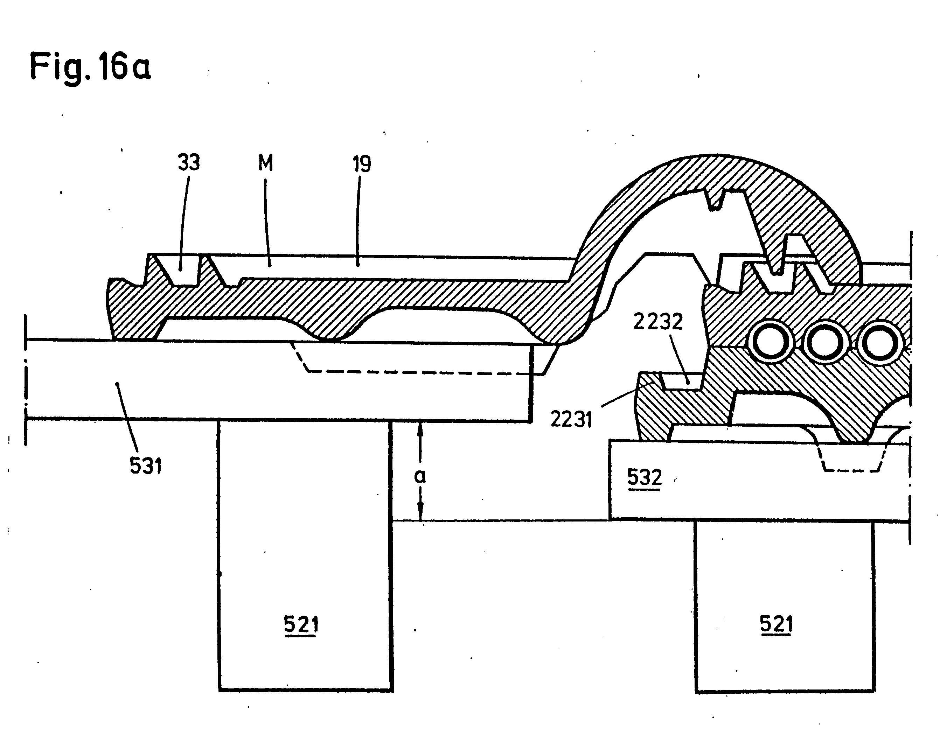

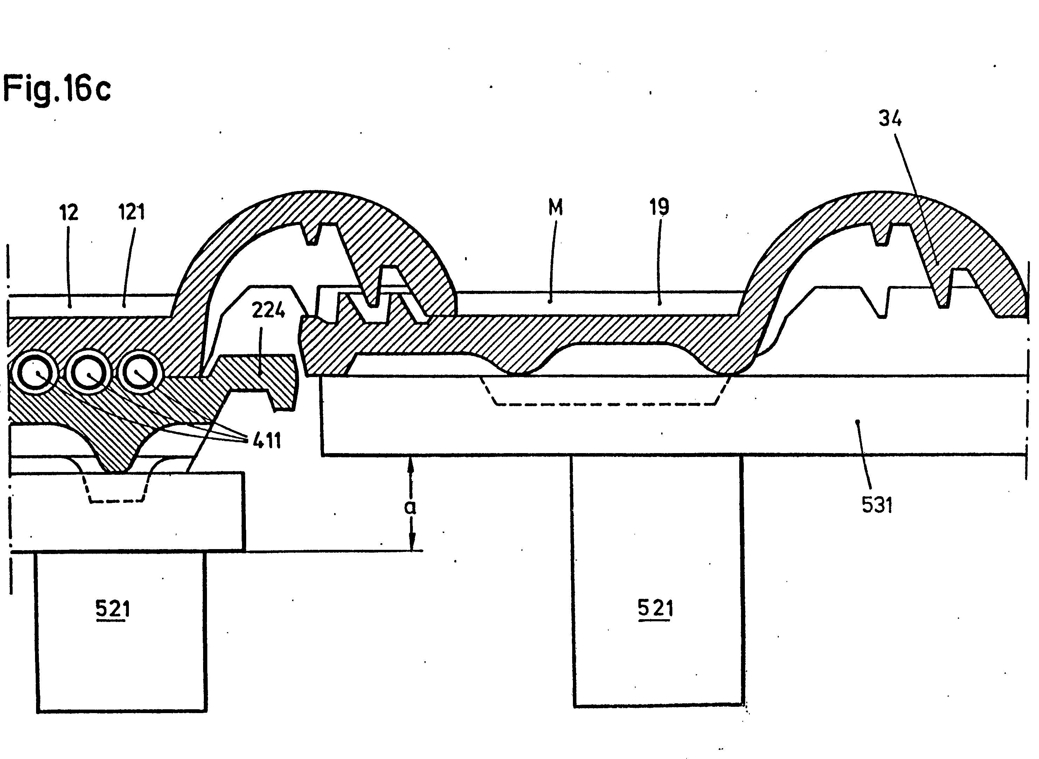

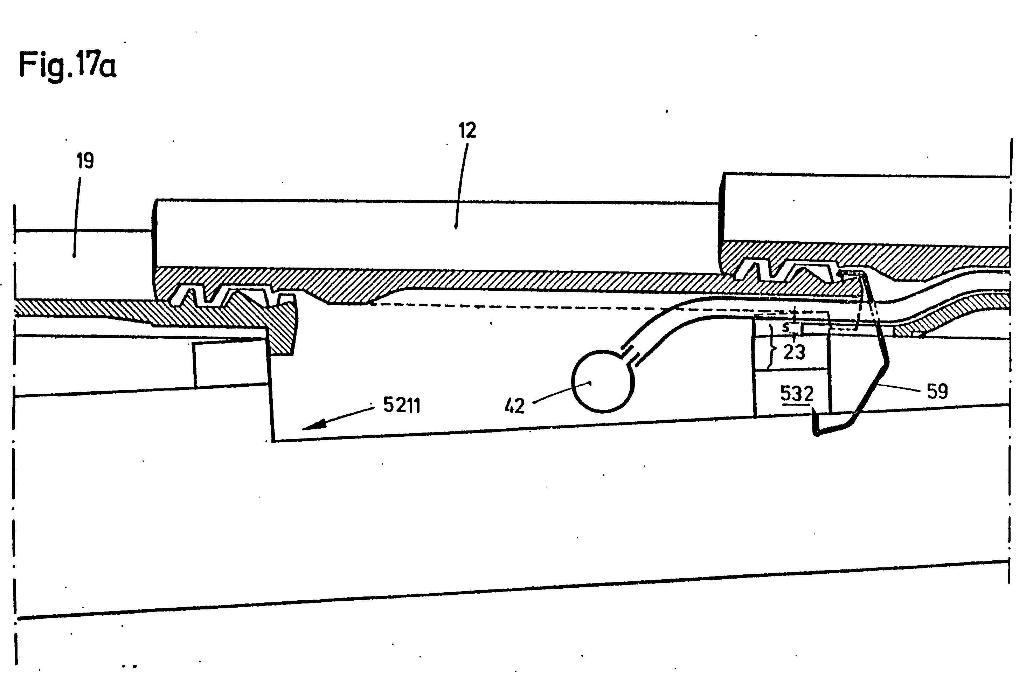

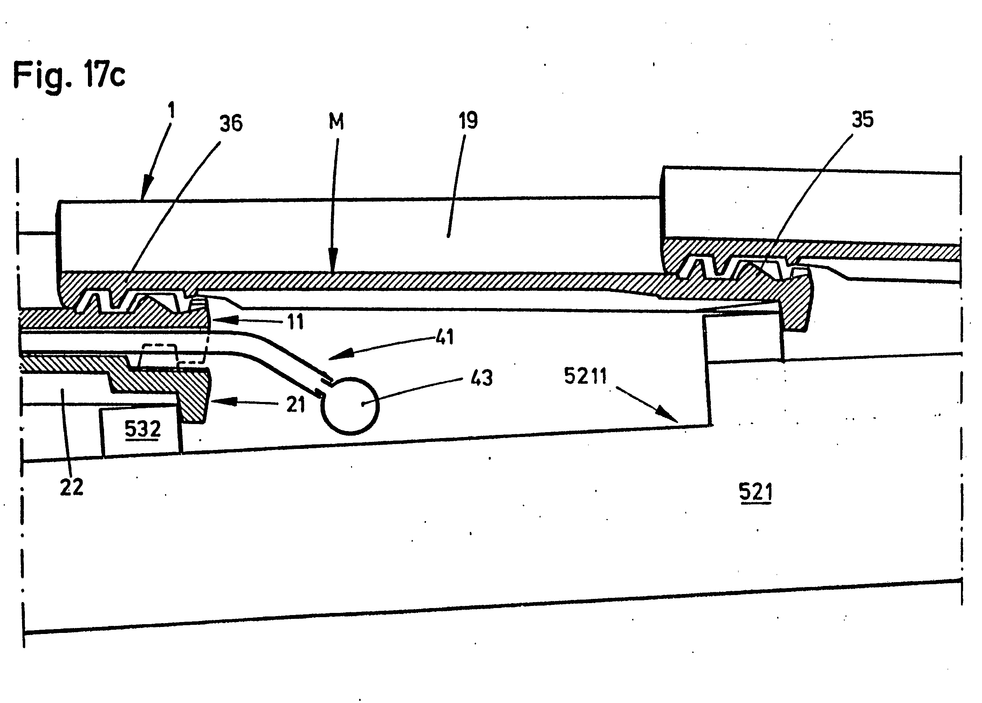

Die Fig. 16a bis 16c, 17a bis 17c geben eine Gesamtübersicht über eine dritte Ausführungsform einer Vorrichtung 1, zur Gewinnung von Heizwärme aus Umweltenergie. Sie ist in ein Dach 2 integriert, das normale, handelsübliche Dachdeckungselemente umfaßt, wie sie in den Fig. 16a und 16c bzw. 17a und 17c am Rande der Darstellung zu sehen sind. Es ist zu erkennen, daß die normalen Dachdeckungselemente eine Seitenverfalzung 33 am kopfseitigen Rand der Oberseite eine Kopfverfalzung 35 und am seitlichen Rand an der Unterseite eine Deckverfalzung 34 aufweisen. Bei den gezeigten handelsüblichen Dachdeckungselementen 19 handelt es sich um eine Flachdachpfanne. Das Mittelfeld M ist vom kopfseitigen zum fußseitigen Rand hin längs strukturiert.

Die normalen Dachdeckungselemente 19 sind auf Dachlatten 531 aufgelegt und werden auf diesen mit Hilfe von Aufhängenasen gehalten. Die Dachlatten sind von Sparren 521 unterstützt, die in der üblichen Weise quer zu den Dachlatten angeordnet sind.

Die Vorrichtung 1 weist eine obere Lage 11 von Abdeckplatten 12 auf, die im wesentlichen die gleichen Kopf-, Seiten-, Deck- und Fußverfalzung besitzen wie die normalen Dachdeckungselemente 19 und mit diesen problemlos eingedeckt werden können. Dies ist insbesondere in den Fig. 16a bis 16c und 17a bis 17c gezeigt. Auch die für den Betrachter sichtbare Oberseite 121 der Abdeckplatten 12 ist genauso gestaltet, wie die Oberseite der normalen Dachdeckungselemente 19. Die Abdeckplatten lassen sich ohne Schwierigkeiten mit den benachbarten normalen Dachdeckungselementen 19 verlegen. Im Prinzip ist die dritte Ausführungsform genauso aufgebaut, wie die bereits beschriebene erste und zweite Ausführungsform. Um Wiederholungen zu vermeiden, wird nachfolgend nur noch auf die unterschiedlichen Merkmale hingewiesen und im übrigen auf die Beschreibung der ersten und zweiten Ausführungsform Bezug genommen. Dies gilt auch für die übrigen Ausführungsformen.

Bei dem gezeigten Leitungssystem verlaufen die Schläuche in Sparrenrichtung mit einem geringen Abstand nebeneinander und folgen dem Treppenprofil der dachziegelartig verlegten Trägerplatten 22. Sie sind elementübergreifend verlegt, d.h., sie erstrecken sich in ihrer Länge über mehr als eine Abdeckplatte. An ihren oberen Enden sind sie an eine firstseitige Sammelleitung 43 angeschlossen, an ihren unteren Enden an eine traufseitige Sammelleitung 42. Die Sammelleitungen verlaufen in Dachlattenrichtung und sind über durch den Dachunterbau geführte Verbindungsleitungen mit der Heizungsanlage verbunden. Die Schläuche 411 können zusammen mit den Sammelleitungen als insgesamt verlegbare Einheit ausgebildet sein.

Im gezeigten Fall ist jeder Schlauch 411 einfach zwischen der firstseitigen Sammelleitung 43 und der traufseitigen Sammelleitung 42 geführt. Diese Anordnung kann verlassen werden, soweit die Schläuche z.B. auch über den First auf die andere Seiten des Daches geführt werden sollen. In diesem Fall ist es denkbar, die bislang firstseitige Sammelleitung ebenfalls in Traufnähe zu verlegen. Andererseits ist es auch denkbar, die Schläuche mäanderartig in mehreren Schlaufen über die Dachfläche zu führen, ehe sie in Sammelleitungen enden. Beim Einsatz sowohl des Absorbersystemes als auch eines Kollektorsystemes wird die Länge der Schläuche, Rohre usw. maßgeblich davon bestimmt sein, ab wann in denselben eine genügend große Temperaturdifferenz erreicht wird, die wirtschaftlich genutzt werden kann. Abhängig von der gewünschten Länge der Schläuche zwischen den beiden Sammelleitungen können beide Sammelleitungen oder auch nur eine derselben irgendwo zwischen dem firstseitigen und dem traufseitigen Ende der Vorrichtung angeordnet werden. Natürlich ist es auch denkbar, entweder beide Sammelleitungen im Firstbereich oder im Traufbereich nebeneinander anzuordnen. Die vorteilhafteste Anordnung der Sammelleitungen ist u.a. abhängig von der Größe des Daches, dem Leitungsquerschnitt der Schläuche, Rohre usw. und der zu erzielenden Temperaturdifferenz des Fluides innerhalb der

**0 026 862**

Vorrichtung.

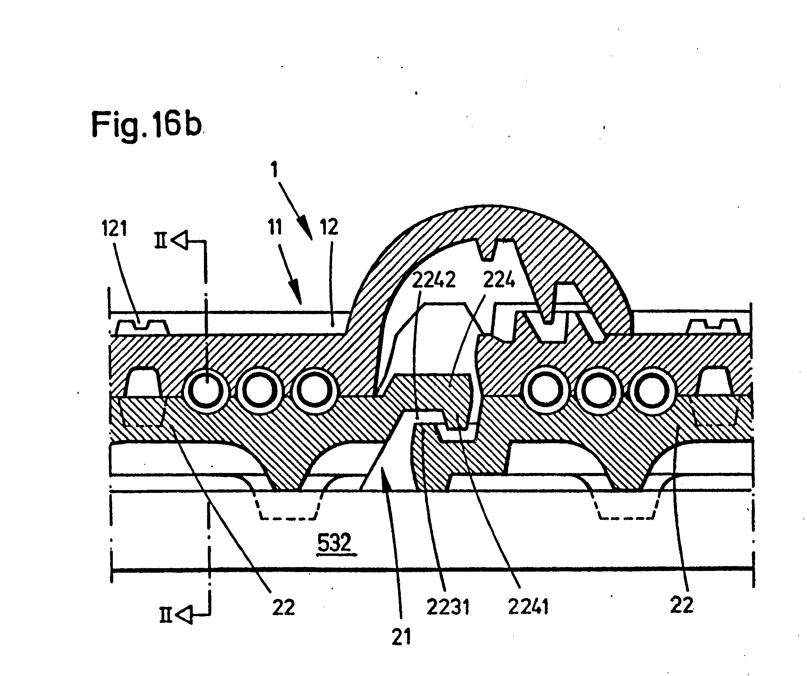

Den Fig. 16, 17 und 18 kann entnommen werden, daß die Trägerplatten 22 miteinander dachziegelartig verlegt werden. Um die Verlegung der unteren Lage 21 möglichst einfach zu gestalten und komplizierte seitliche Anschlüsse zu vermeiden, besitzen die Trägerplatten 22 an ihrer Oberseite eine einfache Seitenverfalzung bestehend aus einer äußeren Seitenfalzrippe 2231 und einer Seitenfalznut 2232. Beide sind gut aus Fig. 16 zu erkennen. In die Seitenfalznut 2232 greift eine äußere, an der Unterseite der Trägerplatten angeordnete Deckfalzrippe 2241 ein. Es ergibt sich dadurch ein einfacher, aber wirksamer Verschluß benachbarter Trägerplatten. Beim Verlegen ist der richtige gegenseitige Abstand der Trägerplatten gewährleistet, wenn die Deckfalzrippe 2241 der einen Trägerplatte in die Seitenfalznut 2232 der anderen eingreift.

Die Deckfalzrippe 2241 wird von einer Deckfalznut 2242 flankiert, in die bei verlegten Trägerplatten die Seitenfalzrippe 2231 hineinragt. Sowohl die Deckfalzrippe 2241 als auch die Deckfalznut 2242 sind in einem Deckfalzteil 224 angeordnet, der sich von einem fußseitigen Eckausschnitt 2245 bis zu einem am kopfseitigen Eckausschnitt 2244 erstreckt und dabei auf die ganze Länge im wesentlichen den gleichen Querschnitt aufweist. Der Fig.16 kann unschwer entnommen werden, daß der Deckfalzteil 224 sich über das Niveau der restlichen Trägerplatte erhebt.

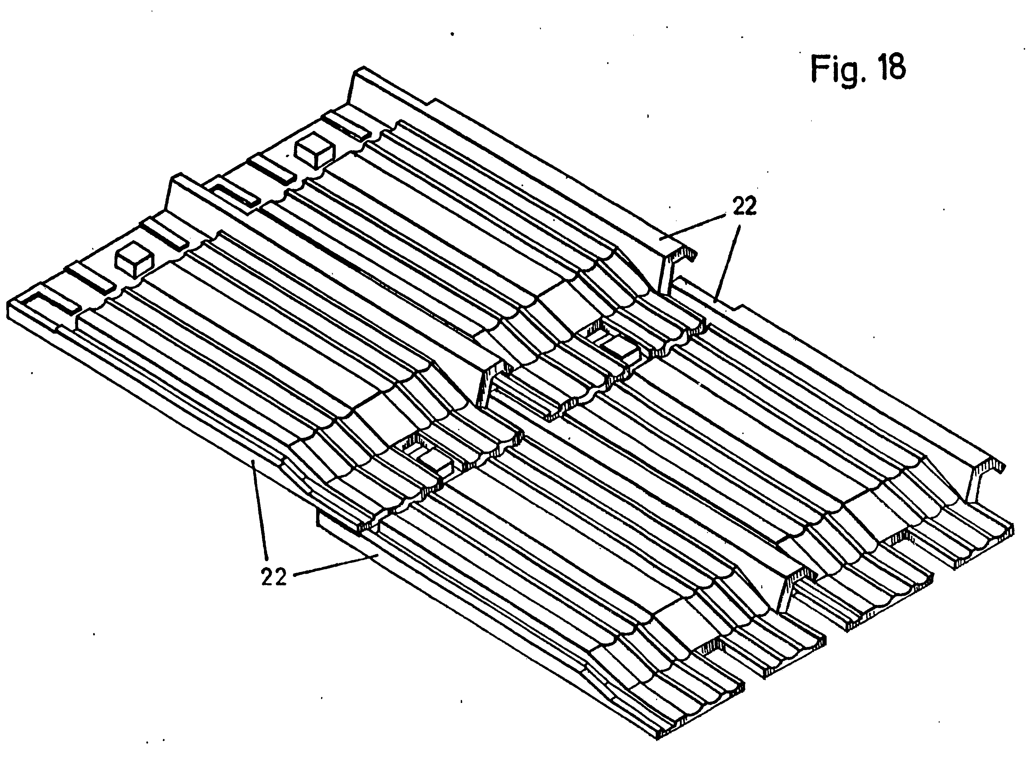

In die Seitenfalznut 2232 mündet eine gegenüber die restliche Oberseite 221 der Trägerplatte abgesenkte Auflagefläche 2255, die mehrere Funktionen hat. Sie soll zunächst eventuell anfallendes Kondenswasser in die Seitenfalznut 2232 entwässern. Darüber hinaus dient sie, wie ihr Name schon sagt, als Trägerfläche. Sie ist so gestaltet, daß sie den überlappenden Fußfalzteil einer sie überdeckenden Trägerplatte aufnehmen kann. Sie ist deshalb gegenüber der restlichen Oberseite 221 mindestens um das Maß der Stärke s des Fußfalzteiles der Trägerplatten abgesenkt, so daß wie Fig. 18 entnommen werden kann, bei verlegten Trägerplatten an den Stoßstellen der einander überlappenden Trägerplatten ein ebener Übergang erreicht ist.

In der Auflagefläche 2255 sind Rippen 2251 vorgesehen, um das überlappende Fußfalzteil 226 der überdeckenden Trägerplatte nicht direkt, sondern etwas abgehoben, auf der Auflagefläche aufliegen zu lassen. Die Rippen 2251 dienen dazu, daß von der überdeckenden Trägerplatte eventuell abtropfende Kondenswasser auf die Auflagefläche und damit in die Seitenfalznut der unterdeckten Trägerplatte abzuführen. Darüber hinaus werden durch die Rippen 2251 eventuell vorhandene Verkrümmungen aufgefangen. Die seitliche Begrenzung der Auflagefläche wird einerseits durch die im Kopfbereich etwas abgesenkte Seitenfalzrippe 2231 erreicht, andererseits durch den bis zum oberen Ende durchlaufenden und gegenüber der Auflagefläche schräg aufsteigenden Deckfalzteil im Bereich des Eckausschnittes 2244.

Ungefähr in der Mitte zwischen dem Seiten- und Deckfalzteil befindet sich auf der Auflagefläche 2255 ein Zentrierkopf 2256, der gegenüber der Auflagefläche höckerartig ungefähr bis auf die Höhe der restlichen Oberseite 221 herausragt. Er ist aus später noch zu erläuternden Gründen vom freien Rand des Kopffalzteiles in Richtung auf die restliche Oberseite 221 unter Belassung eines Spaltes hingerückt.

An der Untersesite des Kopfbereiches befinden sich quer zur Längserstreckung der Trägerplatten zwei Aufhängenasen 2221. Zwischen jeder Aufhängenase und dem tiefer gelegten Fußfalzteil 226 erstreckt sich je eine Stützrippe 2222.

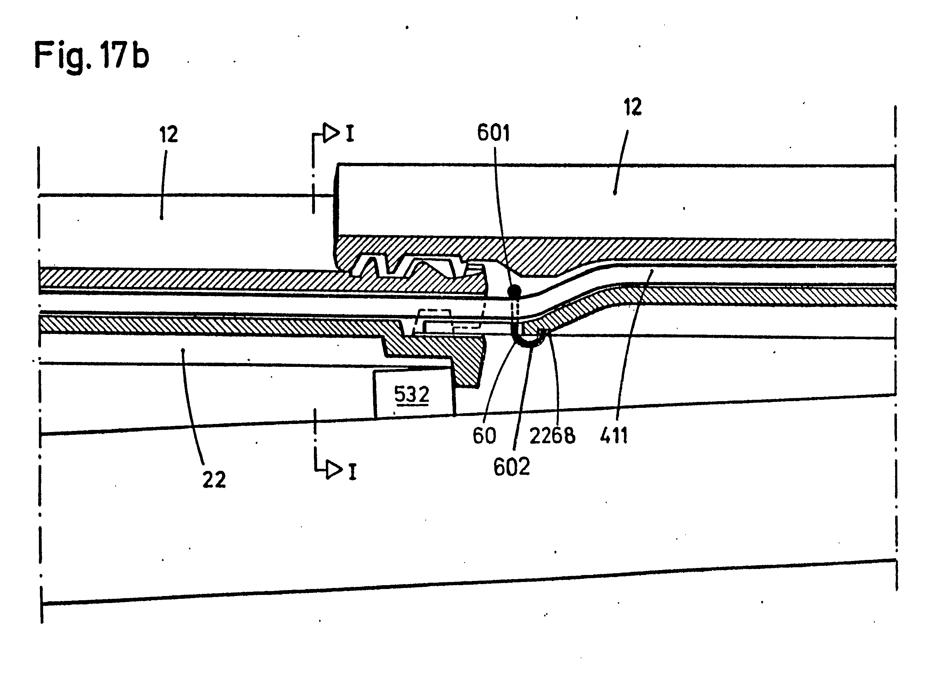

Die treppenartige Absenkung des Fußfalzteiles 226 gegenüber der Oberseite 221 eines Mittelfeldes der Trägerplatten ist gut aus den Fig. 17 und 18 zu erkennen. Sie dient dazu, im Überlappungsbereich in Höhe der Dachlatten eine allzu große Materialanhäufung zu vermeiden und einen ausreichenden Durchgang für das Leitungssystem 41 zu schaffen. Trotz der Absenkung ist sichergestellt, daß das Fußfalzteil 266 noch eine ausreichende Restscherbendicke aufweist und belastbar ist.

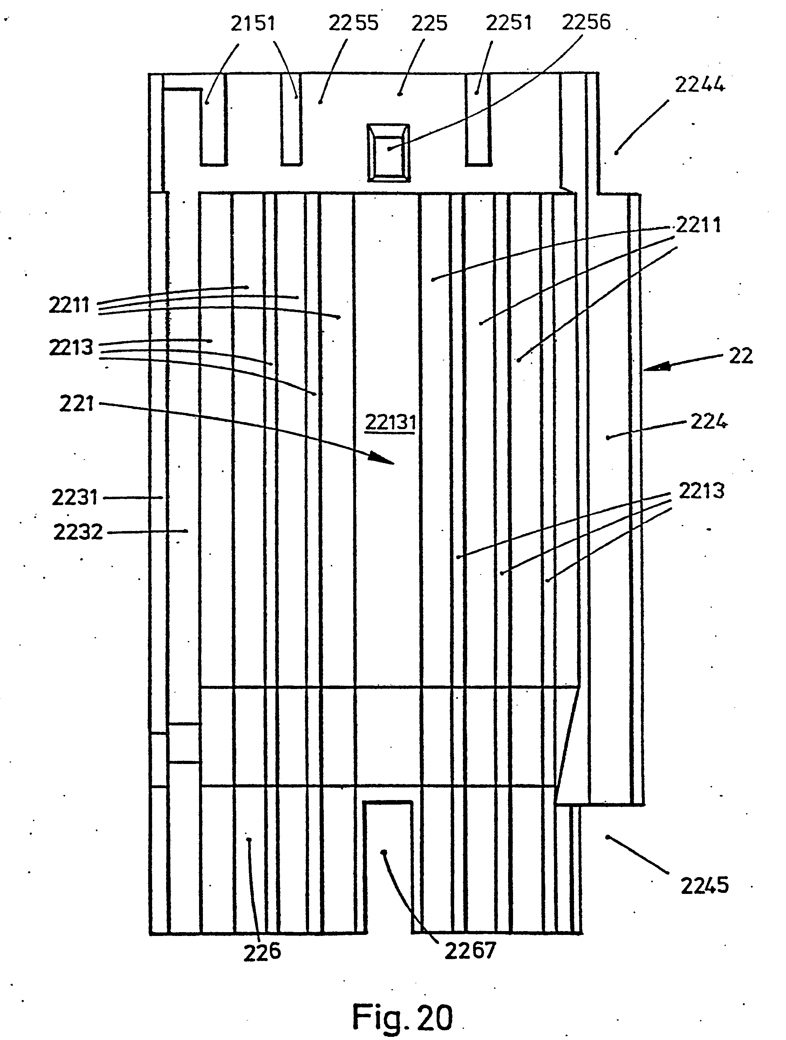

Am fußseitigen Ende besitzen die Trägerplatten eine gemeinsame Einklinkung 2267 für die Aufnahme mehrerer Gegenstände. Die Einklinkung ist, wie Fig. 20 entnommen werden kann, in direkter Verlängerung zum Zentrierkopf 2256 in der Längsmitte der Trägerplatten angeordnet. Dies hat seinen guten Grund. Bei der Eindeckung der Trägerplatten untereinander soll die überdeckende Trägerplatte mit ihrem Fußfalzteil soweit auf die Auflagefläche 2255 der überdeckten Trägerplatte aufgeschoben werden, daß der Zentrierkopf 2256 der überdeckten Trägerplatte in der Einklinkung 2267 der überdeckenden Trägerplatte zu liegen kommt. Auf diese Weise ergibt sich eine seitliche Verringerung der Trägerplatten untereinander und das Eindecken wird erleichtert. Als Führungen beim Eindecken dienen darüber hinaus noch die am Rande der Auflagefläche vorhandene Seitenfalzrippe 2231 und der bereits erwähnte, nahe der Eckaussparung 2244 vorhandene Teil des Deckfalzteiles 224. Wie den Fig. 17a und 17b entnommen werden kann, dient die Einklinkung auch dazu, eine Sturmklammer 59 und einen Haltebügel 60 aufzunehmen. Bei verlegten Trägerplatten umgreift die Sturmklammer mit ihrem einen Ende das Kopffalzteil der Trägerplatte, mit ihrem anderen Ende ist sie in der Dachlatte 532 durch Eindrücken verankert.

Der Haltebügel 60 dient zur vorübergehenden oder permanenten Halterung der Rohre, bzw. Schläuche 411. Er ist T-förmig gestaltet, wobei der waagrechte T-Balken 601 zum Niederhalten der Schläuche 411 dient, während der vertikale T-Balken 602 an seinem Ende U-förmig umgebogen ist und in einer am Fußfalzteil 226 vorhandenen, der Einklinkung 2267 direkt vorgeordneten Vertiefung 2268 eingreift.

Die Einklinkung 2267 besitzt eine größere Länge L als die Auflagefläche 2255. Im verlegten Zustand verbleibt deshalb bei den einander überlappenden Trägerplatten noch eine Restöffnung, durch die der Haltebügel 60 und die Sturmklammer 59 hindurchgeführt werden können.

Die Einklinkung 2267 dient darüber hinaus zur Aufnahme einer Aufhängenase der Abdeckplatten 12, wie dies später noch erläutert werden wird.

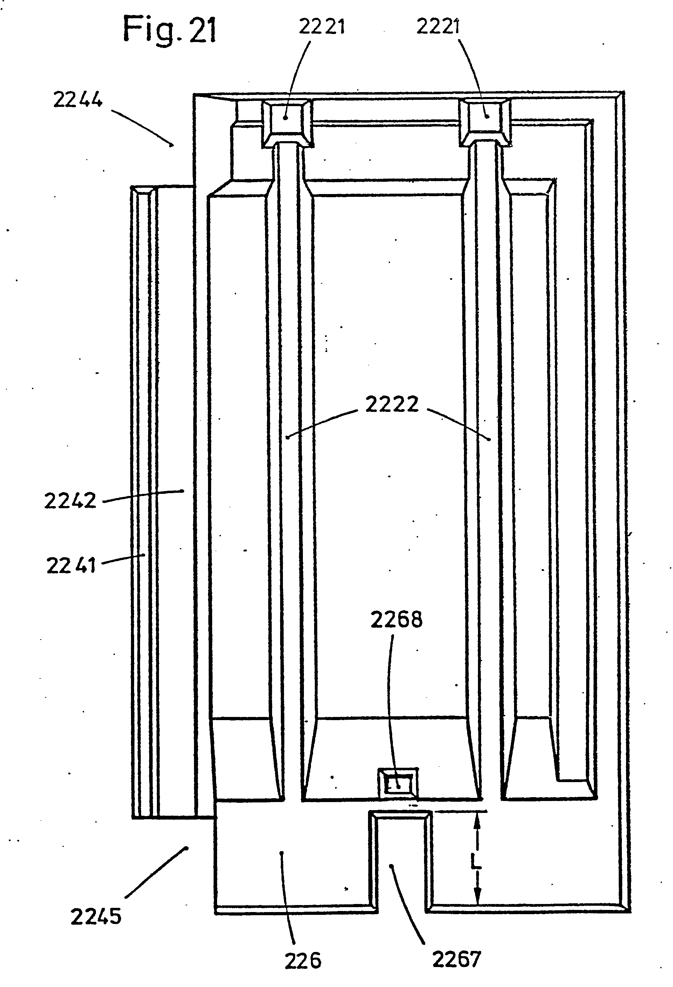

Aus Fig. 21 ist zu erkennen, daß die Unterseite des Fußfalzteiles 226 eben ausgebildet ist. In der Fig. 20 ist die Oberseite der Trägerplatten 22 dargestellt. Im vorliegenden Fall erstrecken sich in Längsrichtung der Trägerplatten 22, also vom Kopffalzteil 225 zum Fußfalzteil 226 insgesamt sechs rinnenartige Aussparungen 2211, die parallel nebeneinander laufen. Sie sind über der Oberseite 221 des gesamten Mittelfeldes eben geführt und folgen zum Fußfalzteil 226 hin der treppenartigen Absenkung des Fußteiles.

Zwischen den Aussparungen 2211 und am Rande der Oberseite 221 des Mittelfeldes sind dieselben von Stegen 2213 flankiert.

Fig. 21 ist zu entnehmen, daß die Einklinkung 2267 symmetrisch zwischen den Rinnen in einem mittleren Stegband 22131 angeordnet ist. Die rinnenartigen Aussparungen 2211 sind so geformt, daß die Schläuche 411 mit Spiel eingelegt werden können. Ihre Tiefe ist im vorliegenden Fall so bemessen, daß sich die Schläuche 411 lediglich mit ungefähr einem Drittel versenken lassen. Den restlichen Teil der Querschnittsfläche ragen sie über das Niveau der Trägerplatten 22 heraus.

Im verlegten Zustand bilden die untere Lage 21 der Trägerplatten 22 eine eigene Schicht. Die jeweils darüber angeordneten Trägerplatten überlappen mit ihrem Fußfalzteil 226 den Kopffalzteil 225 der darunterliegenden Trägerplatten.

Nun zu den Abdeckplatten. Die Oberseite der Abdeckplatten wurde bereits eingangs beschrieben. An ihrer Rückseite 122 weisen sie ein ebenso gestaltetes Deckfalzteil 124 und Fußfalzteil 126 auf, wie die normalen Dachdeckungselemente 19. Das rückseitige Mittelfeld ist jedoch dem besonderen Verwendungszweck angepaßt, d.h., es ist zur Aufnahme des Leitungssystems 41 vorbereitet. So erkennt man, daß die Rückseite 122 mit ebensolchen rinnenartigen Ausnehmungen 1221 versehen ist, wie sie bereits von der Oberseite der Trägerplatten 22 bekannt sind.

Die Aussparungen 1221 verlaufen ebenso in Längsrichtung der Abdeckplatten, d.h., vom Kopffalzteil 125 zum Fußfalzteil 126. Sie enden kurz vor der dort angeordneten Fußverfalzung mit kegelartigen Spitzen 12211.

Im vorliegenden Fall sind zu beiden Seiten einer Mittelrinne 1226 je drei Aussparungen parallel zueinander angeordnet. Sie werden jeweils von Stegen 1223 flankiert, die weniger breit sind als die entsprechenden Stege 2213 der Trägerplatten. Dies kommt auch in Fig. 16 zum Ausdruck. Am kopfseitigen Ende der Mittelrinne 1226 besitzt die Abdeckplatte eine zentrale Aufhängenase 1254, die in verlegten Zustand bei der entsprechenden, darunter befindlichen Trägerplatte in die Einklinkung 2267 eingreift und damit die Abdeckplatte auf der Trägerplatte verankert.

Die Aussparungen 1221 sind, wie aus Fig. 16 ersichtlich ist, sehr viel tiefer ausgeprägt, als die hierzu korrespondierenden Aussparungen 2211 der Trägerplatten 22. Im vorliegenden Fall nehmen sie ungefähr zwei Drittel der Querschnittsfläche der Rohre 411 auf, dieses Verhältnis kann sich jedoch auf Wunsch sowohl zu Gunsten der Aussparungen der Abdeckplatten als auch zu Gunsten der Aussparungen der Trägerplatten verändern.

Die Rohre 411 des Leitungssystems 41 können als ganze über die gesamte Länge der Vorrichtung in die Rinnen 2211 eingelegt werden. Sie können auch aus elastischen Schläuchen bestehen, die sich von selbst im Überdeckungsbereich den zur Verfügung stehenden Verlegungsweg anpassen. Die Verwendung von Metallrohren ist nicht unbedingt Voraussetzung für die Wirtschaftlichkeit des Systems, da insbesondere bei der Verwendung von relativ schweren Baumaterialien, wie Beton, die gebrannten keramischen Massen und dgl. die Wärmedurchgangszahlen des Baumateriales in etwa dem von Plastikschläuchen entsprechen, so daß der bei weitem geringere Wärmedurchgangswiderstandswert von Metallrohren vergleichsweise wenig zusätzliche Wirkung bringt.

Durch die Aufteilung der Vorrichtung in drei Schichten, nämlich die Platten der oberen Lage, das Leitungssystem und die Platten der unteren Lage, wird eine optimale und großflächige Abführung der vorhandenen Wärme erreicht. Die Abdeckplatten, insbesondere wenn sie dunkel gefärbt sind, können bei Sonneneinstrahlung als Kollektoren wirken. Ansonsten können sie auch als Bestandteil eines Absorbersystems eingesetzt werden.

Die Trägerplatten der unteren Lage übernehmen die Funktion der Auflage für das Leitungssystem 41. Sie dienen aber auch dazu, Wärme von der Rückseite des Daches, insbesondere bei Ausbildung desselben als Kaltdach, mit abzuführen und dann das Leitungssystem weiterzugeben. Gleichzeitig dienen sie für einen rückwärtigen Schutz des Leitungssystems. Ihre Funktion als Isoliermaterial ergibt sich von selbst.

Da die Wärmeleitfähigkeit von Baustoffen, wie Beton oder keramische Massen, sehr gering ist, da aber auf der anderen Seite ihr Wärmespeicherungsvermögen sehr hoch ist, tritt bei Sonneneinstrahlung im wesentlichen eine Amplitudenverschiebung ein. Dies bedeutet, daß bei Sonneneinstrahlung zunächst die Abdeckplatten erwärmt werden und dann die Wärme an das Leitungssystem weitergegeben wird. In kühleren Jahreszeiten spielt, da hier das System im wesentlichen als Absorbersystem wirken muß die Größe der Oberfläche eine bedeutende Rolle, ebenso wie die Wärmeleitzahl des verwendeten Materials.

Um bei der geringen Wärmeleitzahl des zur Herstellung der Platten des Systems verwendeten Materials dennoch einen guten Wärmeübergang zu schaffen, ist erfindungsgemäß auch vorgeschlagen, die Wandungsstärke im Bereich der Oberseite der Aussparungen 1221 bzw. 1222 so gering als möglich zu halten.

Durch die beschriebene Ausgestaltung der Abdeck- und Trägerplatten sowie des Leitungssystems erreicht die Vorrichtung insgesamt kein größeres Flächengewicht, als andere, normale Dachdeckungselemente, wie z.B. die Mönch-Nonnen-Deckung bzw. die Biberschwanzdeckung.

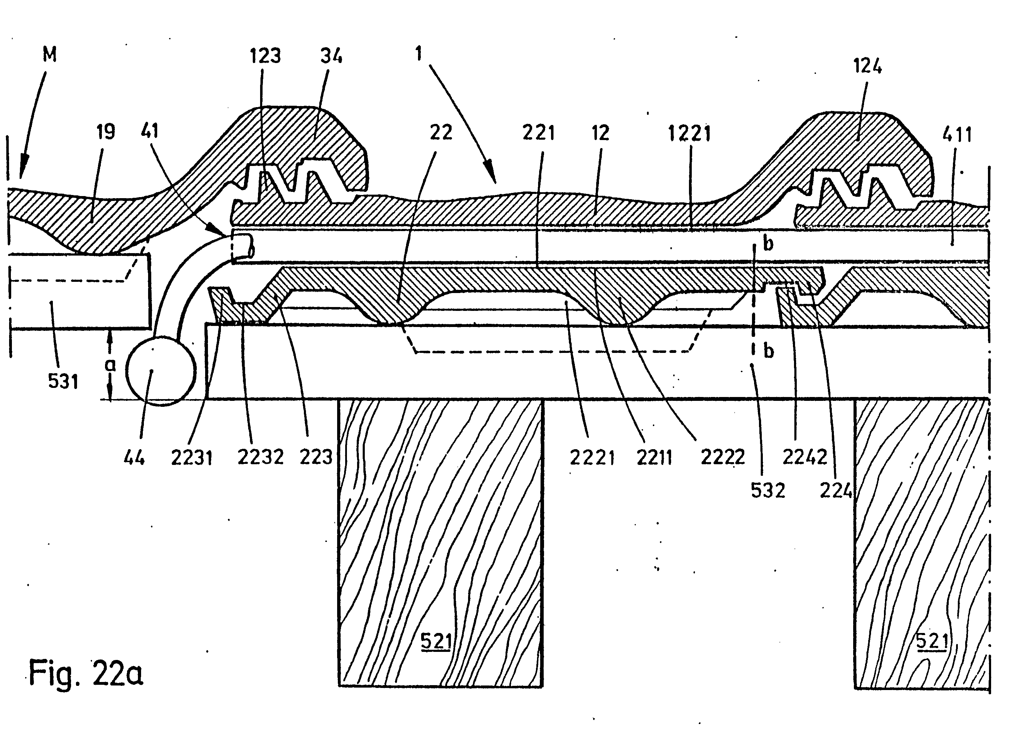

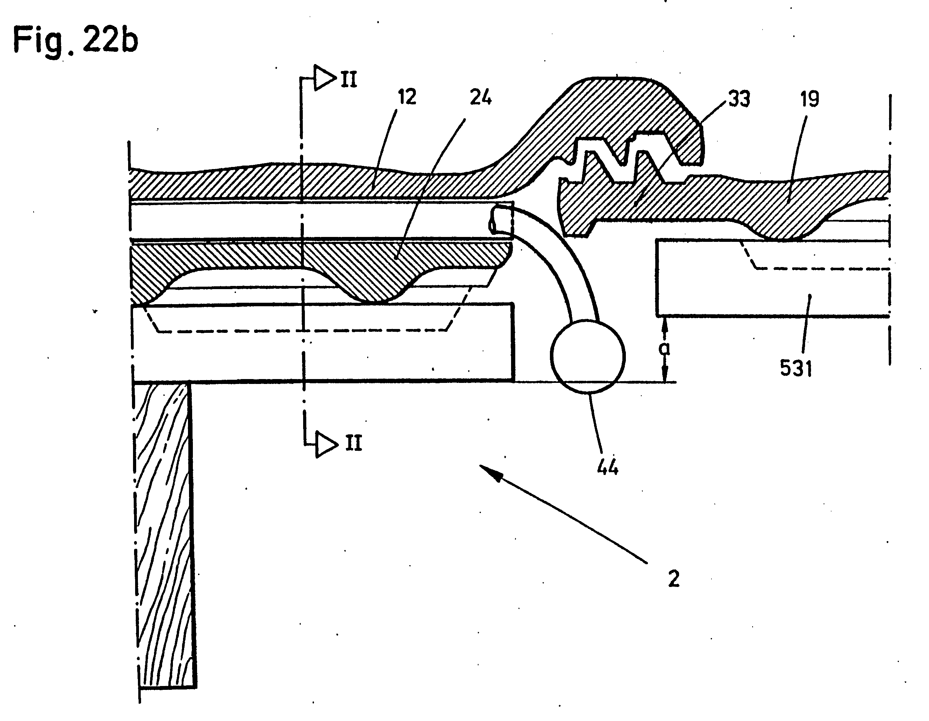

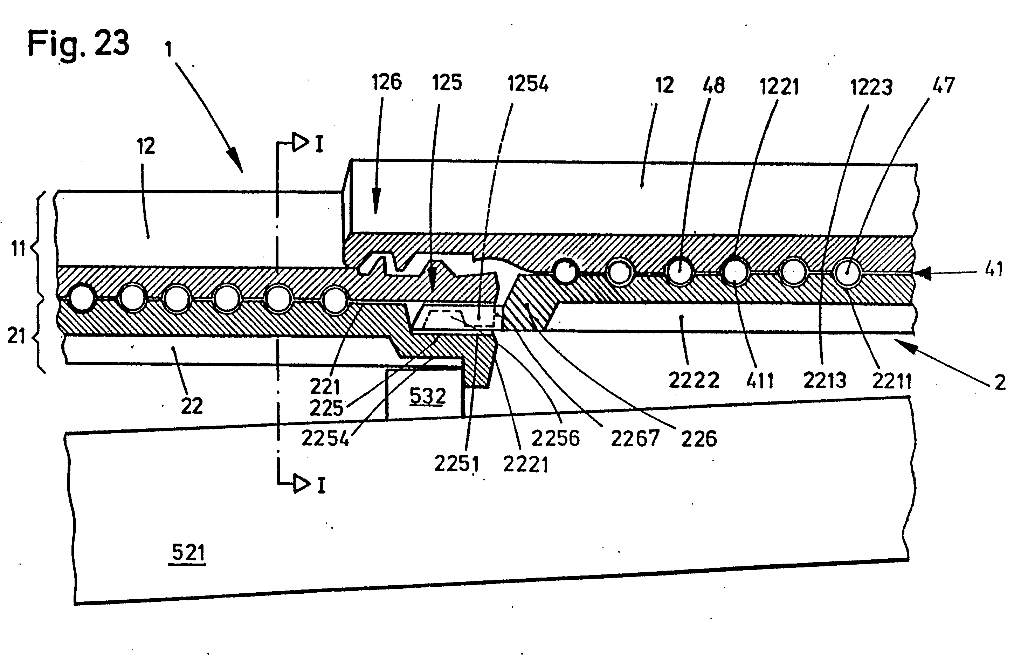

Die Fig. 22a, 22b und 23 geben eine Gesamtübersicht über eine vierte Ausführungsform einer Vorrichtung 1 zur Gewinnung von Heizwärme aus Umweltenergie.

Zwischen der oberen Lage 11 und der unteren Lage 21 ist ein Leitungsystem 41 für ein die Umweltenergie aufnehmendes Fluid aufgebracht. Bei der Ausführungsform der Figuren 22 und 23 umfaßt das Leitungssystem parallel zueinander in Dachlattenrichtung verlaufende Metallrohre 411. Die Rohre verlaufen nebeneinander in einem Abstand, der ungefähr dem Rohrdurchmesser entspricht. Sie sind elementübergreifend verlegt, d.h., sie erstrecken sich in ihrer Länge über mehr als eine Abdeckplatte, im gezeigten Fall sind sie an ihren beiden Enden an Sammelleitungen 44 angeschlossen, die im wesentlichen in Sparrenrichtung verlaufen. Eine der Sammelleitung dient dabei als Zulauf, während die andere als Ablauf fungiert.

Bei Walmdächern und ähnlich gestalteten Dachformen können die Sammelleitungen auch schrägwinkelig zu den Sparren verlegt werden, z.B. den Walmen folgend. Sofern die zwischen den Sammelleitungen vorhandene Länge der Rohre 411 nicht für eine genügende Energieausbeute ausreicht, können die Leitungen in mehrere Schlaufen über das Dach geführt sein und dann in Sammelleitungen münden. Die Sammelleitungen können auch nebeneinander an einem Rand des mit der Vorrichtung überzogenen Dachteiles angeordnet sein.

Die Sammelleitungen 44 sind in bekannter Weise mit der Heizungsanlage eines Hauses verbunden.

Die Abdeckplatten 12 weisen an ihrer Unterseite und die Trägerplatten an ihrer Oberseite jeweils in Dachlattenrichtung verlaufende Aussparungen 1221 bzw. 2211 auf, die zur Aufnahme der Rohre 411 des Leitungssystems dienen. Die Aussparungen sind über ihre gesamte Länge knickfrei geführt und verlaufen im verlegten Zustand über ihre gesamte Länge niveaugleich, so daß die Aussparungen benachbarter Platten fluchtend und stufenlos ineinander münden. Dabei sind im verlegten Zustand die Aussparungen der Träger- und Abdeckplatten so aufeinander abgestimmt, daß sie miteinander einen gemeinsamen, durchlaufenden Hohlraum für die Leitungen 411 des Leitungssystems bilden.

Im vorliegenden Fall besitzen die Aussparungen die Form von Rinnen mit einem in etwa halbkreisförmigen Querschnitt. Zwischen den Rinnen besitzen die Abdeckplatten Stege 1223 und die Trägerplatten Stege 2213. Ebenso wie die Aussparungen sind auch die Stege im verlegten Zustand übereinander angeordnet, sie füllen den Raum zwischen den Rinnen aus. Obwohl im gezeigten Fall die Stege ungefähr so breit sind, wie die Rinnen, ist es zur Steigerung der Energiegewinnung im Stegbereich denkbar, die Stege breiter als die Rinnen zu machen, z.B. im Verhältnis 2:1.

Die Trägerplatten 22 besitzen eine im Mittelfeld in wesentlischen ebene Oberseite 221, die niveaugleich in den Deckfalzteil 224 mündet. Aus der Figur 22 ist ersichtlich, daß der Seitenfalzteil 223 soweit nach unten gerückt ist, daß auch der Deckfalzteil 224 unterhalb des Oberflächenniveaus des Mittelfeldes angeordnet ist. Dies bedeutet, daß sich die Ebene des Oberseite 221 des Mittelfeldes ungebrochen bis über den Deckfalzteil 224 hinzieht.

Der Seitenfalzteil weist eine Seitenfalznut 2232 auf, die im wesentlichen gerade von einem Kopffalzteil 225 bis zu einem Fußfalzteil 226 verläuft. Sie steigt lediglich vom Fußfalz- zum Kopffalzteil etwas an. Im Bereich des Kopffalzteiles mündet sie in eine gegenüber dem Mittelfeld abgesenkte Auflagefläche 2255. Auf dieser sind in Sparrenrichtung verlaufende Rippen 2251 angeordnet, die als Auflager für die jeweils überdeckende Trägerplatte 22 dienen sollen. Im gezeigten Fall sind zwei, respektive drei Rippen angeordnet, die über die Breite der Auflagefläche ungefähr gleich verteilt sind, so daß sie ein Wackeln der überlagernden Trägerplatte verhindern. Die Rippen sollen zudem etwa an der Unterseite der überdeckenden Trägerplatte ablaufendes Kondenswasser auf die Auflagefläche und damit in die Seitenfalznut entwässern.

Etwa in der Mitte der Auflagefläche ist ein Zentrierkopf 2256 vorhanden, der nahe dem traufseitigen Ende des Kopffalzteiles angeordnet ist. Zwischen ihm und dem Mittelfeld besteht jedoch noch ein Freiraum zum Entwässern der Auflagefläche 2255. Der Zentrierkopf besitzt eine sehr viel größere Breite in Dachlattenrichtung als Tiefe in Sparrenrichtung, d.h., die Draufsicht stellt ein Rechteck dar, dessen längere Seite in Dachlattenrichtung verläuft.

Dem Zentrierkopf 2256 ist eine Einklinkung 2267 am Fußfalzteil 226 jeder Trägerplatte zugeordnet. Auch die Einklinkung besitzt eine größere Breite in Dachlattenrichtung als Tiefe in Sparrenrichtung. Sie ist so bemessen, daß sie im eingedeckten Zustand den Zentrierkopf mit seitlichem Spiel einschließt. Die Breite der Einklinkung in Dachlattenrichtung ist folglich etwas größer als die Breite des Zentrierkopfes. Die Tiefe in Sparrenrichtung ist so gewählt, daß im verdeckten Zustand in die Einklinkung sowohl der Zentrierkopf als auch eine Aufhängenase 1254 der entsprechenden, überdeckenden Abdeckplatte 12 eingreifen kann.

Dies bedeutet, daß die Tiefe der Einklinkung 2267 in Sparrenrichtung mindestens der Tiefe des Zentrierkopfes 2256 zuzüglich der Tiefe der Aufhängenase 1254 der Abdeckplatte entspricht. Sofern auch noch eine Sturmklammer zur Verankerung der Trägerplatte am Dachunterbau durch die Einklinkung hindurchgeführt werden soll, ist dieselbe so zu bemessen, daß hinter dem Zentrierkopf 2256 und der Aufhängenase 1254 der Abdeckplatte noch ein Freiraum zum Durchführen der nicht gezeigten Sturmklammer verbleibt.

Der Fußfalzteil 226 befindet sich in etwa auf dem gleichen Niveau wie die Auflagefläche 2255 des Kopffalzteiles 225. Sowohl die Oberseite als auch die Unterseite derselben ist eben. Die Verbindung des Fußfalzteiles 226 zum Mittelfeld erfolgt über eine relativ kurze Schräge. Die Höhe des Fußfalzteiles 226 beträgt mindestens die Summe aus der Höhe der Scherbenstärke im Bereich der Seitenfalznut 2232 zuzüglich der Höhe der äußeren Seitenfalzrippe.

Der Deckfalzteil 224 ist deshalb unter das Niveau des Mittelfeldes 221 gedrückt worden, um dasselbe und die darauf angeordneten Aussparungen 2211 bzw. Stege 2213 niveaugleich vom Seitenfalzteil bis über den Deckfalzteil hinweg durchlaufen lassen zu können. Der Deckfalzteil besitzt eine vom Kopffalzteil bis zum Fußfalzteil durchlaufende Deckfalznut 2242.

An der Unterseite der Trägerplatten verlaufen parallel zueinander vom Kopffalzteil bis zum Beginn des Fußfalzteiles Stützrippen 2222, da diese einerseits die horizontale Stapelung (keine zieharmonikaartige Auffächerung beim Stapeln übereinander), Trittfestigkeit und andererseits eine möglichst dünne Scherbenstärke ermöglichen, die wegen des Wärmedurchganges erwünscht ist. Die Trägerplatten werden mit Hilfe von Aufhängenasen 2221 auf den Dachlatten 532 verankert. Am fußseitigen Ende des Deckfalzteiles 224 weist dasselbe einen Eckausschnitt 2245 und am kopfseitigen Ende einen kleineren Eckausschnitt 2244 auf.

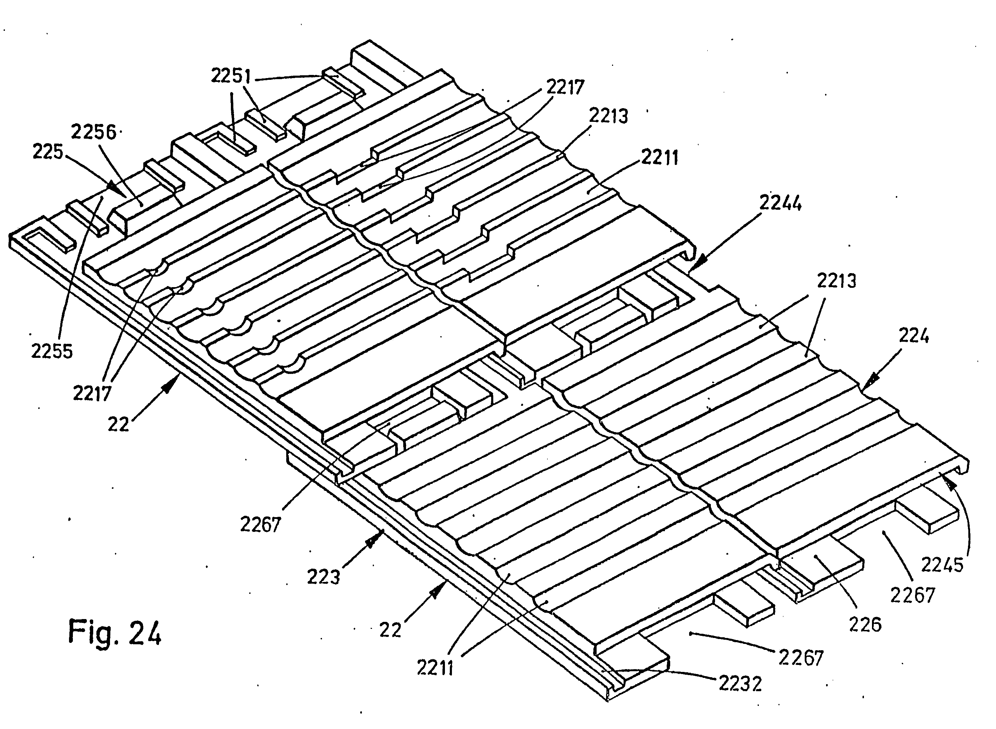

Den Fig. 22a und 22b, sowie 23 ist zu entnehmen, daß die Unterseite der Abdeckplatten 12 korrespondierend zur Oberseite der Trägerplatten 22 gestaltet ist. Es ist unschwer zu erkennen, daß die Aussparungen 1221 sich ebenfalls vom freien Ende des Seitenfalzteiles 123 bis hin zum Beginn des Deckfalzteiles 124 erstrecken. Auch dort sind zwischen den Rinnen für die Aufnahme der Rohre 411 Stege 1223 vorgesehen. Diese Stege sind in etwa genauso breit bemessen, wie die Stege 2213 der Trägerplatten. In Fig. 24 zeigt die obere Reihe der überdeckenden Trägerplatten jeweils sieben rinnenförmige Aussparungen für die Leitungen, während die unterdeckte Reihe nur fünf aufweist. Während bei der oberen Reihe deshalb die Stege weniger breit sind, aber dafür mehr Raum für die Leitungen zur Verfügung steht, ist dies bei der unterdeckten Reihe von Trägerplatten mit nur fünf Rinnen anders gelöst. Dort wird den Stegen ein weit größerer Anteil an der zur Verfügung stehenden Mittelfeldfläche zur Verfügung gestellt, als den Rinnen, da der über den Stegen anfallende Wärmestrom über die Verbindungsbleche 4135 zu den Rohren 411 abgeleitet werden kann.

Beim Eindecken der gezeigten Vorrichtung 1 wird jeder Trägerplatte eine eigene Abdeckplatte 12 zugeordnet. Sie greift in der bereits beschriebenen Art und Weise mit ihrer Aufhängenase 1254 in die Einklinkung 2267 ein und stützt sich am Zentrierkopf 2256 ab. Bei der Eindeckung liegt sie mit ihrem Kopffalzteil 125 auf dem Fußfalzteil 2226 der firstseitig von ihr angeordneten Trägerplatte auf. Während der Seitenfalzteil 123 und Deckfalzteil 124 bei der Abdeckplatte 12 genauso ausgebildet sind, wie beim normalen Dachdeckungselement 19, ist der Kopffalzteil 125 in Abweichung von den normalen Dachdeckungselementen 19 an seiner Unterseite für die eben erwähnte Auflagemöglichkeit eben gestaltet und mit der besonderen Aufhängenase 1254 versehen, die die Verankerung in der Einklinkung 2267 ermöglicht.

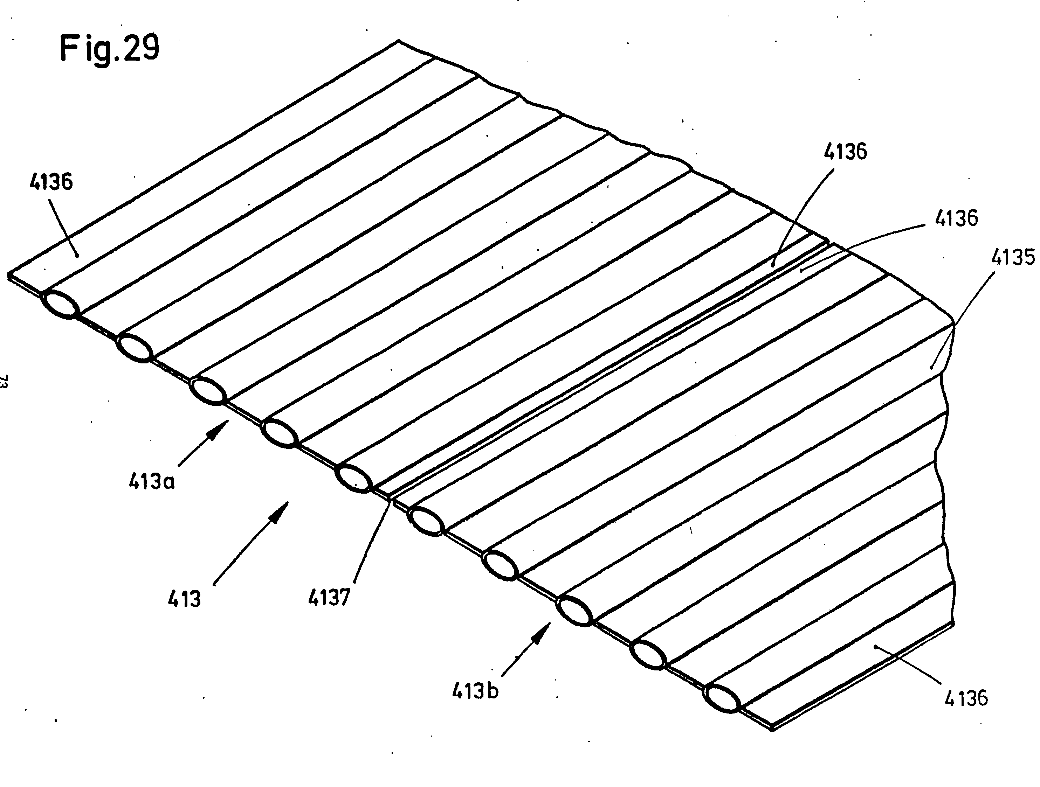

Um mehrere Leitungen, z.B. Rohre 411 zu einer Einheit, nämlich zu einer Rohrbatterie 413 zusammenfassen zu können, sind Verbindungselemente 4131 vorgesehen, die die Rohre in einer starren Zuordnung zueinander nebeneinander festlegen. Dies können Stifte 4133, Laschen 4134 oder auch über die gesamte Länge der Rohre verlaufende Bleche sein. Damit ist die Möglichkeit der Ausgestaltung der Verbindungselemente 4131 bei weitem nicht erschöpft. Die Rohrbatterie 413 kann vor dem Verlegen vorgefertigt werden, z.B. durch Löten, Schweißen, Kleben, oder wie es im Fall der in Fig. 29 gezeigten Batterie der Fall ist, durch Strangziehen bzw. -gießen. Je nach dem welcher Werkstoff verwendet wird, kommt auch Extrudieren in Frage. Sie kann als Meterware hergestellt werden.

Die Verbindungselemente können viel zur Energieaufnahme des Leitungssystems beitragen und gegenüber der Oberfläche der Leitungen ein Vielfaches an Absorberfläche zur Verfügung stellen. Die Breite einer Rohrbatterie 413 ist im allgemeinen gleich der Deckbreite der einzelnen Platten.

Mit Rücksicht auf das bei Grobkeramik übliche, nicht immer gleiche Schwindmaß kann die Rohrbatterie auch aufgeteilt werden, wie dies in Fig. 29 gezeigt ist. Der Abschnitt 413a ist identisch zum Abschnitt 413b und wird neben diesem in einer Ebene auf eine Lage von

Trägerplatten aufgebracht. In diesem Fall besitzen die Träger- und Abdeckplatten insgesamt zehn Rinnen für die Aufnahme der Rohre 411.

Zwischen den beiden Abschnitten 413a und 413b ist durch eine etwas kürzere Gestaltung der Randbleche 4136 gegenüber den zwischen den Rohren 411 befindlichen Blechen 4135 eine Fuge 4137 vorhanden, die zum Ausgleich eventuell vorhandener Schwindungen bei den Platten dient. Sofern ein asymmetrischer Aufbau der Abschnitte 413a und 413b nicht stört, können die in Fig. 29 gezeigten äußeren Randbleche 4136 breiter sein, als die die Fuge zwischen sich bildenden.

Im gezeigten Fall haben sowohl die Bleche 4135, 4136 als auch die Rohre 411 ungefähr eine Wandstärke von 2mm. Die Rohrbatterie 413 ist aus Alu gefertigt.

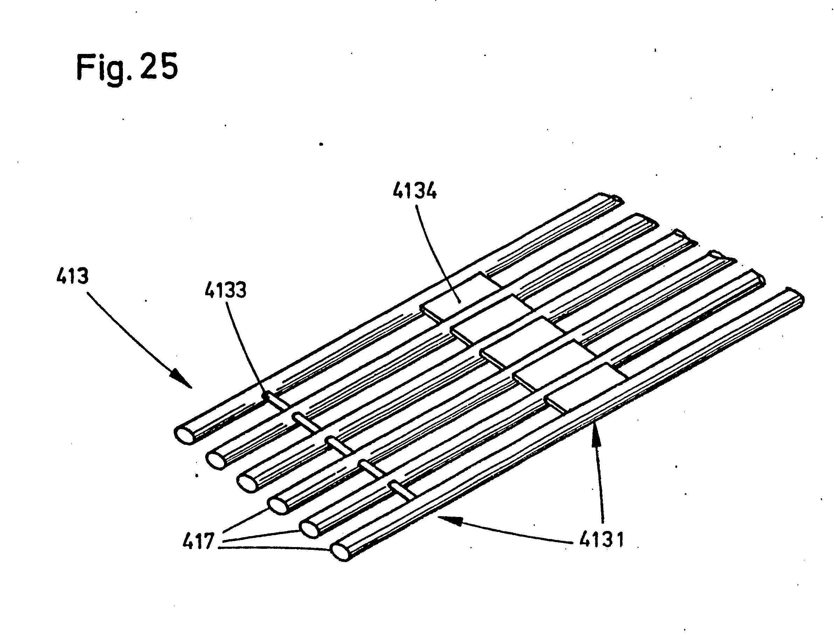

Um den notwendigen Freiraum für die Verbindungselemente 4131 zu schaffen, sind an den Stegen 1223 der Abdeckplatten und/oder den Stegen 2213 der Trägerplatten Ausnehmungen 2217 vorhanden, die der Form der Verbindungselemente angepaßt sein können. Aus Fig. 24 sind bei der überdeckenden Lage von Trägerplatten 22 die Ausnehmungen als Vertiefungen der Stege erkennbar. Die in Fig. 25 gezeigte Rohrbatterie 413 paßt in die gezeigte überdeckende Lage von Fig. 24, da die Verbindungsstifte 4133 in die Ausnehmungen 2217 der linken oberen Trägerplatte eingreifen können, während die Verbindungslaschen 4134 in die Ausnehmungen 2217 der hinteren überdeckenden Trägerplatte passen.

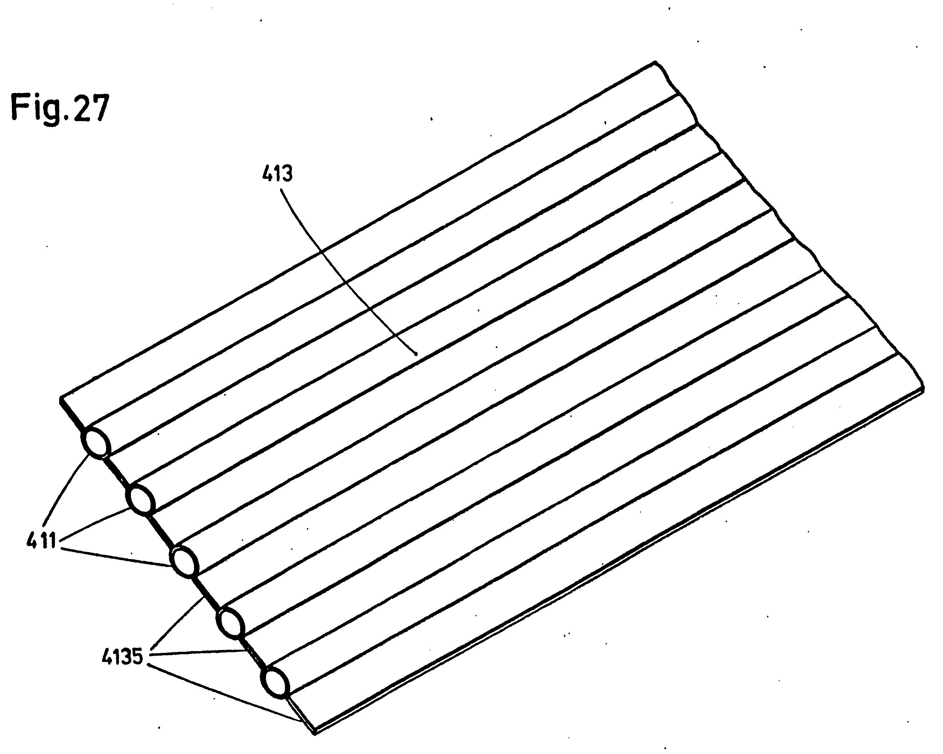

Die Stege 2213 der unterdeckenden Trägerplatten 22 von Fig. 24 sind insgesamt niedriger ausgebildet, so daß auf diesen Platten z.B. eine Rohrbatterie von Fig. 27 angeordnet werden könnte.

Durch die Bemessung der Höhe der Stege sowohl der Trägeräls auch der Abdeckplatten im Verhältnis zu den Höhen der durch die Aussparungen 2211 und 1221 gebildeten Hohlräume kann bestimmt werden, wie und wo die Abdeckplatten 12 am Leitungssystem bzw. auf den Tragerplatten 22 aufliegen. Ein inniger Kontakt zwischen den Stegen der Träger- und Abdeckplatten einerseits und den Verbindungselementen, insbesondere Verbindungsblechen 4135 ist deshalb willkommen, da sich diese Teile sehr gut zur Kraftübertragung von den Abdeckplatten auf die Tragerplatten eignen und aufgrund des direkten Kontaktes auch eine gute Wärmeleitung von den Platten auf das Leitungssystem ermöglichen. Dabei gilt es zu bedenken, daß sowohl die Wärmeleitung von den Trägerplatten zum Leitungssystem, als auch von den Abdeckplatten zum Leitungssystem interessant ist und zur Wärmegewinnung herangezogen werden kann.

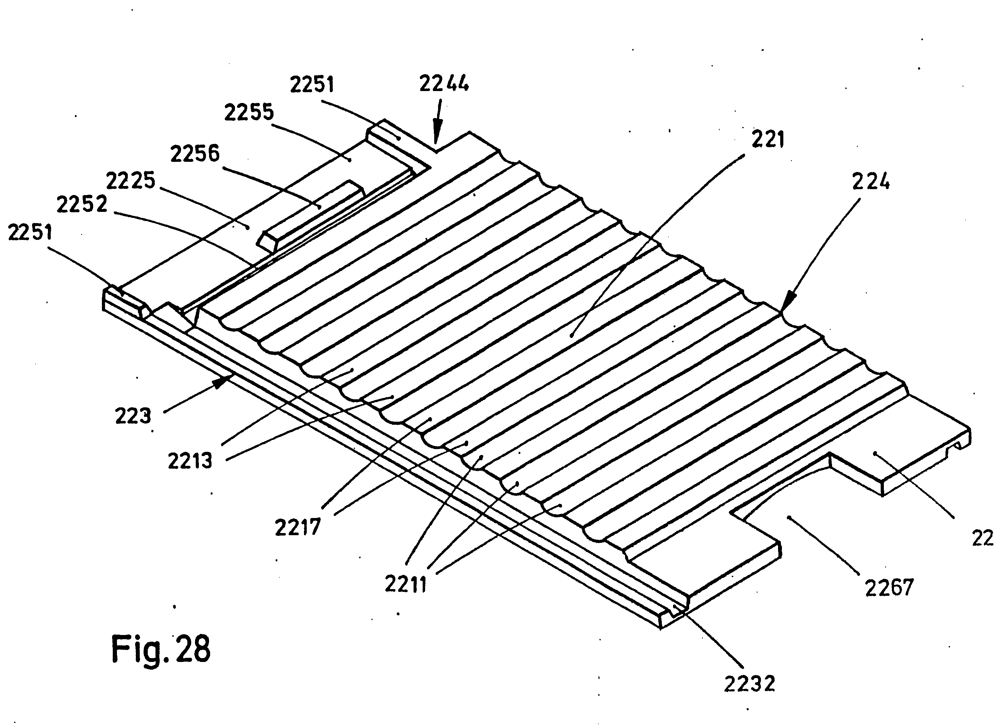

In Fig. 28 ist eine Trägerplatte gezeigt, die im großen und ganzen den Trägerplatten von Fig. 24 entspricht, bei der jedoch die Rohrbatterie von Fig. 29 mit ihren Abschnitten 413a und 413b aufgenommen werden kann. Abweichend von den Trägerplatten von Fig. 24 ist der Deckfalzteil 224 ohne Eckausschnitte im Kopf- und Fußfalzteil ausgebildet und insgesamt sehr viel niedriger gestaltet. Die Unterseite des Fußfalzteiles 226 ist im Bereich der Einklinkung 2267 gewölbeartig ausgebildet, um etwa anfallendes Kondenswasser zum Seiten- bzw. Deckfalzteil hin abzuleiten.

Ein weiterer Unterschied ist dadurch gegeben, indem sich zwischen dem Zentrierkopf 2256 und der Oberseite 221 des Mittelfeldes über die gesamte Breite der Platte eine Kopffalznut 2252 erstreckt, die zum Seitenfalzteil 223 hin etwas geneigt ist und sich in die Seitenfalznut 2232 hin entwässert. Die Rippen 2251 sind ganz an den Rand der Auflagefläche 2255 hingerückt, wobei die im Deckfalzbereich angeordnete Rippe zwar wie bei der anderen Ausführungsform in Sparrenrichtung verläuft, jedoch L-förmig den Eckausschnitt 2244 im Kopfbereich umgreift.

Es wurde eingangs bereits das Sonderelement 24 angesprochen. Dieses dient zur Bildung des rechten Randes einer mit Trägerplatten 22 verlegten Dachfläche und entspricht mit einer Ausnahme den bereits beschriebenen Trägerplatten 22. Dem Sonderelement 24 fehlt ein geringer Teil des Mittelfeldes und insbesondere der Deckfalzteil 224. Es entsteht durch einen Schnitt in Sparrenrichtung gemäß der Linie b-b über die gesamte Länge der Platte.

Der Schnitt kann entweder bei der fertigen Platte vorgenommen werden, oder bei der Herstellung, z.B. nach dem Pressen.

Das Sonderelement 24 ermöglicht die Anbringung der Sammelleitung 44 zwischen der Schnittlinie b-b und dem Seitenfalzteil 33 des benachbarten normalen Dachdeckungselementes 19. Die Schnittlinie liegt ewas rechts von der rechten Stützrippe 2222.

Um den für die Wärmeübertragung auf das Leitungssystem wichtigen Wärmestrom von unten an die Trägerplatten besser ausnutzen zu können, ist gemäß einer Weiterbildung der Erfindung vorgesehen, die Dachlatten 532 im Bereich der Vorrichtung 1 durch Schienen 533 zu ersetzen, die mittels Distanzhalter 522 auf der Dachunterkonstruktion z.B. auf den Sparren 521 angebracht werden.

Die Distanzhalter bestehen aus U-förmigen Profilabschnitten, deren U-Öffnung in Traufrichtung offen ist. Ein unterer U-Schenkel liegt auf dem Unterdach an, während der obere zur Befestigung der Schiene 533 dient. Der Verbindungsschenkel stellt die Distanz zwischen der Schiene 533 und der Unterkonstruktion des Daches her. Die Schiene verläuft in Dachlattenrichtung und dient wie die Dachlatten für die Aufnahme und Verankerung der jeweiligen Aufhängenasen.

Die Schiene kann auf den Distanzhaltern mit üblichen Befestigungsmitteln, z.B. Schrauben, festgelegt werden. Um einen Längsausgleich vornehmen zu können, das heißt, Differenzen in der Decklänge ausgleichen zu können, kann der obere U-Schenkel der Distanzhalter mit einem Längsloch 5223 in Sparrenrichtung ausgerüstet werden. Desgleichen kann die Blechschiene 533 in ihrem traufseitigen Bereich mit Längslöchern quer zur Sparrenrichtung versehen werden. Die Schiene ist dann am Kreuzungspunkt ihrer Längslöcher 534 auf den Distanzhaltern und deren Längsloch 5223 zu befestigen. Die Längslöcher haben den Zweck, die Stöße der Schiene aneinander einfacher ausrichten zu können. Die Anordnung der Längslöcher im Traufbereich der Schiene soll sicherstellen, daß die Schiene, auch wenn sie ganz in Richtung Traufe versetzt ist, firstseitig immer noch etwas über die Distanzhalter 522 hinausragt, um ein direktes Anhängen der Aufhängenasen an die Distanzhalter unter allen Umständen zu vermeiden.

Durch die Anordnung der Haltevorrichtung für die Platten, also durch die Verwendung der im vorliegenden Fall vorgesehenen Distanzhalter und Schienen wird unter den Trägerplatten 22 ein weitgehend offener Freiraum für die Luftzirkulation geschaffen. Die unter den Trägerplatten vorhandene Luft kann im wesentlichen über die gesamte Länge an der Rückseite der Trägerplatten entlang streichen und wird in ihrer Bewegung fast überhaupt nicht behindert. Hierdurch wird ein wesentlich verbesserter Wärmeübergang von der Luft auf die Trägerplatten erzielt. Um die Behinderung des rückwärtigen Luftstromes noch weiter zu vermindern, können die Aufhängenasen 2221 der Trägerplatten 22 möglichst schmal und niedrig gehalten werden.

Im Verbindungsschenkel des Distanzhalters 522 kann ein Loch 5224 vorhanden sein, um eine nicht gezeigte Sturmklammer einzusezten.

Das Leitungssystem gemäß der Erfindung kann von Gefäßen aller Art gebildet werden. Obwohl die Ausnehmungen im gezeigten Fall auf Leitungen mit kreisförmigem Querschnitt abgestellt sind, sind auch Leitungsgefäße mit anderen geometrischen z.B. rechteckigen Querschnittsformen möglich. Es sei insbesondere betont, daß auch Behälter mit Zu- und Abflußleitungen für das Leitungssystem verwendet werden können. Hierbei ist es auch möglich, statt einer Fluidkammer im Behälter mehrere vorzusehen. Als Leitungen kommen neben den bereits erwähnten Metallrohren auch Gefäße anderer Art, z.B. Röhrren, Schläuche, Kammerfolien usw. in Frage.

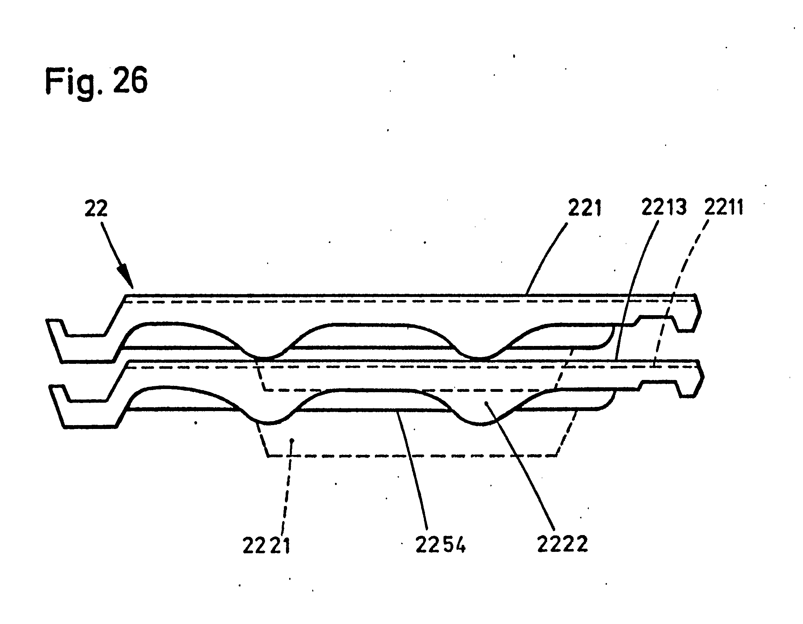

Der Fig. 26 ist zu entnehmen, daß die Trägerplatten 22 auch horizontal stapelfähig sind. Die Stützrippen 2222 stützen sich jeweils auf dem Mittelfeld der darunter befindlichen Trägerplatte ab und ermöglichen die besagte horizontale Stapelfähigkeit. Sie bedeutet, daß beim Aufeinanderstapeln von Platten der sich ergebende Stapel nicht ziehharmonikaartig auffächert. In nicht gezeigter Weise sind auch die Abdeckplatten horizontal stapelfähig.

Im übrigen sei betont, daß bei der Herstellung der Abdeck- und Trägerplatten das jeweils gleiche Trockenrähmchen verwendet werden kann, als bei der Herstellung der Normalelemente.

Beim Verlegen der erfindungsgemäßen Vorrichtung müssen zuerst die für die Vorrichtung selbst vorgesehenen Dachlatten um das Maß a gegenüber den Dachlatten für die normalen Dachdeckungselemente tiefer gelegt werden. Dies kann entweder durch eine Ausklinkung in den Sparren geschehen oder durch eine Unterfütterung der Dachlatten für die normalen Dachdeckungselemente.

Bei der Einlattung ist auf den korrekten Abstand zwischen den Dachlatten untereinander und auf die fluchtende Ausrichtung benachbarter Dachlatten zu achten. Hierdurch soll sichergestellt werden, daß sich die Aussparungen der Abdeck- und Trägerplatten ebenfalls fluchtend zueinander anordnen.

Soweit die Dachlatten durch Haltevorrichtungen, wie Distanzhalter 522 bzw. Schienen 533 ersetzt werden sollen, müssen diese an Stelle der Dachlatten auf dem Unterdach mit der gleichen Sorgfalt aufgebracht werden.

Anschließend können die Trägerplatten auf die Dachlatten, respektive Haltevorrichtungen, in Form einer unteren Lage 21 eingedeckt werden. Sie werden nach Dachziegelart verlegt, d.h., die Trägerplatten werden von unten nach oben fortschreitend auf den Dachunterbau aufgebracht. Die Fußfalzteile der überdeckenden Trägerplatten legen sich jeweils auf die Auflagefläche 2255 des Kopffalzteiles 225 der unterdeckten Trägerplatten. Im gezeigten Fall werden die Trägerplatten in Reihe verlegt, d.h., sie liegen in Sparrenrichtung hintereinander und die Seitenfalznuten entwässern sich jeweils ineinander.

Auch eine Verbandsverlegung ist möglich, sofern die Trägerplatten geringfügig geändert werden. In diesem Fall wäre es notwendig, die Einklinkung 2267 und den Zentrierkopf 2256 exzentrisch anzuordnen.

Die Verlegung im Verband hat den Vorteil, daß sich der Seitenfalzteil direkt auf den Kopffalzteil der unterdeckenden Trägerplatte entwässert. Außerdem ist im Zusammenhang mit der Bauhöhe des Fußfalzteiles noch die Möglichkeit gegeben, den Seitenfalzteil auf die Dachfläche zu entwässern.

Auf die verlegten Trägerplatten 22 werden dann die Rohre 411 aufgebracht. Dies geschieht entweder dadurch, daß man die einzelnen Leitungen in Dachlattenrichtung auf die miteinander fluchtenden Rinnen der Trägerplatten auflegt, oder daß man die Leitungen in Form von Rohrbatterien 413 bzw. 413a und 413b, aufbringt. Die Leitungen können so bemessen sein, daß sie die ganze, zur Energiegewinnung vorgesehene Dachfläche einstückig überspannen. Sie können aber auch aus mehreren, hintereinander zu fügenden Teilen bestehen.

Durch die in Dachlattenrichtung verlaufenden, miteinander fluchtenden Rinnen ist es nicht notwendig, das Leitungssystem anzupassen. Es genügt, die Leitungen einfach in die Rinnen einzulegen.

Anschließend können die Abdeckplatten 12 aufgelegt werden. Im gezeigten Fall wird jeder Trägerplatte eine im wesentlichen darüber angeordnete Abdeckplatte 12 zugeordnet. Sie greift mit ihrer Aufhängenase 1254 in den innerhalb der Einklinkung 2267 vorhandenen Freiraum ein und stützt sich an den Zentrierkopf 1256 ab. Dies ist aus Fig. 23 gut ersichtlich.

Durch das Einführen der Aufhängenase 1254 in die Einklinkung 2267 zentriert sich jede Abdeckplatte selbsttätig auf der ihr zugeordneten Trägerplatte. Dies heißt, daß sich die Aussparungen an der Unterseite der Abdeckplatten über den entsprechenden Ausnehmungen auf der Oberseite der Trägerplatten einfinden und zusammen den bewußten Hohlraum für die Leitungen 411 bilden. Das Leitungssystem verankert auch die Abdeckplatten formschlüssig auf den Trägerplatten.

Zur Vervollkommnung des Systems ist es noch notwendig, die Leitungen an Sammelleitungen 44 anzuschließen. Je nach der Länge der Leitungen kann dies einfach dadurch geschehen, daß jedes freie Ende der Leitung an je eine Sammelleitung zur Zufuhr und Abfuhr des Fluids angeschlossen wird. Es kann aber such notwendig sein, jeweils mehrere in Dachlattenrichtung verlaufende Leitungen mäanderartig untereinander zu verbinden und erst nach dieser Hintereinanderschaltung mehrerer Leitungen jeweils an Sammelleitungen anzuschließen, die dann eventuell auch an der gleichen Seite der Vorrichtung in Sparren- bzw. Walmrichtung geführt sein können.

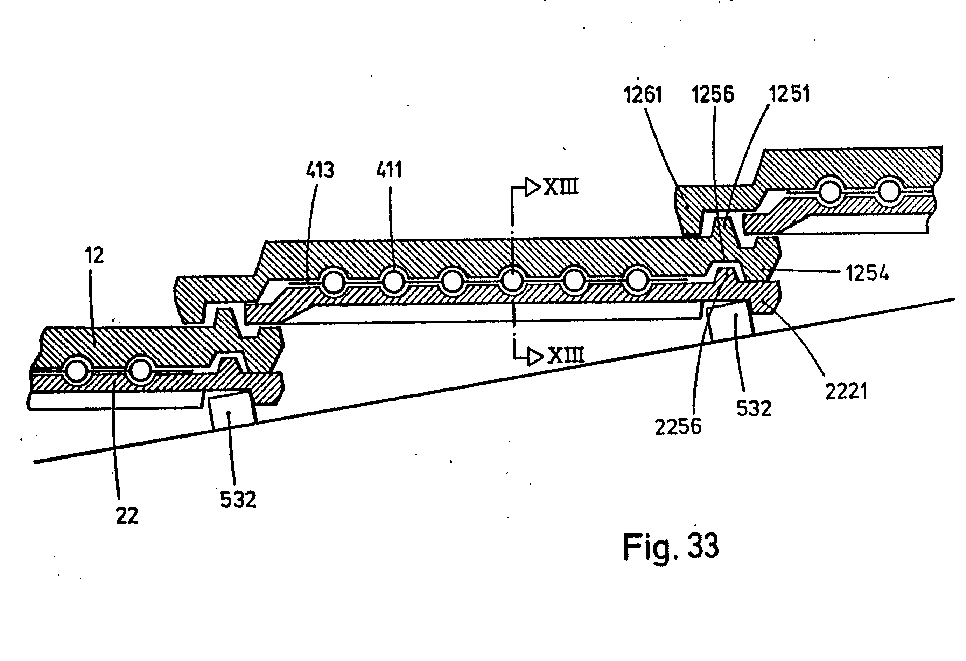

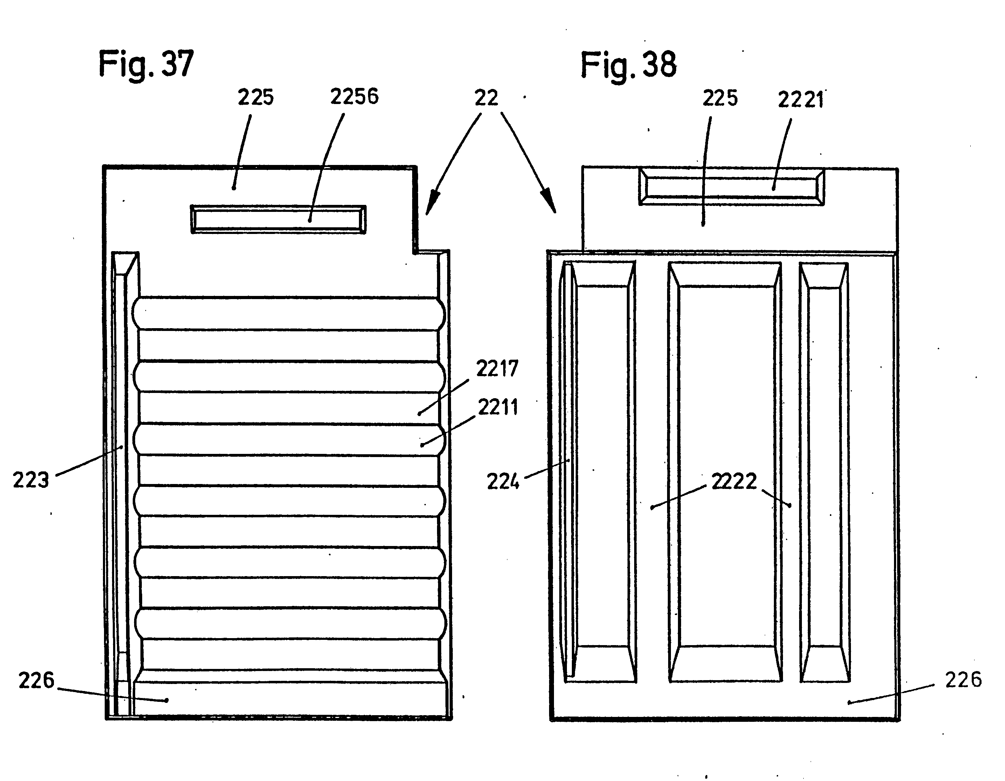

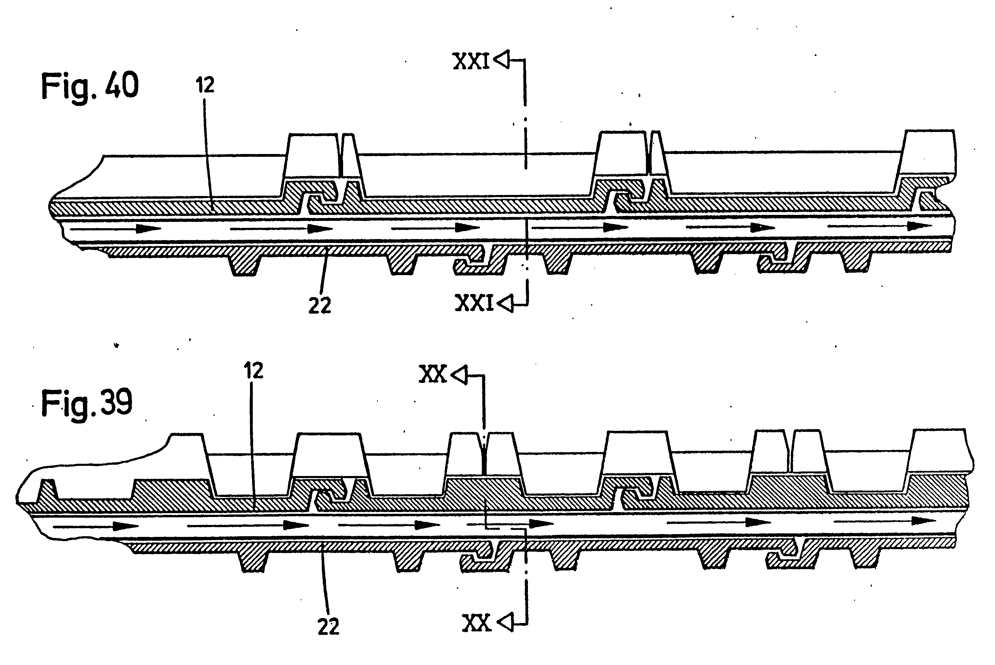

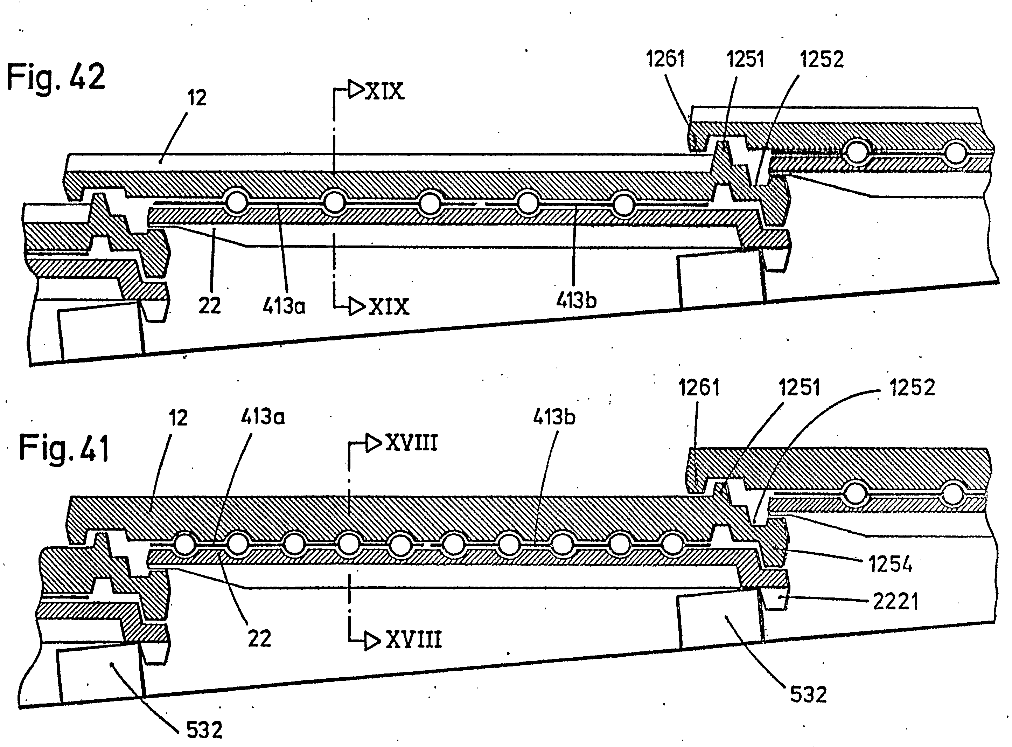

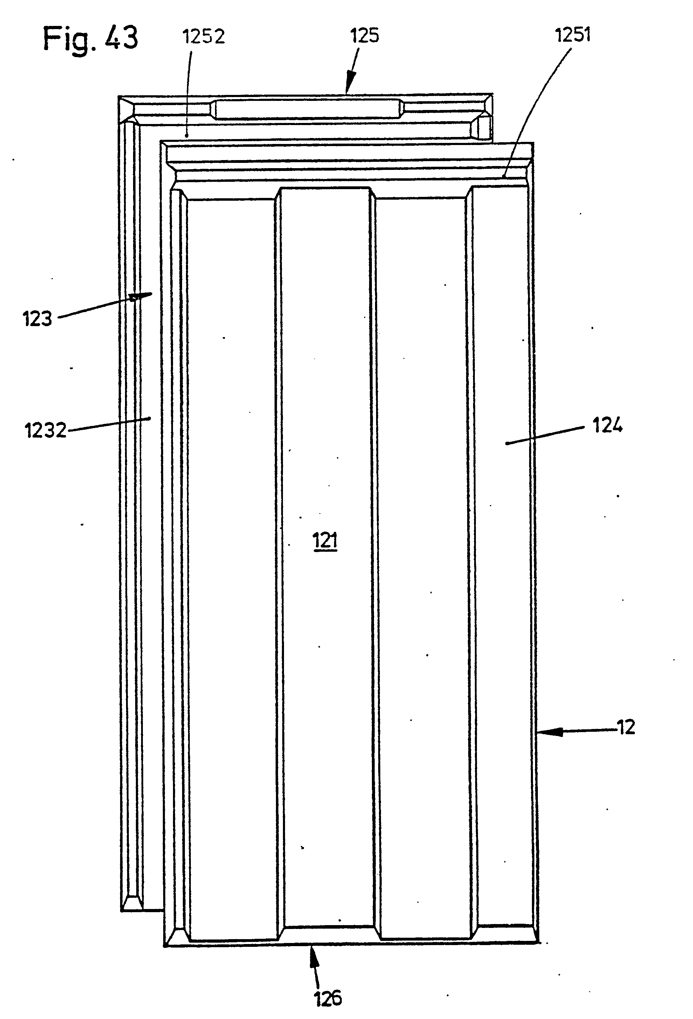

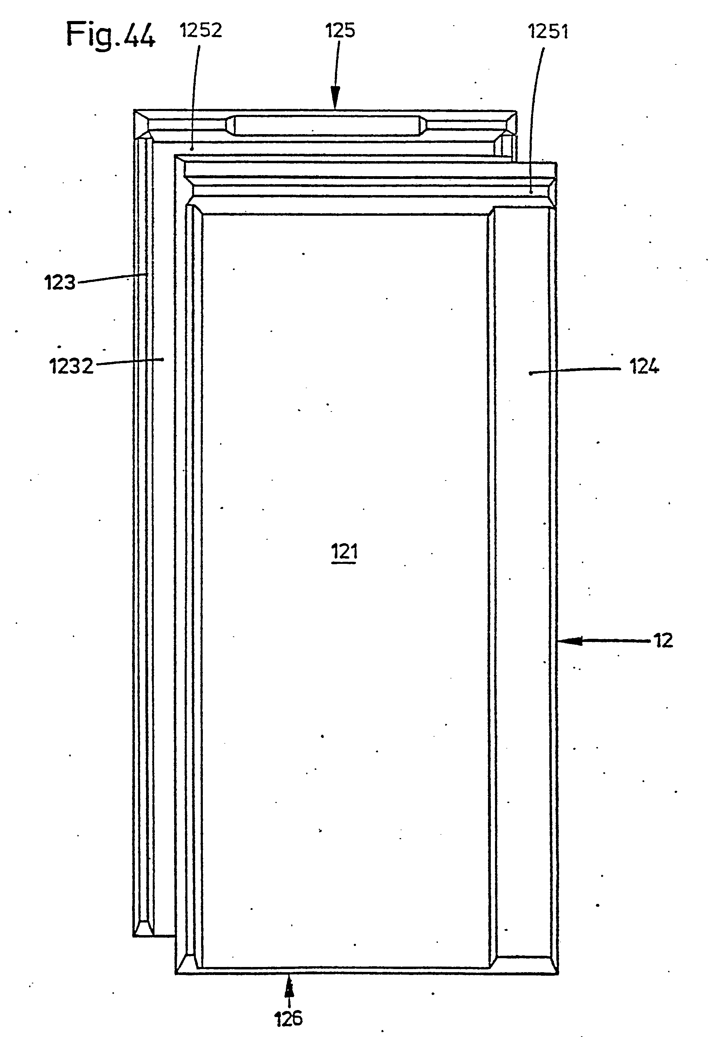

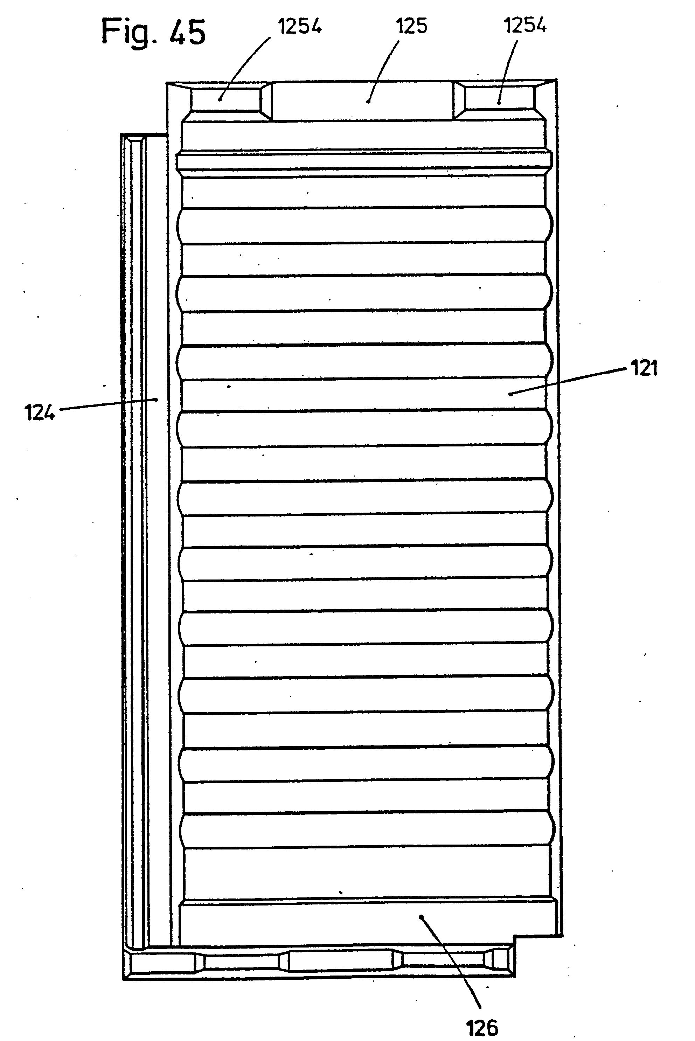

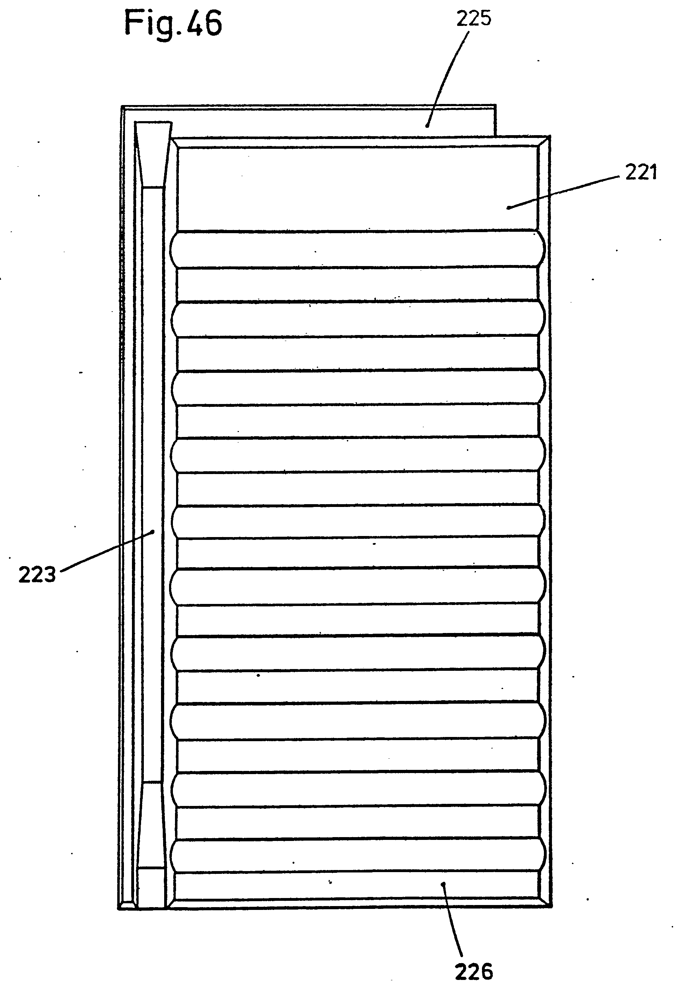

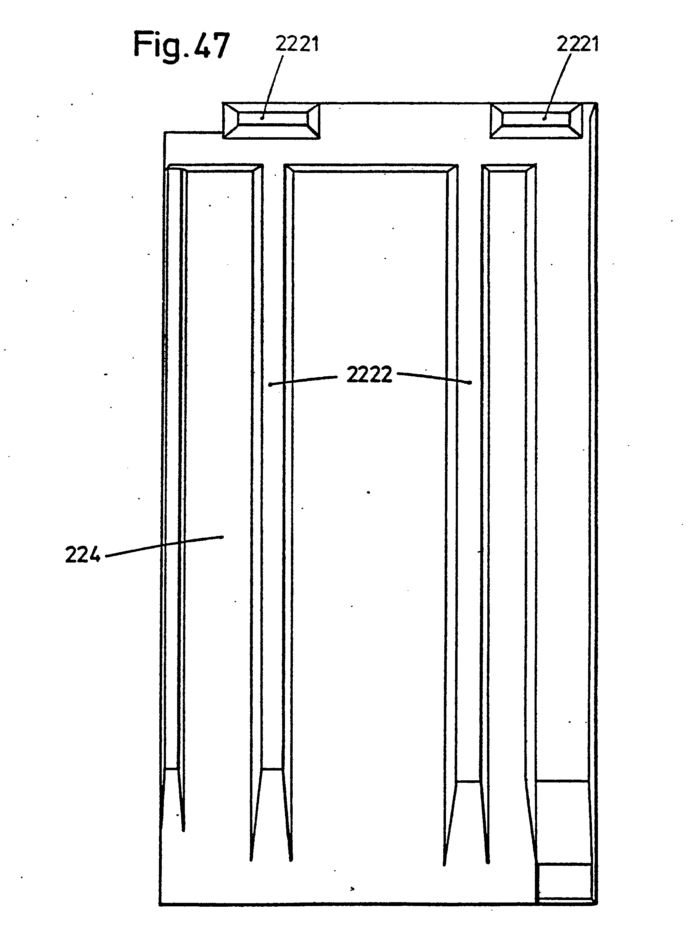

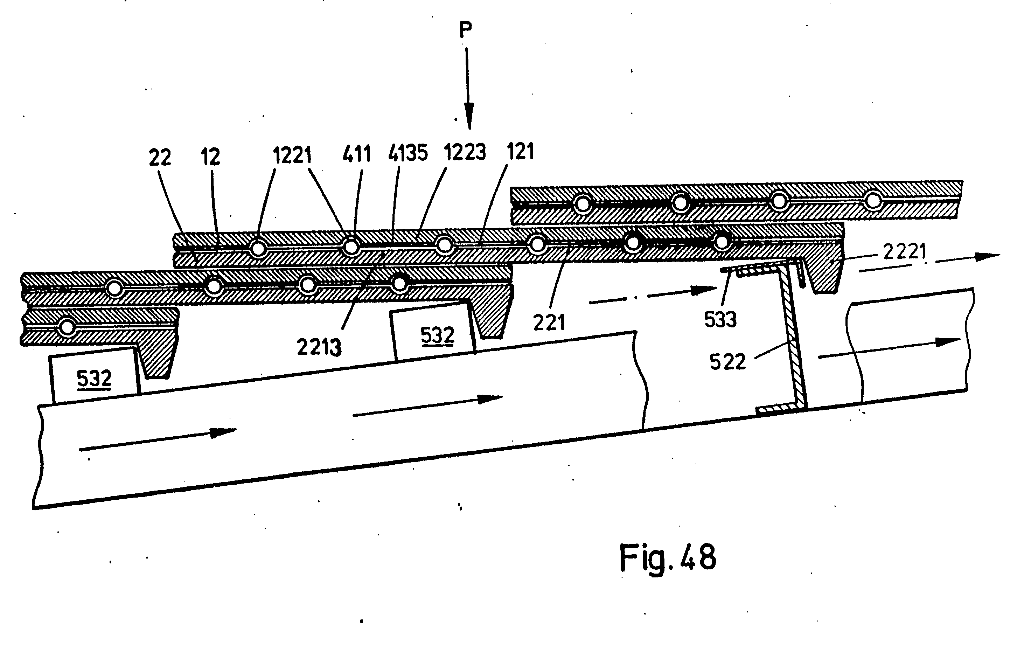

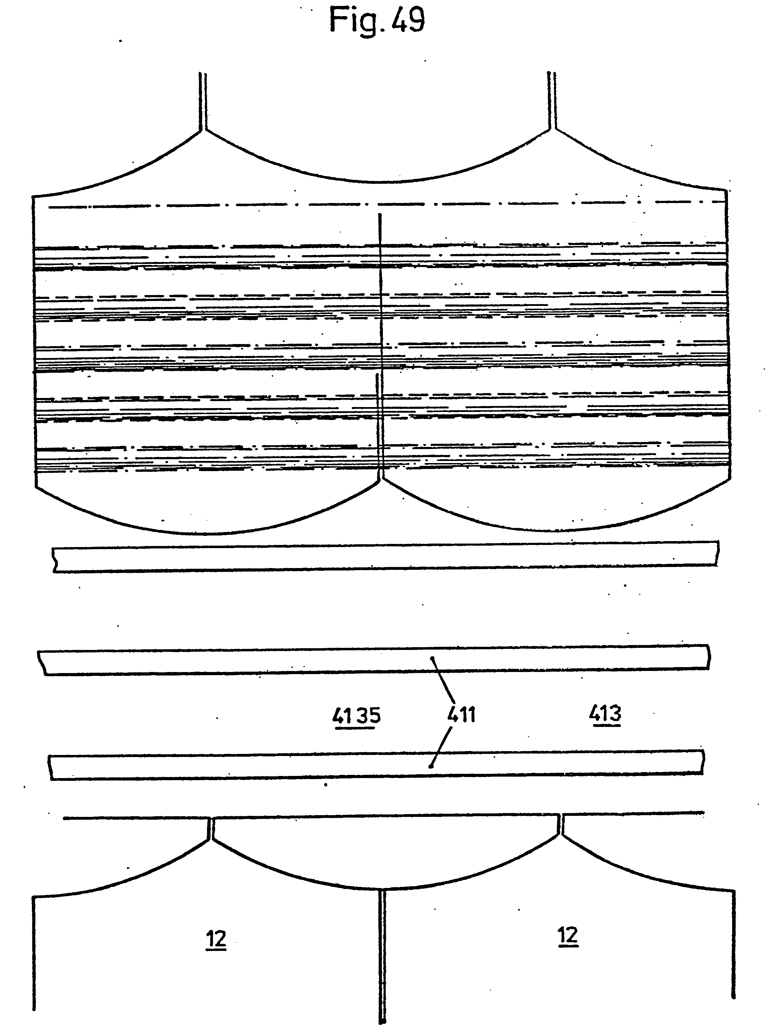

In den Fig. 33 bis 49 sind Ausführungsformen der Erfindung gezeigt, bei denen jeweils die Trägerplatten 22 sich mit ihren Fußfalzteilen 226 in der Eindeckung nicht auf den Kopffalzteilen 225 der traufseitig folgenden Trägerplatten 22, sondern der traufseitig folgenden Abdeckplatten 12 aufliegen. Hierbei ergibt sich ein Dach, bei dem die Träger- und Abdeckplatten jeweils längs einer Höhenlinie eine durchgehende Lage bilden. Beim Verlegen ist darauf zu achten, daß die jeweils übereinander liegenden Lagen der Abdeck- und Trägerplatten einer gemeinsamen Röhenlinie vollständig verlegt sind, ehe mit der Verlegung der nächst höheren Lage von Tragerplatten begonnen wird. Natürlich ist vor dem Aufbringen der Lage der Abdeckplatten zuerst das Leitungssystem auf die Lage der Trägerplatten aufzubringen.

Die normalen Dachdeckungselemente der Ausführungsform in den Fig. 33 bis 38 werden in der Fachsprache als Kronenbiber bezeichnet. Der Name weist auf den kronenartigen Absatz am Fußbereich der Ziegel hin. Dieser Absatz verursacht einen hohe Aufbau im Fußbereich. Trotz dieser Kröpfung ist es möglich, auch für diese Ziegelart Abdeck- und Trägerplatten zur Verfügung zu stellen, die eine nahtlose Einfügung von mit normalen Kronenbiberziegeln belegten Dachfläche ermöglicht. Dies ist besonders wichtig bei denkmalsgeschützten Bauten, deren Dächer mit den Kronenbiberziegeln belegt sind.

Aus Fig. 33 ist zu erkennen, daß dies dadurch erreicht wurde, in dem das Gesamtniveau der verlegten Trägerplatten in vertikaler Richtung wesentlich höher angesetzt wurde, als das bei dem vorstehend beschriebenen Ausführungsbeispielen der Fall ist. Der Kronenbiber besitzt einen doppelten Seitenfalzteil 223 und ist wegen der guten Entwässerungsmöglichkeiten im Seitenfalzbereich auch für flache Eindeckungen gut geeignet.

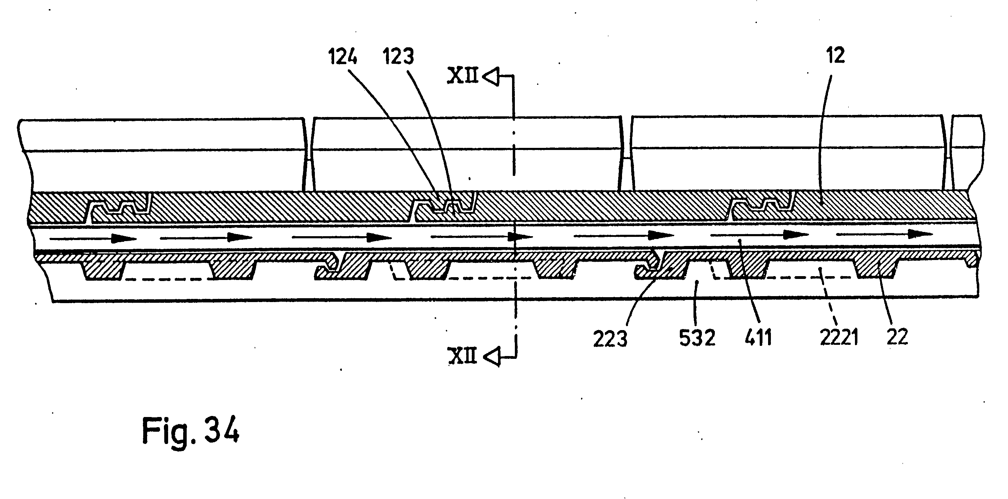

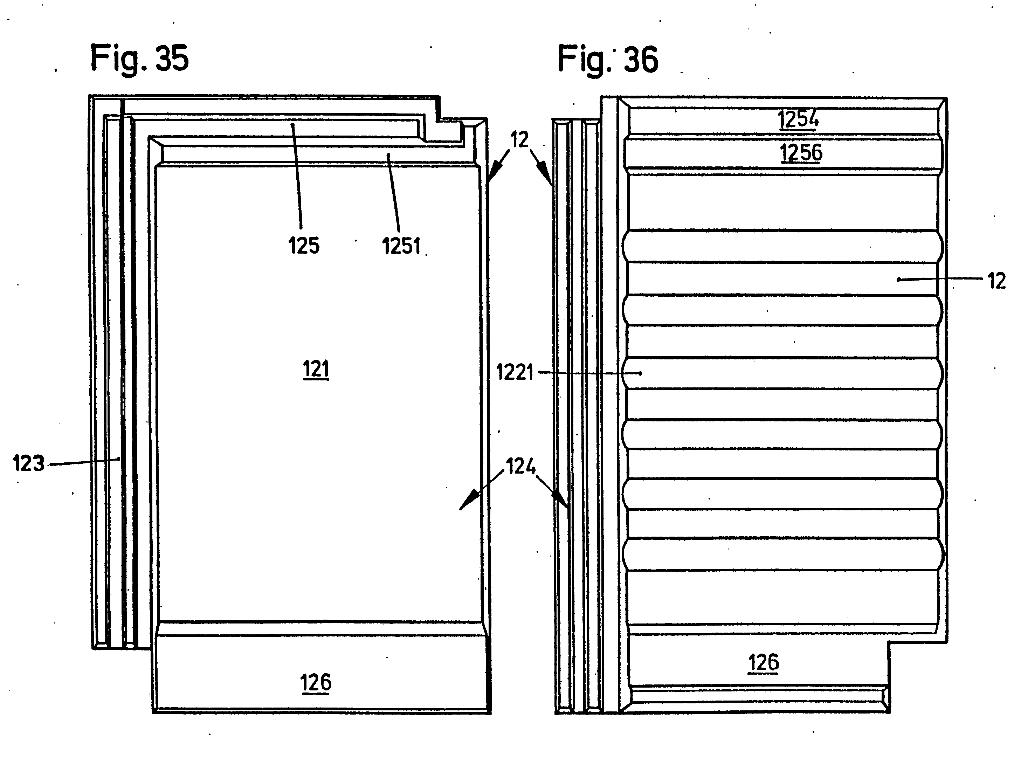

Die in Fig. 34 gezeigte Abdeckplatte 12 besitzt wie jeder Kronenbiber einen Kopffalzteil 125 mit einer einfachen Verfalzung. Die in Fig. 36 gezeigte Unterseite der Abdeckplatte 12 weist als bemerkenswertes Detail eine nahezu über die gesamte Breite des Ziegels verlaufende Aufhängenase 1254 auf, die vom Mittelfeld durch eine ebensolange nut 1256 getrennt ist. Fig. 33 ist zu entnehmen, daß bei der Eindeckung die Abdeckplatte 12 die dazugehörige Trägerplatte 22 über die gesamte Tiefe in Sparrenrichtung überdeckt. Die Aufhängenase 1254 übergreift einen entsprechenden Zentrierkopf 2256 im Kopfbereich 225, welcher in die Nut 1256 eingreift.

In Fußbereich ragt die Abdeckplatte 12 über das Fußende der überdeckten Trägerplatte 22 hinaus und übergreift mit einer Fußrippe 1261 eine in Dachlattenrichtung durchgehende Kopffalzrippe 1251 der traufseitig überdeckten Abdeckplatte, die sich nahezu über die gesamte Breite des Ziegels in Dachlattenrichtung erstreckt.

Der Kronenbiber bzw. die Abdeck- und Trägerplatten dieser Ausführungsform sind so konstruiert, daß sich die Abdeckplatten im Bezug auf die Trägerplatten sowohl in Reihe als auch im Verband verlegen lassen. Dies ist insbesondere aus Fig. 34 zu erkennen.

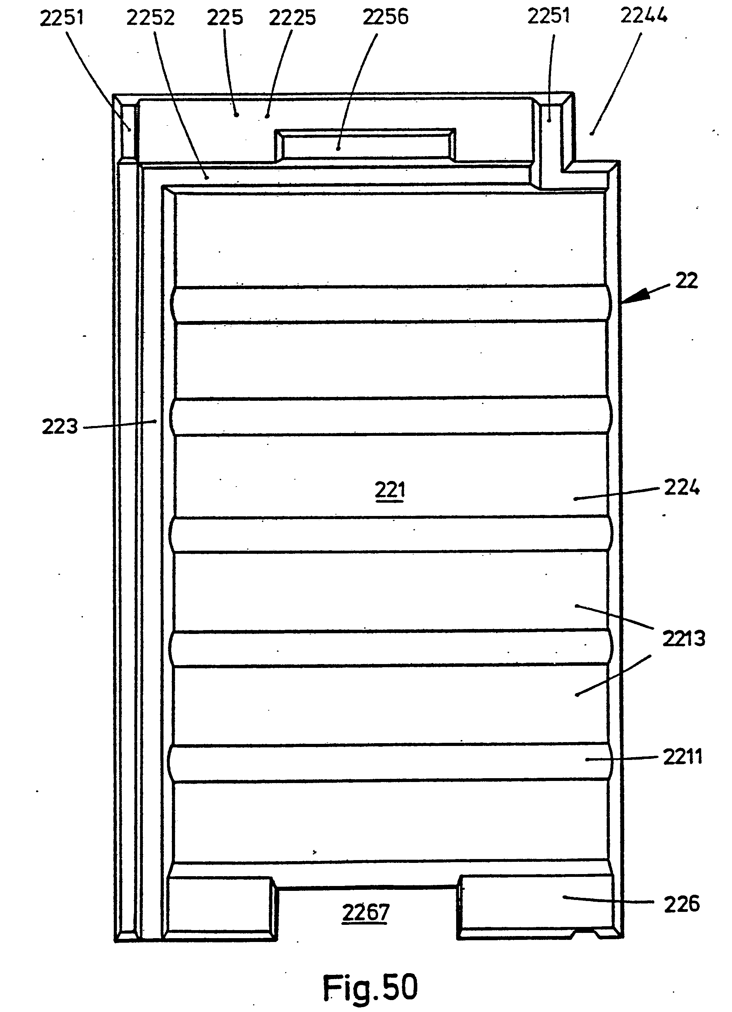

Die in Fig. 50 gezeigte Trägerplatte 22 weist am Fußfalzteil 226 eine Einklinkung 2267 auf, die unmittelbar an die zum Mittelfeld führende Schräge anschließt, wodurch den Fußfalzteil 226 sehr kurz gehalten ist und sich hierdurch das Fußende des Mittelfeldes entsprechend verlängert. Die zur Verfügung stehende Absorberfläche wird dadurch vergrößert.

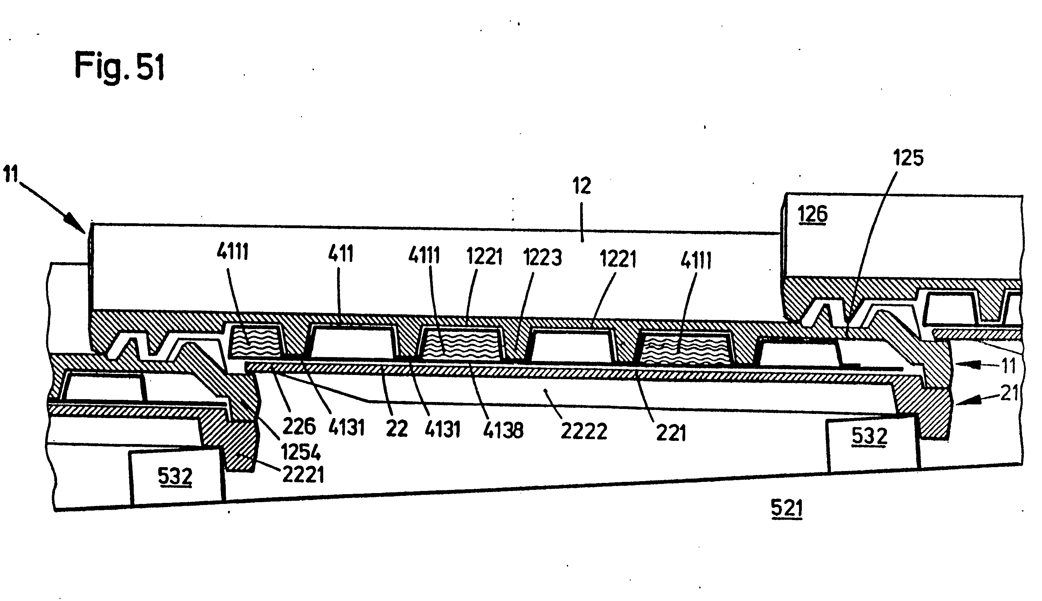

In der Fig. 51 ist ein in Sparrenrichtung verlaufender Längsschnitt durch eine Ausführungsform in der Art einer Flachdachpfanne gezeigt. Das Leitungssystem 41 weist im vorliegenden Fall ein Trägerblech 4138 auf, auf dem die Rohre 411 in Form von in Dachlattenrichtung durchlaufenden Rippen aufgebracht sind. Das Trägerblech besteht ebenso wie die Rippen aus Stahlblech. Die Rippen besitzen eine trapezartige Querschnittsform, wobei die Basis des Trapez dem Trägerblech zugewendet ist. Die Leitungen sind auf dem Trägerblech über ihre gesamte Länge wasserdicht aufgeschweißt. Die zwischen ihnen befindlichen Abschnitte des Trägerbleches bilden die Verbindungselemente 4131 zwischen den Leitungen.

Bei dieser Ausführungsform werden die Leitungen deshalb einerseits von den aufgeschweißten, trapezförmigen Hohlrippen gebildet, andererseits von den von diesen Rippen überdeckten Abschnitten des Trägerbleches.

Bei der Fertigung des Leitungssystems können die Rippen einzeln auf das Trägerblech aufgebracht werden. Hierbei können z.B. handelsübliche Profile, z.B. in U-Form, V-Form, oder mit offenen oder geschlossenen Kastenquerschnitt verwendet werden. Es ist auch denkbar, mehrere Rippen nebeneinander in ein durchgehendes Blech einzuformen, z.B. durch Abkanten und dann dieses Rippenblech dem Trägerblech gegenüber anzuordnen und es mit diesem zu verbinden.

Im gezeigten Fall ist das Trägerblech unter den Leitungen angeordnet und liegt auf einer im wesentlichen ebenen Oberfläche der Trägerplatten auf. Es überspannt in Dachlattenrichtung mehrere nebeneinander befindliche Trägerplatten. In Sparrenrichtung erstreckt es sich vom Kopfteil der überdeckten Trägerplatten bis in deren Fußteil, es kann sogar darüber hinaus ragen.

Im vorliegenden Fall sind deshalb ausschließlich in den Abdeckplatten die Aussparungen 1221 enthalten. Es sind sechs an der Zahl. Alle besitzen einen trapezförmigen Querschnitt, der von der Gestalt her der jeweiligen Leitung angepaßt ist. Zwischen den sind die Stege 1223 zu erkennen, mit denen die Abdeckplatten auf dem Trägerblech 4138 aufliegen. Um eine definierte Auflage der Stege auf dem Trägerblech sicherzustellen, sind die Aussaprungen so groß dimensioniert, daß zwischen ihnen und den Rohren 411 ein Luftspalt verbleibt. Der trapezförmige Querschnitt der Aussparungen kommt bei der Fertigung der Abdeckplatten gut zu statten, da er den Ausformprozeß derselben beim Pressen aus Ton nicht behindert. Darüber hinaus erhöht die Trapezform die Stabilität der Abdeckplatten. Bei der in Fig. 51 gezeigten Ausführungsform kann gegenüber den anderen Ausführungsformen die Scherbenstärke der Trägerplatten 22 gering gehalten werden, da die statischen Funktionen von den Abdeckplatten und dem Leitungssystem übernommen werden kann. Der Trittsicherheit und der statischen Festigkeit der Trägerplatten kommt entgegen, daß die zwischen den Leitungen vorhandenen Stege 1223 so hoch bzw. so stark gemacht werden können, wie die Gesamtscherbenstärke minus verbleibender Restscherbenstärke.

Die geringe Scherbenstärke der Trägerplatten 22 ermöglicht eine wesentlich bessere Ausnutzung der Wärmeaufnahme von der Rückseite des Systems bzw. von unten her. Durch die Verringerung der Scherbenstärke der Trägerplatten kann gleichzeitig erreicht werden, daß der Eigenneigungswinkel der Platten, d.h., der Winkel zwischen dem Sparren und den Platten verringert werden kann. Außerdem kann die Aufbauhöhe geringer gehalten werden, so daß die im Bereich der erfindungsgemäßen Vorrichtung notwendigen Einklinkungen zum Höhenausgleich zwischen dem Normaldach und dem Energiedach verringert werden können oder umgekehrt die Unterfütterung des Normaldaches bei nicht ausgeklinktem Sparren niedriger gehalten werden kann.

Im gezeigten Fall haben die trapezförmigen Leitungen einen wesentlich größeren Querschnitt als z.B. die als Rundrohre ausgebildeten Leitungen des Ausführungsbeispieles von Fig. 23. Bei der Ausführungsform von Fig. 51 kann infolgedessen die Pumpenleistung der Umwälzpumpe herabgesetzt werden.

Durch den vergrößerten Querschnitt der Trapezleitungen genügt es auch, eine geringere Leitungszahl vorzusehen. Es sind lediglich sechs Leitungen vorhanden. Durch den erhöhten Leitungsquerschnitt pro Leitung, kann auch davon abgesehen werden, durch jede Leitung Fluid zu führen. Es würde z.B. auch genügen, sofern bei der Ausführungsform von Fig. 51 nur durch jedes zweite Rohr Fluid hindurchgeleitet wird. Dies vermindert den Fluidbedarf, das Gewicht des Gesamtsystems und die Anzahl der notwendigen Leitungsverbindungen. In Fig. 51 sind die tatsächlich mit einem Fluid befüllten Leitungen mit der Bezugsziffer 4111 versehen. Die restlichen Leitungen sind hohl und vornehmlich an ihren Enden luftdicht verschlossen. Die hohlen Leitungen tragen dennoch zur Wärmegewinnung bei. Sie nehmen die Wärme auf und geben sie an die mit Fluid gefüllten Leitungen ab. Diese Leitungen können auch im Gegenstromprinzip beschickt werden.

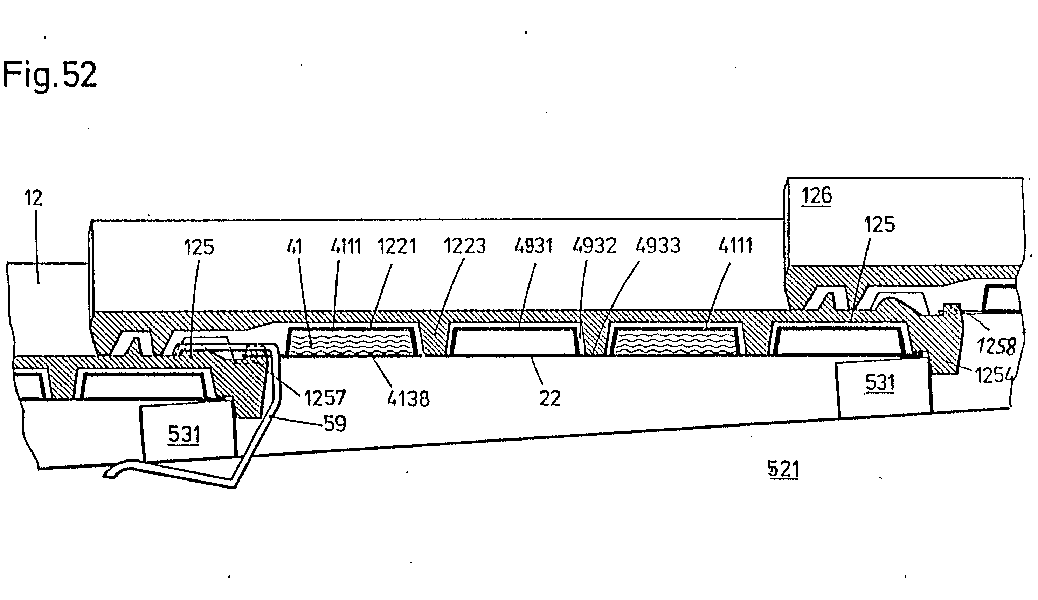

Bei der in Fig. 52 gezeigten Ausführungsform sind die Trägerplatten 22 mit dem Leitungssystem 41 zu einer Einheit verschmolzen. Das Leitungssystem ist im wesentlichen genauso aufgebaut wie bei der Ausführungsform von Fig. 52, nur daß die Zahl der Leitungen auf vier geschrumpft ist. Wiederum wird nur die Hälfte der Leitungen, nämlich diejenigen mit der Bezugsziffer 4111 versehen, mit dem Kühlfluid versorgt. Die restlichen bleiben leer. Deutlich ist zu erkennen, wie sich die Abdeckplatten mit ihren Stegen 1223 auf dem Trägerblech 4138 abstützen. Das mit den Trägerplatten verschmolzene Leitungssystem 41 liegt einerseits auf den Dachlatten 531 auf, andererseits auf dem Kopffalzteil 125 der unterdeckenden Abdeckplatte 12. Bei dieser Ausführungsform entspricht die Gesamtaufbauhöhe von Trägerplatte, Leitungssystem und Abdeckplatte der Aufbauhöhe eines normalen Dachdeckungselementes, d.h., eventuelle Einklinkungen im Sparren im Energiedachbereich bzw. die Anhebung des Normaldaches entfällt. Bei dieser Ausführungsform können bei einer nachträglichen Anordnung des Energiedaches die bislang vorhandenen Dachlatten weiter verwendet werden, ohne daß eine Änderung z.B. Absenkung derselben notwendig wäre.

Da die Trägerplatten mit dem Leitungssystem verschmelzen, fällt auch der Wärmedurchgangswiderstand der Trägerplatten weg, wodurch die Wärmeaufnahme von unten her deutlich gesteigert werden kann.

Der Längsschnitt von Fig. 52 zeigt auch die Verwendung von normalen Sturmklammern. Um diese Sturmklammern einsetzen zu können, ist es notwendig, im Trägerblech 4138 Einklinkungen vorzusehen.

Die Dimensionierung der Stützrippen 1223 zwischen den Rohren 411 ist so gewählt, daß die Abdeckplatten also solche trittsicher und stabil sind. Die Aussparungen sind in ihrer Breite in Sparrenrichtung so bemessen, daß bei der Herstellung der Abdeckplatten noch nicht befürchtet werden müßte, daß Absenkungen im Bereich der Aussparungen auftreten.

Um Kondenswasser von der Rückseite des Leitungssystems 41 abzuführen, ist es auch möglich, im Kopffalzteil 125 jeder Abdeckplatte 12 Auflagerippen 1257 vorzusehen, die die Ableitung des Wassers auf die Oberseite der Abdeckplatten und deren Entwässerung durch den Kopffalzteil und dem Seitenfalzteil ermöglichen. In der Fig. 51 ist der Längsschnitt ohne Sturmklammer gezeigt. Hier sieht man deutlich die für die horizontale Stapelbarkeit der Abdeckplatten notwendigen Stapelhöcker 1258 Im Hinblick auf die Fertigung der Abdeckplatten sind die Rippen 1223 in ihrer Höhe so dimensioniert, daß sie beim Trocknen einwandfrei auf der Trockenunterlage, z.B. dem Trockenrähmchen aufliegen.

Bezüglich der Statik und der Wärmebilanz ergeben sich prinzipiell zwei Möglichkeiten der Höhendimensionierung der Leitungen, sowie der Aussparungen 1221 und der Rippen 1223. Bei der ersten Möglichkeit liegen die Rippen direkt auf dem Trägerblech 4138 auf. Damit ergibt sich zwischen den Aussparungen 1221 und den Leitungen 411 ein Luftspalt 4931. Der im Bereich der Stege vorhandene Luftspalt 4933 verschwindet wegen des Aufliegens der Stege auf dem Trägerblech praktisch und kann außer Betracht bleiben.

Bei der zweiten Möglichkeit wird der Luftspalt 4931 zwischen den Aussparungen und den Leitungen 411 minimiert werden, d.h., die Abdeckplatten liegen direkt mit den Aussparungen auf den trapezförmigen Rohren 411 auf. Da aber z.B. bei der Herstellung der Abdeckplatten 12 aus Ton deren Maßhaltigkeit und Formtreue nie so gewährleistet sein kann, wie bei anderen Materialien, wird in diesem Fall der Luftspalt 4933 größer. Die zweite Möglichkeit ist wärmetechnisch günstiger, da die direkte Kontaktfläche zwischen Abdeckplatte und Leitungssystem wesentlich größer ist, als bei der ersten Möglichkeit.

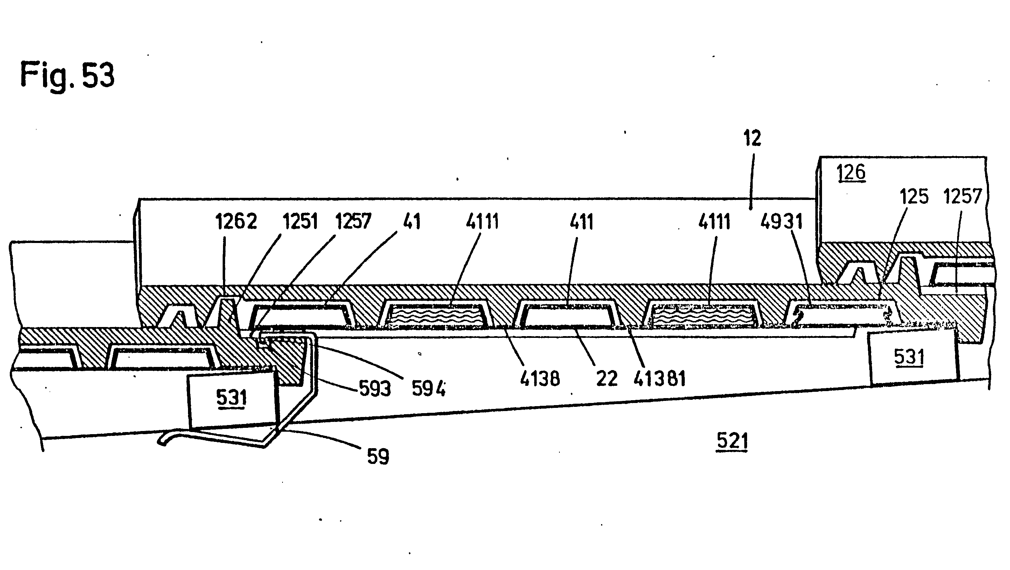

In Fig. 53 ist eine weitere Ausführungsform gezeigt, die im wesentlichen derjenigen von Fig.

52 gleicht. Das Leitungssystem 41 ist jedoch weiter in Richtung Traufe gezogen. Die Wärmeaufnahme im Überdeckungsbereich der Abdeckplatten ist deshalb verbessert. Bei der vorliegenden Ausführungsform ist der Kopfrandstreifen der Abdeckplatten tiefer ausgebildet. Damit entfällt die Möglichkeit der Anordnung der Stapelhöcker 1258, von Fig. 52.

Bei der Betrachtung der horizontalen Stapelbarkeit handelt es sich ausschließlich um die Stapelpunkte im Kopffalzbereich. Aus diesem Grunde sind nur diese abgebildet, alle anderen Stapelpunkte im Bereich des Fußseitenfalzecks und des Kopfdeckfalzecks bleiben erhalten.

Im Falle der Ausführungsform von Fig. 53 dient die äußere Kopffalzrippe 1251 als Stapelhöcker. Es ist notwendig, diese Rippe entsprechend zu erhöhen. Die Höhe der Oberfläche der Kopffalzrippe bis zur Unterseite der Abdeckplatte weist die gleiche Scherbenstärke auf, wie die Höhe der Stapelhöcker 1258 von Fig. 52 bis zur Unterkante der Aufhängenase 1254. Durch die für die horizontale Stapelbarkeit notwendige Erhöhung der Rippe 1251 entsteht beim Ausführungsbeispiel von Fig. 53 am Fußfalzbereich eine Nut 1262, in die die Kopffalzrippe 1251 eingreift.

Die Sturmklammer 59 besitzt an ihrem oberen Ende einen Haken 593, der in eine hierfür vorgesehene Ausnehmung 594 im Kopffalzteil 125 eingreift. Das Trägerblech 4138 ragt über die Ausnehmung 593 hinweg, so daß eventuelles Kondens- oder Schwitzwasser nicht in die Ausnehmung 594 gelangen kann. Der Kopffalzteil 125 der Abdeckplatten 12 ist ebenfalls wieder in bekannter Weise mit Rippen 1257 versehen, um einen entsprechenden Spalt zwischen den Trägerblechen 4138 und dem Kopffalzteil 125 herzustellen und Kondens bzw. Tauwasser abzuleiten.

Das Trägerblech 4138 weist in der gezeigten Form an seiner Rückseite Absorberrippen 41381 auf, die die rückseitige Absorberfläche vergrößern und dadurch die Wärmeaufnahme begünstigen. Die Rippen verlaufen vorzugsweise in Sparrenrichtung um keine Abtropfnasen für das Tau- bzw. Kondenswasser zu bilden.

Die rechte Leitung in Fig. 53 besitzt im wesentlichen die gleiche Querschnittsform, wie die anderen Leitungen 411. Sie ist jedoch mit flexiblen Flanken ausgestattet die ein "Atmen" der Leitung erlauben. Dies bedeutet, daß dieselbe sich nach oben in ihrem Kammervolumen vergrößern kann, um den Luftspalt 4931 zu minimieren.

**Patentansprüche**

1. Vorrichtung zur Gewinnung von Heizwärme aus Umweltenergie mit Hilfe eines schuppenartig angeordnete Dachdeckungselemente (19) aufweisenden Daches (2), in dem ein Leitungssystem (41) für ein die Umweltenergie aufnehmendes Fluid verlegt ist, wobei wenigstens ein Teil des Daches (1) Lagen von Trägerplatten (22) und als Abdeckplatten (12) ausgebildete Dachdeckungselemente (19) aufweist, wobei auf der Oberseite der Trägerplatten (22) das Leitungssystem (41) aufgebracht ist und die Abdeckplatten (12) nach Dachziegelart miteinander und mit den benachbarten normalen Dachdeckungselementen verlegt sind, dadurch gekennzeichnet, daß die Trägerplatten (22) dachziegelartig verlegt sind und somit eine obere Lage von Abdeck- (12) und eine untere Lage von Trägerplatten (22) vorhanden ist, die jeweils eine getrennte voneinander unabhängige Schicht bilden.

2. Vorrichtung nach Anspruch 1, dadurch gekennzeichnet, daß das Leitungssystem (41) mehrere, in oder quer zur Sparrenrichtung parallel zueinander verlaufende Rohre (411) aufweist, die an ihren Enden an je einem Sammelrohr (42, 43) angeschlossen sind.

3. Vorrichtung nach Anspruch 1 oder 2, dadurch gekennzeichnet, daß jede Abdeckplatte (12) an ihrer Rückseite nach unten offene Aussparungen (1221, 1222) für das Leitungssystem (41) aufweist.

4. Vorrichtung nach wenigstens einem der Ansprüche 1 bis 3, dadurch gekennzeichnet, daß jede Trägerplatte (22) nach oben offene Aussparungen (2211, 2212) für das Leitungssystem (41) aufweist.

5. Vorrichtung nach Anspruch 3 oder 4, dadurch gekennzeichnet, daß die Aussparungen (1221, 1222, 2211, 2212) der Träger- (22) und Abdeckplatten (12) in oder quer zur Sparrenrichtung orientiert sind.

6. Vorrichtung nach wenigstens einem der Ansprüche 1 bis 5, dadurch gekennzeichnet, daß die Lage (11) von Abdeckplatten (12) so auf der Lage (21) von Trägerplatten (22) angeordnet ist, daß jeweils eine Abdeckplatte einer Trägerplatte zugeordnet ist.

7. Vorrichtung nach wenigstens einem der Ansprüche 3 bis 6, dadurch gekennzeichnet, daß die Aussparungen (1221, 1222, 2211, 2212) von fertig verlegten, übereinander befindlichen Träger- und Abdeckplatten (22, 12) miteinander einen Hohlraum bilden, in dem das Leitungssystem (41) einlegbar ist.

8. Vorrichtung nach Anspruch 7, dadurch gekennzeichnet, daß der Hohlraum zu einem größeren Teil von Aussparungen (1221, 1222) der Abdeckplatten (12) gebildet ist.

9. Vorrichtung nach wenigstens einem der Ansprüche 4 bis 8, dadurch gekennzeichnet daß die die Aussparungen flankierenden Stege (2213) der Trägerplatten (22) breiter sind als die Stege (1223) der Abdeckplatten.

10. Vorrichtung nach wenigstens einem der Ansprüche 1 bis 9, dadurch gekennzeichnet daß im Bereich der Trägerplatten (22) die Dachlatten (532) um ein Maß (a) tiefer liegen als die entsprechenden Dachlatten (531) der normalen Dachdeckungselemente (19).

11. Vorrichtung nach wenigstens einem der Ansprüche 1 bis 10, dadurch gekennzeichnet, daß die Auflagefläche des kopfseitigen Endes (125) der Abdeckplatten (12) die Oberseite wie die Unterseite des Fußfalzteiles (226) und das kopfseitige Ende der Trägerplatten (22) eben ausgebildet sind.

12. Vorrichtung nach wenigstens einem der Ansprüche 1 bis 11, dadurch gekennzeichnet, daß das kopfseitige Ende (225) der Trägerplatten (22) Ausnehmungen bzw. Einklinkungen (2216, 2267) zur Aufnahme von Aufhängenasen (1254) der Abdeckplatten (12) aufweist.

13. Vorrichtung nach wenigstens einem der Ansprüche 1 bis 12, dadurch gekennzeichnet, daß der Niveauunterschied zwischen der Unterseite der Stege (2213) der Aussparungen an der Unterseite der Abdeckplatten (12) und der Unterseite der Deckfalzrippen gleich ist dem Niveauunterschied zwischen dem Niveau des Deckfalzes (91) und dem Mittelfeld (95) der Trockenunterlage (9).

14. Vorrichtung nach wenigstens einem der Ansprüche 1 bis 13, dadurch gekennzeichnet, daß die Trägerplatten (22) an der Oberseite des Kopffalzteiles (225) eine abgesenkte Auflagefläche (2255) für das aufliegende Fußfalzteil (226) der überdeckenden Trägerplatte (22) aufweist, deren Absenkung gegenüber der restlichen Oberseite (221) im wesentlichen der Stärke(s) der Trägerplatten am Fußfalzteil (226) entspricht und daß am Fußfalzteil (226) der Trägerplatten (22) eine gemeinsame Einklinkung (2267) vorhanden ist, in die im verlegten Zustand die Aufhängenase (1254) der darüber befindlichen Abdeckplatte (12) eingreift und durch die die Sturmklammer (59) hindurchgeführt ist.

15. Vorrichtung nach wenigstens einem der Ansprüche 1 bis 14, dadurch gekennzeichnet, daß die Trägerplatten (22) auf der Auflagefläche (2255) wenigstens einen nach oben ragenden Zentrierkopf (2256) aufweisen, der im verlegten Zustand in die Einklinkung (2267) der überdeckenden Trägerplatte (22) eingreift.

16. Vorrichtung nach wenigstens einem der Ansprüche 14 oder 15, dadurch gekennzeichnet, daß an der abgesenkten Auflagefläche (2255) in Sparrenrichtung verlaufende Rippen (2151) vorhanden sind, die mit Abstand vor der restlichen Oberseite (221) der Trägerplatte enden und als Auflage für die überdeckende Trägerplatte dienen.

17. Vorrichtung nach wenigstens einem der Ansprüche 3 bis 16, dadurch gekennzeichnet, daß die Aussparungen (1221, 2211) über ihre gesamte Länge knickfrei verlaufen und/oder die Aussparungen (1221, 2211) benachbarter, verlegter Träger- bzw. Abdeckplatten (22, 12) jeweils niveaugleich und knickfrei ineinander münden.

18. Vorrichtung nach wenigstens einem der Ansprüche 1 bis 17, dadurch gekennzeichnet, daß jede Trägerplatte (22) einen soweit abgesenkten Seitenfalz- und Deckfalzteil (223, 224) aufweist, daß sich die Aussparungen (2211) niveaugleich bis über den gesamten Deckfalzteil (224) erstrecken können.

19. Vorrichtung nach wenigstens einem der Ansprüche 1 bis 18, dadurch gekennzeichnet, daß im verlegten Zustand sich die im wesentlichen über der überdeckten Trägerplatte befindliche Abdeckplatte (12) auf der ebenen Oberseite des Fußfalzteiles der firstseitigen benachbarten Trägerplatte auflegt.

20. Vorrichtung nach wenigstens einem der Ansprüche 1 bis 19, dadurch gekennzeichnet daß der Fußfalzteil (226) jeder Trägerplatte an der Oberseite des Kopfteils (225) der traufseitig folgenden Abdeckplatte (11) aufliegt.

21. Vorrichtung nach wenigstens einem der Ansprüche 1 bis 20, dadurch gekennzeichnet, daß der Kopfteil (125) jeder Abdeckplatte auf dem Kopfteil (225) der darunter befindlichen Trägerplatte (11) aufliegt.

22. Vorrichtung nach wenigstens einem der Ansprüche 15 bis 21 dadurch gekennzeichnet daß der Zentrierkopf (2256) auf der Auflagefläche (2255) des Kopffalzteiles (225) soweit in Traufrichtung versetzt ist, daß firstseitig ein Freiraum frei bleibt für die Aufnahme einer Aufhängenase (1254) der überdeckenden Abdeckplatte (12).

23. Vorrichtung nach wenigstens einem der Ansprüche 1 bis 22, dadurch gekennzeichnet, daß mehrere Leitungen (411) zu Batterien (413) zusammengefaßt sind.

24. Vorrichtung nach wenigstens einem der Ansprüche 1 bis 23, dadurch gekennzeichnet, daß die Unterseite jeder Abdeckplatte (12) in deren Kopffalzbereich niveaugleich zur ersten kopfseitigen Aussparung (1221) verläuft die Auflagefläche (2255) der Trägerplatte (22) gegenüber der Oberseite (221) deren Mittelfeld abgesenkt ist und die Dicke des Fußfalzteiles (226) derselben gleich der Differenz der Höhe der abgesenkten Auflagefläche (2255) zur Oberseite (221) des Mittelfeldes abzüglich der Höhe der Rippen (2251) ist.

25. Vorrichtung nach wenigstens einem der Ansprüche 1 bis 24, dadurch gekennzeichnet, daß die einzelnen Teile der Vorrichtung, wie Abdeckplatten, Leitungssystem usw. an Stelle von Dachlatten von Haltevorrichtungen (522, 533) mit Abstand zum Unterdach gehalten sind, wobei zwischen den Platten und den Haltevorrichtungen einerseits und dem Unterdach andererseits ein Freiraum für die freie Luftzirkulation vorhanden ist.

26. Vorrichtung nach Anspruch 25, dadurch gekennzeichnet, daß auf mit Abstand nebeneinander in Dachlattenrichtung angeordnete Haltevorrichtungen (522) eine dieselben verbindende Längsschiene (533) aufgebracht ist.

27. Vorrichtung nach Anspruch 23, dadurch gekennzeichnet, daß die Rohrbatterien (413) aus wenigstens zwei nebeneinander angeordneten Abschnitten (413a, 413b) bestehen.

28. Vorrichtung nach wenigstens einem der Ansprüche 1 bis 27, dadurch gekennzeichnet, daß die Leitungen (411) einen quadratischen oder rechteckigen oder trapezförmigen oder vieleckigen bzw. runden oder ovalen Querschnitt haben, wobei die Ausspannungen der Platten (12, 22) dem jeweiligen Leitungsquerschnitt entsprechend angepaßt sind.

29. Vorrichtung nach wenigstens einem der Ansprüche 1 bis 28, dadurch gekennzeichnet, daß zwei oder mehrere Abdeck- bzw. Trägerplatten (12, 22) einstückig miteinander ausgebildet sind und jeweils ein plattenartiges Element bilden.

30. Vorrichtung nach wenigstens einem der Ansprüche 1 bis 29, dadurch gekennzeichnet, daß das Leitungssystem (41) und die Trägerplatten (22) einstückig miteinander ausgebildet sind.

31. Vorrichtung nach wenigstens einem der Ansprüche 1 bis 30, dadurch gekennzeichnet, daß das Leitungssystem (41) ein ebenes Trägerblech aufweist, auf dem die Leitungen in Form von Profilblechen aufgebracht sind.

32. Vorrichtung nach Anspruch 31 dadurch gekennzeichnet, daß das Trägerblech einerseits auf den Dachlatten und andererseits am Kopfteil der unterdeckenden Abdeckplatte (12) aufliegt.

33. Vorrichtung nach wenigstens einem der Ansprüche 1 bis 32, dadurch gekennzeichnet, daß die Leitungen (411) im Gegenstromprinzip mit Fluid beschickt sind.

**Claims**

1. Device for recovering heating warmth from environmental energy by means of a roof (2) having roofing elements (19) arranged in imbricated manner, in which roof (2) is laid a line system (41) for a fluid which absorbs the environmental energy, with at least one part of the roof (1) having layers of support plates (22) and roofing elements (19) made as cover plates (12), with the line system (41) being attached on the upper side of the support plates (22) and the cover plates (12) being laid in the manner of roofing tiles with one another and with the adjacent normal roofing elements, characterized in that the support plates (22) are laid like roofing tiles and therefore there is an upper layer of cover plates (12) and a lower layer of support plates (22) which in each case form an independent course separate from each other.

2. Device according to Claim 1, characterized in that the line system (41) has several pipes (411) which run parallel to one another in or across the rafter direction and which are connected at their ends to one collecting pipe (42, 43) each.

3. Device according to Claim 1 or 2, characterized in that each cover plate (12), at its rear side, has downwardly open recesses (1221, 1222) for the line system (41).

4. Device according to at least one of Claims 1 to 3, characterized in that each support plate (22) has upwardly open recesses (2211, 2212) for the line system (41).

5. Device according to Claim 3 or 4, characterized in that the recesses (1221, 1222, 2211, 2212) of the support plates (22) and the cover plates (12) are orientated in or across the rafter direction.

6. Device according to at least one of Claims 1 to 5, characterized in that the layer (11) of cover plates (12) is arranged on the layer (21) of support plates (22) in such a way that in each case one cover plate is allocated to one support plate.

7. Device according to at least one of Claims 3 to 6, characterized in that the recesses (1221, 1222, 2211, 2212) of ready-laid support and cover plates (22, 12), located one above the other, form a hollow space with one another in which the line system (41) can be inserted.

8. Device according to Claim 7, characterized in that the hollow space is to a large extent formed by recesses (1221, 1222) of the cover plates (12).

9. Device according to at least one of Claims 4 to 8, characterized in that the webs (2213) of the support plates (22), which webs (2213) flank the recesses, are wider than the webs (1223) of the cover plates.

10. Device according to at least one of Claims 1 to 9, characterized in that, in the area of the support plates (22), the roof battens (532) lie deeper than the corresponding roof battens (531) of the normal roofing elements (19) by a size (a).

11. Device according to at least one of the Claims 1 to 10, characterized in that the seating surface of the head-side end (125) of the cover plates (12), the upper side and also the lower side of the base rebate part (226) and the head-side end of the support plates (22) are of flat configuration.

12. Device according to at least one of Claims 1 to 11, characterized in that the head-side end (225) of the support plates (22) has recesses or notches (2216, 2267) for accommodating suspension lugs (1254) of the cover plates (12).

13. Device according to at least one of Claims 9 to 12, characterized in that the difference in level between the underside of the webs (2213) of the recesses at the underside of the cover plates (12) and the underside of the top rebate ribs is equal to the difference in level between the level of the top rebate (91) and the centre section (95) of the dry underlayer (9).

14. Device according to at least one of Claims 1 to 13, characterized in that the support plates (22), at the upper side of the head rebate part (225), have a sunk seating surface (2255) for the seated base rebate part (226) of the overlapping support plate (22), the sunk portion of which, relative to the remaining upper side (221), essentially corresponds to the thickness(es) of the support plates at the base rebate part (226), and that a common notch (2267) is available at the base rebate part (226) of the support plates (22), into which notch (2267) the suspension lug (1254) of the cover plate (12) located thereabove engages in the laid condition and through which is guided the storn clamp (59).

15. Device according to at least one of Claims 1 to 14, characterized in that the support plates (22) on the seating surface (2255) have at least one upwardly projecting centring head (2256) which in the laid condition engages into the notch (2267) of the overlapping support plate (22).

16. Device according to at least one of Claims 14 or 15, characterized in that ribs (2151) running in the rafter direction are provided at the sunk seating surface (2255), which ribs (2151) terminate at a distance from the remaining upper side (221) of the support plate and act as a seating for the overlapping support plate.

17. Device according to at least one of Claims 3 to 16, characterized in that the recesses (1221, 2211) extend without bends over their entire length and/or the recesses (1221, 2211) of adjacent, laid support or cover plates (22, 12) in each case open into one another at the same level and without bends.

18. Device according to at least one of Claims 1 to 17, characterized in that each support plate (22) has a side rebate and top rebate part (223) which is sunk to such an extent that the recesses (2211) can extend at the same level over the entire top rebate part (224).

19. Device according to at least one of Claims 1 to 18, characterized in that, in the laid condition, the cover plate (12) located essentially over the overlapped support plate leans on the flat upper side of the base rebate part of the adjacent support plate on the ridge side.

20. Device according to at least one of Claims 1 to 19, characterized in that the base rebate part (226) of each support plate sits on the upper side of the head part (225) of the cover plate (11) following on the eave side.

21. Device according to at least one of Claims 1 to 20, characterized in that the head part (125) of each cover plate sits on the head part (225) of the support plate (11) located thereunder.

22. Device according to at least one of Claims 15 to 21, characterized in that the centring head (2256) on the seating surface (2255) of the head rebate part (225) is displaced to such an extent in the eave direction that a clearance space remains free on the ridge side for accommodating a suspension lug (1254) of the overlapping cover plate (12).

23. Device according to at least one of Claims 1 to 22, characterized in that several lines (411) are made up into sets (413).

24. Device according to at least one of Claims 1 to 25, characterized in that the underside of each cover plate (12), in its head rebate area, runs at the same level to the first recess (1221) on the head side, and that the seating surface (2255) of the support plate (22) is sunk relative to the upper side (221) of its centre section and the thickness of the base rebate part (226) of the latter is equal to the difference in the height between the sunk seating surface (2255) and the upper side (221) of the centre section less the height of the ribs (2251).

25. Device according to at least one of Claims 1 to 24, characterized in that the individual parts of the device, such as cover plates, line system, etc., are held at a distance from the lower roof by retaining devices (522, 533) instead of roof battens, with a clearance space for free air circulation being available between the plates and the retaining devices on the one hand and the lower roof on the other hand.

26. Device according to Claim 25, characterized in that a longitudinal rail (533) connecting retaining devices (522) is attached on retaining devices (522) arranged at a distance next to one another in the roof batten direction.

27. Device according to Claim 23, characterized in that the pipe sets (413) consist of at least two sections (413a, 413b) arranged next to one another.

28. Device according to at least one of Claims 1 to 27, characterized in that the lines (411) have a square, rectangular, trapezoidal or polygonal cross-section or a round or oval cross-section, with the recesses of the plates (12, 22) being correspondingly adapted to the particular line cross-section.

29. Device according to at least one of Claims 1 to 28, characterized in that two or more cover or support plates (12, 22) are made in one piece with one another and in each case form a plate-like element.

30. Device according to at least one of Claims 1 to 29, characterized in that the line system (41) and the support plates (22) are made in one piece with one another.

31. Device according to at least one of Claims 1 to 30, characterized in that the line system (41) has a flat support plate on which the lines are attached in the form of profiled plates.

32. Device according to Claim 31, characterized in that the support plate sits on the one hand on the roof battens and on the other hand on the head part of the underlapping cover plate (12).

33. Device according to at least one of Claims 1 to 32, characterized in that the lines (411) are fed with fluid according to the counterflow principle.

**Revendications.**

1. Dispositif pour produire de la chaleur de chauffage à partir de l'énergie de l'environnement à l'aide d'un toit (2) comportant des éléments de couverture (19) imbriqués, dans lequel est posé un système de canalisations (41) pour un fluide captant l'énergie de l'environnement, au moins une partie du toit (1) comportant des couches de plaques supports (22) et des éléments de couverture (19) réalisés sous forme de panneaux de recouvrement, le système de canalisations (41) étant placé sur le côté supérieur des plaques supports (22) et les plaques de recouvrement (12) étant posées l'une par rapport à l'autre et par rapport aux éléments de couverture normaux voisins à la façon de tuiles, caractérisé en ce que les plaques supports (22) sont posées comme des tuiles et qu'on a ainsi une couche supérieure de plaques de recouvrement (12) et une couche inférieure de plaques supports (22) qui constituent chacune une couche séparée indépendante de l'autre.

2. Dispositif selon la revendication 1, caractérisé en ce que le système de canalisations (41) comporte plusieurs tuyaux (411) s'étendant parallèlement l'un à l'autre dans le sens des chevrons ou transversalement à ce sens, lesquels tuyaux sont raccordés à leurs extrémités respectivement à un tuyau collecteur (42, 43).

3. Dispositif selon la revendication 1 ou 2, caractérisé en ce que chaque plaque de recouvrement (12) comporte sur son côté postérieur des évidements (1221, 1222) ouverts vers le bas pour le système de canalisations (41).

4. Dispositif selon l'une au moins des revendications 1 à 3, caractérisé en ce que chaque plaque support (22) comporte des évidements (2211, 2212) ouverts vers le haut pour le système de canalisations (41).

5. Dispositif selon la revendication 3 ou 4, caractérisé en ce que les évidements (1221, 1222, 2211, 2212) des plaques supports (22) et des plaques de recouvrement (12) sont orientés dans le sens des chevrons ou transversalement à ce sens.

6. Dispositif selon l'une au moins des revendications 1 à 5, caractérisé en ce que la couche (11) de plaques de recouvrement (12) est disposée sur la couche (21) de plaques supports (22) de telle sorte qu'à chaque fois une plaque de recouvrement est associée à une plaque support.

7. Dispositif selon l'une au moins des revendications 3 à 6, caractérisé en ce que les évidements (1221, 1222, 2211, 2212) des plaques supports (22) et des plaques de recouvrement (12) déjà posées et placées l'une sur l'autre constituent ensemble un volume creux dans lequel on peut poser le système de canalisations (41).

8. Dispositif selon la revendication 7, caractérisé en ce que le volume creux est formé, pour la plus grande partie, par des évidements (1221, 1222) des plaques de recouvrement (12).

9. Dispositif selon l'une au moins des revendications 4 à 8, caractérisé en ce que les nervures (2213) des plaques supports (22) flanquant les évidements sont plus larges que les nervures (1223) des plaques de recouvrement.

10. Dispositif selon l'une au moins des revendications 1 à 9, caractérisé en ce que, dans la zone des plaques supports (22), les lattes de toit (532) sont situées plus bas que les lattes de toit correspondantes (531) des éléments de couverture normaux (19) d'une valeur (a).

11. Dispositif selon l'une au moins des revendications 1 à 10, caractérisé en ce que la surface d'appui de l'extrémité côté tête (125) des plaques de recouvrement (12), le côté supérieur ainsi que le côté inférieur de la portion d'accrochage de pied (226) et l'extrémité côté tête des plaques supports (22) sont plans.

12. Dispositif selon l'une au moins des revendications 1 à 11, caractérisé en ce que l'extrémité côté tête (225) des plaques supports (22) comporte des évidements ou des encoches (2216, 2267) pour recevoir les saillies d'accrochage (1254) des plaques de recouvrement (12).

13. Dispositif selon l'une au moins des revendications 9 à 12, caractérisé en ce que la différence de niveau entre le côté inférieur des nervures (2213) des évidements sur le côté inférieur des plaques de recouvrement (12) et le côté inférieur des nervures d'accrochage du recouvrement est égale à la différence de niveau entre le niveau de l'accrochage du recouvrement (91) et la zone médiane (95) de la couche d'appui sèche (9).

14. Dispositif selon l'une au moins des revendications 1 à 13, caractérisé en ce que les plaques supports (22) comportent sur le côté supérieur de la portion d'accrochage de tête (225) une surface d'appui abaissée (2255) pour que s'y appuie la portion d'accrochage de pied (226) en saillie de la plaque support (22) venant en recouvrement, dont le décrochement par rapport au reste du côté supérieur (221) correspond sensiblement à l'épaisseur (s) des plaques supports au niveau de la portion d'accrochage de pied (226), et en ce qu'on prévoit au niveau de cette portion d'accrochage de pied (226) des plaques supports (22) une encoche commune (2267) dans laquelle, une fois la pose finie, la saillie d'accrochage (1254) de la plaque de recouvrement (12) placée dessus pénètre, et par laquelle on fait passer les agrafes de sécurité contre la tempête (59).

15. Dispositif selon l'une au moins des revendicatiosn 1 à 14, caractérisé en ce que les plaques supports (22) comportent sur la surface d'appui (2255) au moins une téte de centrage (2256) saillant vers le haut, laquelle, une fois la pose effectuée, pénètre dans l'encoche (2267) de la plaque support (22) venant en recouvrement.

16. Dispositif selon l'une au moins des revendications 14 ou 15, caractérisé en ce qu'on prévoit sur la surface d'appui abaissée (2255) des nervures (2151) s'étendant dans le sens des chevrons, lesquelles se terminent à une certaine distance en avant du reste du côté supérieur (221) de la plaque support et servent d'appui pour la plaque support venant en recouvrement.

17. Dispositif selon l'une au moins des revendications 3 à 16, caractérisé en ce que les évidements (1221, 2211) s'étendent sur toute leur longueur sans coudes, et/ou les évidements (1221, 2211) des plaques supports (22) ou des plaques de recouvrement (12) voisines posées débouchent l'un dans l'autre à chaque fois sans coude et au même niveau.

18. Dispositif selon l'une au moins des revendications 1 à 17, caractérisé en ce que chaque plaque support (22) comporte une partie d'accrochage latéral (223) et une partie d'accrochage de recouvrement (224) suffisamment abaissées pour que les évidements (2211) puissent s'étendre au même niveau sur la totalité de la partie d'accrochage de recouvrement (224).

19. Dispositif selon l'une au moins des revendications 1 à 18, caractérisé en ce que, à l'état posé, la plaque de recouvrement (12) se trouvant pour l'essentiel au-dessus de la plaque support recouverte repose sur le côté supérieur plan de la partie d'accrochage de pied de la plaque support voisine, côté faite du toit.

20. Dispositif selon l'une au moins des revendications 1 à 19, caractérisé en ce que la partie d'accrochage de pied (226) de chaque plaque support repose sur le côté supérieur de la partie tête (225) de la plaque de recouvrement suivante (11) côté gouttière.

21. Dispositif selon l'une au moins des revendications 1 à 20, caractérisé en ce que la partie tête (125) de chaque plaque de recouvrement repose sur la partie tête (225) de la plaque support (11) se trouvant en dessous.

22. Dispositif selon l'une au moins des revendications 15 à 21, caractérisé en ce que la tête de centrage (2256) sur la surface d'appui (2255) de la partie d'accrochage de tête (225) est suffisamment décalée dans le sens de la gouttière pour qu'il subsiste côté faite un volume libre pour recevoir une saillie d'accrochage (1254) de la plaque de recouvrement (12) venant en recouvrement.

23. Dispositif selon l'une au moins des revendications 1 à 22, caractérisé en ce que plusieurs canalisations (411) sont groupées en batteries (413).

24. Dispositif selon l'une au moins des revendications 1 à 23, caractérisé en ce que le côté inférieur de chaque plaque de recouvrement (12) s'étend,dans la zone de l'accrochage de tête de celle-ci, au même niveau que le premier évidement (1221) côté tête, et que la surface d'appui (2255) de la plaque support (22) est abaissée par rapport au côté supérieur (221) de son champ médian et l'épaisseur de la partie d'accrochage de pied (226) de cette plaque est égale à la différence entre la hauteur de la surface d'appui abaissée (2255) et le côté supérieur (221) du champ médian moins la hauteur des nervures (2251).

25. Dispositif selon l'une au moins des revendications 1 à 24, caractérisé en ce que les différentes parties du dispositif telles que plaques de recouvrement, système de canalisations, etc, sont tenus, à la place de lattes de toit, par des dispositifs de maintien (522, 533) à une certaine distance du sous-toit, un volume libre étant par ailleurs prévu pour la libre circulation de l'air entre les plaques et les dispositifs de maintien.

26. Dispositif selon la revendication 25, caractérisé en ce qu'on applique sur les dispositifs de maintien (522) disposés écartés l'un à côté de l'autre dans le sens des lattes de toit une barre longitudinale (533) reliant ces dispositifs.

27. Dispositif selon la revendication 23, caractérisé en ce que les batteries de tuyaux (413) sont constituées par au moins deux portions

**0 026 862**

(413a, 413b) disposées l'une à côté de l'autre.

28. Dispositif selon l'une au moins des revendications 1 à 27, caractérisé en ce que les canalisations (411) ont une section carrée, rectangulaire, trapézoîdale, polygonale, ronde, ou ovale et, dans ce cas, les évidements des plaques (12, 22) sont adaptés de façon correspondante à la section de canalisation donnée.

29. Dispositif sleon l'une au moins des revendications 1 à 28, caractérisé en ce que deux ou plusieurs plaques de recouvrement ou plaques supports (12, 22) sont réalisees ensemble d'une seule pièce et constituent respectivement un élément en forme de plaque.

30. Dispositif selon l'une au moins des revendications 1 à 29, caractérisé en ce que le système de canalisations (41) et les plaques supports (22) sont réalisés ensemble d'une seule pièce.

31. Dispositif selon l'une au moins des revendications 1 à 30, caractérisé en ce que le système de canalisations (41) comporte une plaque de tôle support plane sur laquelle les canalisations sont appliquées sous la forme de profilés en tôle.

32. Dispositif selon la revendication 31, caractérisé en ce que la plaque de tôle support repose d'une part sur les lattes de toit et d'autre part sur la partie tête de la plaque de recouvrement (12) se trouvant en dessous.

33. Dispositif selon l'une au moins des revendications 1 à 32, caractérisé en ce que les canalisations (411) sont alimentées en fluide selon le principe du contrecourant.

Fig. 1a

19    11  1233                432    1222  12

531

531

21

2231  223  2232    412  2212  22

2222

521    521

0 026 862

Fig.1b

Fig.1c

# Fig. 2a

0 026 862

Fig. 2b

0 026 862

Fig. 2c

Fig.3a

0 026 862

# Fig. 3b

0 026 862

# Fig. 3c

# Fig.4

531
5211
532
532
521
5211

Fig. 5

0 026 862

21

Fig.7

33

19

34

Fig.6

35

19

VII

VII

121

M

33

34

36

Fig. 8

Fig.9

Fig.10

Fig.11

Fig. 12

0 026 862

Fig.13

24    95              2443              244
                                        91
                                        9

Fig.14

22    95              2243            2241
                                        91
                                        9

Fig.15

12        95                              91

93                              9

35

Fig. 16a

Fig.16b

Fig.16c

# Fig.17a

19

12

43

5211

42

s

23

532

59

0 026 862

# Fig. 17b

12    ▷I    601    12

532    22    ▷I    60    2268    411    602

0 026 862

# Fig. 17c

Fig. 18

22

22

Fig.19

0 026 862

Fig. 20

Fig. 21

Fig. 22a

M 19 41 123 34 1 22 221 12 1221 124 411

531 a 44 2231 2232 223 2221 2211 2222 2242 224 532

521 521

57 0 026 862

# Fig. 22b

II

12    24    33    19

II

44

531

2

0 026 862

# Fig. 23

0026 862

Fig. 24

0 026 862

Fig. 25

Fig. 26

Fig.27

413

411

4135

0 026 862

2251  2255  2256  2225  2252  2251  2244  221  224

223  2213  2217  2211  2232  2267  22

Fig. 28

0 026 862

Fig.29

4136

4136

4136

4135

413a

413

4137

413b

4136

73

0 026 862

# Fig. 32

5223

522

5224

h

522

# Fig.31

533

534

# Fig.30

5223

534

533

522

Fig. 33

124 123

XII

12

223 532 411 2221 22

XII

Fig. 34

# Fig. 35

125  1251

12

121

123

124

126

# Fig. 36

1254

1256

12

1221

126

81

0 026 862

# Fig. 37

225    2256    22

226

223

2217

2211

# Fig. 38

225    2221

224

226

2222

83

0 026 862

Fig. 40

Fig. 39

0 026 862

Fig. 42

Fig. 41

87

0 026 862

Fig. 43

Fig.44

Fig. 45

Fig.46

225

221

223

226

## Fig. 47

2221          2221

2222

224

Fig. 48

P

22  12  1221  411  4135  1223  121

2221

2213  532  221  533  522

532

66

0 026 862

# Fig.49

41 35     411     413

12                12

101

Fig.50

# Fig. 51

0 026 862

Fig.52

0 026 862

# Fig. 53

12

126

125  1257

1262  1251  1257  41  4111  411  4111  4931

4138  22  41381

593  594

531

531

521

59

0 026 862